(19) **Europäisches Patentamt / European Patent Office / Office européen des brevets**

(11) **EP 4 564 697 A1**

(12) **EUROPEAN PATENT APPLICATION**
published in accordance with Art. 153(4) EPC

(43) Date of publication:
**04.06.2025 Bulletin 2025/23**

(21) Application number: **23849098.1**

(22) Date of filing: **28.06.2023**

(51) International Patent Classification (IPC):
**H04B 7/06** (2006.01)

(52) Cooperative Patent Classification (CPC):
**H04B 7/0417; H04B 7/06**

(86) International application number:
**PCT/CN2023/103330**

(87) International publication number:
**WO 2024/027388 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.07.2022 CN 202210912627**

(71) Applicant: **Huawei Technologies Co., Ltd.**
**Shenzhen, Guangdong 518129 (CN)**

(72) Inventors:
• **FAN, Li**
**Shenzhen, Guangdong 518129 (CN)**
• **LAN, Ruining**
**Shenzhen, Guangdong 518129 (CN)**
• **CHEN, Shujing**
**Shenzhen, Guangdong 518129 (CN)**
• **QIN, Qibo**
**Shenzhen, Guangdong 518129 (CN)**
• **ZHONG, Zhimeng**
**Shenzhen, Guangdong 518129 (CN)**
• **JIN, Huangping**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **CHANNEL STATE INFORMATION REPORTING METHOD AND COMMUNICATION APPARATUS**

(57) This application provides a method for reporting channel state information and a communication apparatus, to reduce feedback overheads. The method includes: A first apparatus receives a reference signal from a second apparatus. The first apparatus determines first indication information based on the reference signal, and sends the first indication information. The first indication information is for constructing a first covariance matrix corresponding to a channel matrix, and the channel matrix indicates channel state information of a channel between the first apparatus and the second apparatus.

```
 ┌──────────────────┐              ┌──────────────────┐
 │ Second apparatus │              │  First apparatus │
 └──────────────────┘              └──────────────────┘
          │        S201: Reference signal        │
          │ ──────────────────────────────────▶ │
          │                                       │
          │                            ┌──────────────────────────┐
          │                            │ S202: Determine first     │
          │                            │ indication information     │
          │                            │ based on the reference     │
          │                            │ signal, where the first    │
          │                            │ indication information     │
          │                            │ indicates a superposition  │
          │                            │ coefficient and a codebook │
          │                            │ vector                     │
          │                            └──────────────────────────┘
          │    S203: First indication information  │
          │ ◀────────────────────────────────── │
```

FIG. 2

**Description**

This application claims priority to Chinese Patent Application No. 202210912627.9, filed with the China National Intellectual Property Administration on July 30, 2022 and entitled "METHOD FOR REPORTING CHANNEL STATE INFORMATION AND COMMUNICATION APPARATUS", which is incorporated herein by reference in its entirety.

**TECHNICAL FIELD**

This application relates to the communication field, and in particular, to a method for reporting channel state information and a communication apparatus.

**BACKGROUND**

A multiple-input and multiple-output (multiple-input and multiple-output, MIMO) technology is a core technology of a long term evolution (long term evolution, LTE) system and 5th generation (5th generation, 5G) new radio (new radio, NR). In a communication system in which the MIMO technology is used, if a network device sends data to a terminal device, signal precoding needs to be performed based on channel state information (channel state information, CSI) of a downlink channel, so that a precoded signal matches the channel.

In a frequency division duplex (frequency division duplex, FDD) communication system, a terminal device may receive a reference signal from a network device, calculate, based on the reference signal, a covariance matrix corresponding to a channel matrix, and construct an eigen basis based on the covariance matrix corresponding to the channel matrix. When feeding back CSI, the terminal device may feed back the eigen basis and a coefficient matrix of the eigen basis to the network device. After receiving the eigen basis, the network device may restore the CSI with reference to the eigen basis and the coefficient matrix of the eigen basis.

However, in the foregoing solution, the terminal device determines the eigen basis by using a sparse characteristic of the channel, and needs to feed back characteristics related to space-domain information on different subbands (subbands). In other words, the terminal device needs to report the selected eigen basis and superposition coefficients of a full bandwidth of the eigen basis, resulting in high air interface overheads. How to feed back the CSI more efficiently is an urgent problem that needs to be resolved during application of the MIMO technology.

**SUMMARY**

Embodiments of this application provide a method for reporting channel state information and a communication apparatus, to reduce overheads.

To achieve the foregoing objective, this application uses the following technical solutions.

According to a first aspect, a method for reporting channel state information is provided. The method for reporting channel state information includes: A first apparatus receives a reference signal from a second apparatus. The first apparatus determines first indication information based on the reference signal, and sends the first indication information to the second apparatus. The first indication information is for constructing a first covariance matrix corresponding to a channel matrix, and the channel matrix indicates channel state information of a channel between the first apparatus and the second apparatus.

According to the method for reporting channel state information provided in the first aspect, the first apparatus sends, to the second apparatus, the first indication information for constructing the covariance matrix corresponding to the channel matrix, so that reporting of a large amount of information directly for restoring the channel state information can be avoided, thereby reducing feedback overheads and improving CSI feedback efficiency. For example, the second apparatus may determine, based on the first indication information, the first covariance matrix corresponding to the channel matrix, and determine an eigen basis based on the covariance matrix corresponding to the channel matrix.

For example, the channel matrix may have M × N dimensions. That the first apparatus determines first indication information based on the reference signal may include: The first apparatus determines the channel matrix based on the reference signal, determines a channel column vector based on the channel matrix, and then determines the first indication information based on the channel column vector.

In a possible design solution, the first indication information may indicate a superposition coefficient and a codebook vector, and the superposition coefficient and the codebook vector are for determining the first covariance matrix.

In a possible design solution, the first covariance matrix and an actual covariance matrix corresponding to the channel matrix satisfy a preset optimization model. In this way, a data amount of the first indication information can be reduced, thereby further reducing the feedback overheads.

For example, the preset optimization model may include: $\min_{\alpha_l}\|\boldsymbol{R} - \sum_l \alpha_l \boldsymbol{w}_l \boldsymbol{w}_l^H\|_F$ ; and *s. t. L* $\leq L_{max}$. *min* represents taking a minimum value, "$\| \|_F$" represents taking an F norm, $R$ is an actual joint space-frequency covariance matrix corresponding to the channel matrix, $\Sigma$ represents a summation operation, $0 \leq l < L$, and $l$ is an integer. $\alpha_l$ is an $l^{th}$ superposition coefficient, $w_l$ is an $l^{th}$ codebook vector, $w_l^H$ is a conjugate transpose of $w_l$, s. t. is a constraint, $L$ is a channel multi-path quantity, $L_{max}$ is a maximum value of $L$, and both $L$ and $L_{max}$ are integers greater than 0. In this way, when the first apparatus determines the channel matrix by measuring the reference signal and obtains $R$, the first apparatus may obtain corresponding $\alpha_l$ and $w_l$ by using the foregoing optimization model, so that an error between a first joint space-frequency covariance matrix and the actual joint space-frequency covariance matrix corresponding to the channel matrix is minimized. In other words, the first indication information may be determined based on a solution result of the preset optimization model.

Optionally, the superposition coefficient may include a first superposition coefficient indicating a feature of an angle-delay power spectrum, the codebook vector may include first information indicating an angle delay, and the first superposition coefficient and the first information are for determining the first joint space-frequency covariance matrix. The preset optimization model includes a first optimization model that the first joint space-frequency covariance matrix and the actual joint space-frequency covariance matrix corresponding to the channel matrix satisfy. In this way, the first apparatus determines the first indication information for constructing the first joint space-frequency covariance matrix, and sends the first indication information to the second apparatus, so that reporting of a large amount of information, for example, a joint space-frequency eigen basis and a superposition coefficient corresponding to the joint space-frequency eigen basis, directly for restoring the channel state information can be avoided. For example, the second apparatus may determine, based on the first indication information, the first joint space-frequency covariance matrix corresponding to the channel matrix, and determine the joint space-frequency eigen basis based on the first joint space-frequency covariance matrix corresponding to the channel matrix, to reduce an amount of data that is fed back, so that the feedback overheads can be reduced, and the CSI feedback efficiency is improved.

Further, the first optimization model includes: 
$$\min_{\rho_{l_0}} \left\| \overline{R}_h - \Sigma_{l_0} \rho_{l_0} (e(\theta_{l_0}, \phi_{l_0})e^H(\theta_{l_0}, \phi_{l_0})) \otimes (e^*(\tau_{l_0})e^T(\tau_{l_0})) \right\|_F;$$

$$s.t. \begin{cases} \rho_{l_0} > 0 \\ L_0 \leq L_{max}^{FS} \end{cases}$$

and $\min$ represents taking a minimum value, "$\| \|_F$" represents taking an F norm, $\overline{R}_h$ is the actual joint space-frequency covariance matrix corresponding to the channel matrix, $\Sigma$ represents a summation operation, $0 \leq l_0 < L_0$, and $l_0$ is an integer. $\rho_{l_0}$ is an $l_0^{th}$ first superposition coefficient, $e(\theta_{l_0}, \phi_{l_0})$ is a steering vector corresponding to an $l_0^{th}$ multi-path angle, $e^H(\theta_{l_0}, \phi_{l_0})$ is a conjugate transpose of $e(\theta_{l_0}, \phi_{l_0})$, $e(\tau_{l_0})$ is an $l_0^{th}$ phase change vector, $e^*(\tau_{l_0})$ is a conjugation of $e(\tau_{l_0})$, $e^T(\tau_{l_0})$ is a transpose of $e(\tau_{l_0})$, $e(\theta_{l_0}, \phi_{l_0})e^*(\tau_{l_0})$ is an $l_0^{th}$ piece of first information, s.t. is a constraint, $L_0$ is a channel multi-path quantity, $L_{max}^{FS}$ is a maximum value of $L_0$, and both $L_0$ and $L_{max}^{FS}$ are integers greater than 0. In this way, when the first apparatus determines the channel matrix by measuring the reference signal and obtains $\overline{R}_h$, the first apparatus may obtain corresponding $\rho_{l_0}$, $e(\theta_{l_0}, \phi_{l_0})$, and $e(\tau_{l_0})$ by using the foregoing first optimization model, so that the error between the first joint space-frequency covariance matrix and the actual joint space-frequency covariance matrix corresponding to the channel matrix is minimized. In other words, the first indication information may be determined based on a solution result of the preset second optimization model.

Optionally, the superposition coefficient may include a second superposition coefficient indicating a feature of an angle power spectrum, and the codebook vector may include second information indicating an angle. The second superposition coefficient and the second information are for determining a first space-domain covariance matrix. The preset optimization model includes a preset second optimization model that the first space-domain covariance matrix and an actual space-domain covariance matrix corresponding to the channel matrix satisfy.

In this way, the first apparatus feeds back the first indication information for constructing the first space-domain covariance matrix, and sends the first indication information to the second apparatus, so that reporting of a large amount of information, for example, a space-domain eigen basis and a superposition coefficient corresponding to the space-domain eigen basis, directly for restoring the channel state information can be avoided. For example, the second apparatus may determine, based on the first indication information, the first space-domain covariance matrix corresponding to the channel matrix, and determine the space-domain eigen basis based on the first space-domain covariance matrix corresponding to the channel matrix, to reduce an amount of data that is fed back, so that the feedback overheads can be reduced, and the feedback efficiency is improved.

Further, the second optimization model may include: 
$$\min_{\rho_{l_1}^S} \left\| R_h^S - \right.$$

$$\sum_{l_1} \rho_{l_1}^S \left( e(\theta_{l_1}, \phi_{l_1}) e^H(\theta_{l_1}, \phi_{l_1}) \right) \Big\|_F \quad ; \text{ and } \quad s.t. \begin{cases} \rho_{l_1}^S > 0 \\ L_1 \leq L_{max}^S \end{cases} \cdot min$$

represents taking a minimum value, "$\| \ \|_F$" represents taking an F norm, $R_h^S$ is the actual space-domain covariance matrix corresponding to the channel matrix, and $\Sigma$ represents a summation operation. $\rho_{l_1}^S$ is an $l_1$th second superposition coefficient, $e(\theta_{l_1}, \phi_{l_1})$ is a steering vector corresponding to an $l_1$th multi-path angle, $e^H(\theta_{l_1}, \phi_{l_1})$ is a conjugate transpose of $e(\theta_{l_1}, \phi_{l_1})$, s.t. is a constraint, $L_1$ is a channel multi-path quantity in space domain, $L_{max}^S$ is a maximum value of $L_1$, both $L_1$ and $L_{max}^S$ are integers greater than 0, $0 \leq l_1 < L_1$, and $l_1$ is an integer. In this way, when the first apparatus determines the channel matrix by measuring the reference signal and obtains $R_h^S$, the first apparatus may obtain corresponding $R_h^S$ and $e(\theta_{l_1}, \phi_{l_1})$ by using the foregoing second optimization model, so that an error between the first space-domain covariance matrix and the actual space-domain covariance matrix corresponding to the channel matrix is minimized. In other words, the first indication information may be determined based on a solution result of the preset second optimization model.

Optionally, the superposition coefficient may include a third superposition coefficient indicating a feature of a delay power spectrum, the codebook vector may include third information indicating a delay, and the third superposition coefficient and the third information are for determining a first frequency-domain covariance matrix. The preset optimization model includes a third optimization model that the first frequency-domain covariance matrix and an actual frequency-domain covariance matrix corresponding to the channel matrix satisfy.

In this way, the first apparatus feeds back the first indication information for constructing the first frequency-domain covariance matrix, and sends the first indication information to the second apparatus, so that reporting of a large amount of information, for example, a frequency-domain eigen basis and a superposition coefficient corresponding to the frequency-domain eigen basis, directly for restoring the channel state information can be avoided. For example, the second apparatus may determine the first frequency-domain covariance matrix based on the first indication information, and determine the frequency-domain eigen basis based on the first frequency-domain covariance matrix corresponding to the channel matrix, to reduce an amount of data that is fed back, so that the feedback overheads can be reduced, and the feedback efficiency is improved.

Further, the third optimization model may include:

$$\min_{\rho_{l_2}^F} \left\| R_h^F - \sum_{l_2} \rho_{l_2}^F \left( e(\tau_{l_2}) e^H(\tau_{l_2}) \right) \right\|_F \quad ; \text{ and }$$

$$s.t. \begin{cases} \rho_{l_2}^F > 0 \\ L_2 \leq L_{max}^F \end{cases} \cdot min$$

represents taking a minimum value, "$\| \ \|_F$" represents taking an F norm, $R_h^F$ is the actual frequency-domain covariance matrix corresponding to the channel matrix, and $\Sigma$ represents a summation operation. $\rho_{l_2}^F$ is an $l_2$th third superposition coefficient, $e(\tau_{l_2})$ is an $l_2$th phase change vector, $e^H(\tau_{l_2})$ is a conjugate transpose of $e(\tau_{l_2})$, s.t. is a constraint, $L_2$ is a channel multi-path quantity in frequency domain, $L_{max}^F$ is a maximum value of $L_2$, both $L_2$ and $L_{max}^F$ are integers greater than 0, $0 \leq l_2 < L_2$, and $l_2$ is an integer. In this way, when the first apparatus determines the channel matrix by measuring the reference signal and obtains $R_h^F$, an error between the first frequency-domain covariance matrix and the actual frequency-domain covariance matrix corresponding to the channel matrix can be minimized by using the third optimization model. In other words, the first indication information may be determined based on a solution result of the preset third optimization model.

Optionally, the superposition coefficient may include a second superposition coefficient indicating a feature of an angle power spectrum and a third superposition coefficient indicating a feature of a delay power spectrum, the codebook vector may include second information indicating an angle and third information indicating a delay, the second superposition coefficient and the second information are for determining a first space-domain covariance matrix, and the third superposition coefficient and the third information are for determining a first frequency-domain covariance matrix. The preset optimization model includes a second optimization model that the first space-domain covariance matrix and an actual space-domain covariance matrix corresponding to the channel matrix satisfy and a third optimization model that the first frequency-domain covariance matrix and an actual frequency-domain covariance matrix corresponding to the channel matrix satisfy.

In this way, the first apparatus feeds back the first indication information for constructing the first space-domain covariance matrix and the first frequency-domain covariance matrix, and sends the first indication information to the second apparatus, so that reporting of a large amount of information, for example, a space-domain eigen basis and a superposition coefficient corresponding to the space-domain eigen basis and a frequency-domain eigen basis and a superposition coefficient corresponding to the frequency-domain eigen basis, directly for restoring the channel state information can be avoided. The first space-domain covariance matrix and the first frequency-domain covariance matrix are determined based on the first indication information from the first apparatus. For example, the second apparatus may determine, based on the first indication information, the first space-domain covariance matrix and the first frequency-domain covariance matrix that correspond to the channel matrix, determine the space-domain eigen basis based on the first space-domain covariance matrix corresponding to the channel matrix, and determine the frequency-domain eigen basis based on the first frequency-domain covariance matrix corresponding to the channel matrix, to reduce an amount of data that is fed back, so that the feedback overheads can be reduced, and the feedback efficiency is improved.

Further, the second optimization model may include: $\min\limits_{\rho_{l_1}^S} \left\| \boldsymbol{R}_h^S - \sum_{l_1} \rho_{l_1}^S \left( \boldsymbol{e}(\theta_{l_1}, \phi_{l_1}) \boldsymbol{e}^H(\theta_{l_1}, \phi_{l_1}) \right) \right\|_F$ ; and $s.t. \begin{cases} \rho_{l_1}^S > 0 \\ L_1 \le L_{max}^S \end{cases}$ . $\min$ represents taking a minimum value, "$\| \ \|_F$" represents taking an F norm, $\boldsymbol{R}_h^S$ is the actual space-domain covariance matrix corresponding to the channel matrix, and $\Sigma$ represents a summation operation. $\rho_{l_1}^S$ is an $l_1^{th}$ second superposition coefficient, $\boldsymbol{e}(\theta_{l_1}, \phi_{l_1})$ is a steering vector corresponding to an $l_1^{th}$ multi-path angle, $\boldsymbol{e}^H(\theta_{l_1}, \phi_{l1})$ is a conjugate transpose of $\boldsymbol{e}(\theta_{l_1}, \phi_{l1})$, s.t. is a constraint, $L_1$ is a channel multi-path quantity in space domain, $L_{max}^S$ is a maximum value of $L_1$, both $L_1$ and $L_{max}^S$ are integers greater than 0, $0 \le l_1 < L_1$, and $l_1$ is an integer. The third optimization model may include: $\min\limits_{\rho_{l_2}^F} \left\| \boldsymbol{R}_h^F - \sum_{l_2} \rho_{l_2}^F \left( \boldsymbol{e}(\tau_{l_2}) \boldsymbol{e}^H(\tau_{l_2}) \right) \right\|_F$ ; and $s.t. \begin{cases} \rho_{l_2}^F > 0 \\ L_2 \le L_{max}^F \end{cases}$ . $\min$ represents taking a minimum value, "$\| \ \|_F$" represents taking an F norm, $\boldsymbol{R}_h^F$ is the actual frequency-domain covariance matrix corresponding to the channel matrix, and $\Sigma$ represents a summation operation. $\rho_{l_2}^F$ is an $l_2^{th}$ third superposition coefficient, $\boldsymbol{e}(\tau_{l_2})$ is an $l_2^{th}$ phase change vector, $\boldsymbol{e}^H(\tau_{l_2})$ is a conjugate transpose of $\boldsymbol{e}(\tau_{l_2})$, s. t. is a constraint, $L_2$ is a channel multi-path quantity in frequency domain, $L_{max}^F$ is a maximum value of $L_2$, both $L_2$ and $L_{max}^F$ are integers greater than 0, $0 \le l_2 < L_2$, and $l_2$ is an integer.

It is to be noted that, that the first apparatus sends the first indication information to the second apparatus may include: The first apparatus sends the first indication information to the second apparatus based on a first periodicity.

Further, the method provided in the first aspect may further include: The first apparatus sends second indication information to the second apparatus based on a second periodicity. The second indication information indicates a first feedback coefficient, and the second periodicity is shorter than the first periodicity.

For example, the first feedback coefficient is determined based on a first decomposition result of the first joint space-frequency covariance matrix and the channel matrix. The first decomposition result is obtained by decomposing the first joint space-frequency covariance matrix according to a first decomposition rule. For example, the first decomposition rule may include an arrangement sequence of elements in a diagonal matrix obtained by decomposing the first joint space-frequency covariance matrix, and a type of elements in a 1st row of a joint space-frequency eigen basis obtained by decomposing the first joint space-frequency covariance matrix, for example, a positive real number. Still further, the first indication information may further indicate a first quantized vector obtained by quantizing a 1st row of elements of first $P$ columns in the joint space-frequency eigen basis of the first decomposition result. $P$ is a positive integer. In this way, when the first joint space-frequency covariance matrix has a multiple root, the first decomposition result may be uniquely determined, so that a joint space-frequency eigen basis determined by the second apparatus can be consistent with the joint space-frequency eigen basis for determining the first feedback coefficient, thereby improving accuracy of the channel state information. In addition, when eigen vectors in the eigen basis are arranged in descending order of energy, an eigen vector (column vector) with large energy may be selected from the joint space-frequency eigen basis to restore the channel state information, so that both reporting overheads and accuracy of the restored channel state information are considered.

In addition, the joint space-frequency eigen basis may be combined with the first feedback coefficient, namely, a short periodicity coefficient, so that the second apparatus can restore the complete channel state information.

It is to be noted that, that the first apparatus sends the first indication information to the second apparatus includes: The first apparatus sends the first indication information to the second apparatus based on a third periodicity.

Further, the method provided in the first aspect may further include: The first apparatus sends third indication information to the second apparatus based on a fourth periodicity. The third indication information indicates a second feedback coefficient, and the fourth periodicity is shorter than the third periodicity.

For example, the second feedback coefficient is determined based on a second decomposition result of the first space-domain covariance matrix, a third decomposition result of the first frequency-domain covariance matrix, and the channel matrix. The second decomposition result is obtained by decomposing the first space-domain covariance matrix according to a second decomposition rule, and the third decomposition result is obtained by decomposing the first frequency-domain covariance matrix according to a third decomposition rule.

For example, the second decomposition rule may include an arrangement sequence of elements in a diagonal matrix of the first space-domain covariance matrix, and a type of elements in a 1st row of a space-domain eigen basis of the first space-domain covariance matrix. In this way, a decomposition result can be reduced, thereby improving accuracy of the channel state information. The third decomposition rule may include an arrangement sequence of elements in a diagonal matrix of the first frequency-domain covariance matrix, and a type of elements in a 1st row of a frequency-domain eigen basis of the first frequency-domain covariance matrix, for example, a positive real number.

Still further, the first indication information may further indicate a second quantized vector obtained by quantizing a 1st row of elements of first K columns in the space-domain eigen basis of the second decomposition result. K is a positive integer. In this way, when the first space-domain covariance matrix has a multiple root, the second decomposition result may be uniquely determined, so that a space-domain eigen basis determined by the second apparatus can be consistent with the space-domain eigen basis for determining the second feedback coefficient, thereby improving accuracy of the channel state information.

Still further, the first indication information may further indicate a third quantized vector obtained by quantizing a 1st row of elements of first $D$ columns in the frequency-domain eigen basis of the third decomposition result. $D$ is a positive integer. In this way, when the first frequency-domain covariance matrix has a multiple root, the third decomposition result may be uniquely determined, so that a frequency-domain eigen basis determined by the second apparatus can be consistent with the frequency-domain eigen basis for determining the second feedback coefficient, thereby improving accuracy of the channel state information.

In addition, both the space-domain eigen basis and the frequency-domain eigen basis are combined with the second feedback coefficient, namely, a short periodicity feedback coefficient, so that the second apparatus can restore the complete channel state information.

According to a second aspect, a method for reporting channel state information is provided. The method for reporting channel state information may include: A second apparatus receives first indication information from a first apparatus. The first indication information is for constructing a first covariance matrix corresponding to a channel matrix, and the channel matrix indicates channel state information of a channel between the first apparatus and the second apparatus. The second apparatus determines, based on the first indication information, a first covariance matrix corresponding to the channel matrix.

According to the method for reporting channel state information provided in the second aspect, the second apparatus receives, from the first apparatus, the first indication information for constructing the covariance matrix corresponding to the channel matrix, to determine the first covariance matrix, so that transmission of a large amount of information directly for restoring the channel state information can be avoided, thereby reducing feedback overheads and improving CSI feedback efficiency.

In a possible design solution, the first indication information may include a superposition coefficient and a codebook vector. That the second apparatus determines, based on the first indication information, a first covariance matrix corresponding to the channel matrix may include: The second apparatus determines the first covariance matrix based on the superposition coefficient and the codebook vector.

Optionally, the superposition coefficient includes a first superposition coefficient indicating a feature of an angle-delay power spectrum, and the codebook vector includes first information indicating an angle delay. That the second apparatus determines the first covariance matrix based on the superposition coefficient and the codebook vector includes: The second apparatus determines a first joint space-frequency covariance matrix based on the first superposition coefficient and the first information.

It is to be noted that, that a second apparatus receives first indication information from a first apparatus may include: The second apparatus receives the first indication information from the first apparatus based on a first periodicity.

Further, the method provided in the second aspect may further include: The second apparatus receives second indication information from the first apparatus based on a second periodicity. The second indication information indicates a first feedback coefficient, and the second periodicity is shorter than the first periodicity.

For example, the first feedback coefficient is determined based on a first decomposition result of the first joint space-frequency covariance matrix and the channel matrix. The first decomposition result is obtained by decomposing the first joint space-frequency covariance matrix according to a first decomposition rule.

Still further, the method provided in the second aspect may further include: The second apparatus determines a valid joint space-frequency eigen basis of the first joint space-frequency covariance matrix according to the first decomposition rule. The valid joint space-frequency eigen basis includes first $P$ columns of a joint space-frequency eigen basis, and $P$ is a positive integer. The second apparatus determines the channel matrix based on the valid joint space-frequency eigen basis and the first feedback coefficient. In this way, when eigen vectors in the joint space-frequency eigen basis are arranged in descending order of energy, the first apparatus can be enabled to select an eigen vector (column vector) with large energy from the joint space-frequency eigen basis to restore the channel state information, so that both reporting overheads and accuracy of the restored channel state information are considered.

The first decomposition rule may include an arrangement sequence of elements in a diagonal matrix obtained by decomposing the first joint space-frequency covariance matrix, and a type of elements in a 1st row of the joint space-frequency eigen basis obtained by decomposing the first joint space-frequency covariance matrix, for example, a positive real number.

Still further, the first indication information may further indicate a first quantized vector obtained by quantizing a 1st row of elements of the first $P$ columns in the joint space-frequency eigen basis obtained by decomposing the first joint space-frequency covariance matrix. $P$ is a positive integer. In this way, when the first joint space-frequency covariance matrix has a multiple root, the second apparatus may uniquely determine the first decomposition result, so that a joint space-frequency eigen basis determined by the second apparatus is consistent with the joint space-frequency eigen basis for determining the first feedback coefficient, thereby improving accuracy of the channel state information.

In addition, the second apparatus may combine the valid joint space-frequency eigen basis with the first feedback coefficient, namely, a short periodicity coefficient, to restore the complete channel state information.

In this case, that the second apparatus determines a valid joint space-frequency eigen basis of the first joint space-frequency covariance matrix according to the first decomposition rule may include: The second apparatus determines the valid joint space-frequency eigen basis of the first joint space-frequency covariance matrix according to the first decomposition rule and based on the first quantized vector.

Optionally, the superposition coefficient may include a second superposition coefficient indicating a feature of an angle power spectrum, and the codebook vector may include second information indicating an angle. That the second apparatus determines the first covariance matrix based on the superposition coefficient and the codebook vector may include: The second apparatus determines a first space-domain covariance matrix based on the second superposition coefficient and the second information.

Optionally, the superposition coefficient may include a third superposition coefficient indicating a feature of a delay power spectrum, and the codebook vector may include third information indicating a delay. That the second apparatus determines the first covariance matrix based on the superposition coefficient and the codebook vector may include: The second apparatus determines a first frequency-domain covariance matrix based on the third superposition coefficient and the third information.

Optionally, the superposition coefficient may include a second superposition coefficient indicating a feature of an angle power spectrum and a third superposition coefficient indicating a feature of a delay power spectrum, and the codebook vector may include second information indicating an angle and third information indicating a delay. That the second apparatus determines the first covariance matrix based on the superposition coefficient and the codebook vector includes: The second apparatus determines a first space-domain covariance matrix based on the second superposition coefficient and the second information. The second apparatus determines a first frequency-domain covariance matrix based on the third superposition coefficient and the third information.

It is to be noted that, that a second apparatus receives first indication information from a first apparatus may include: The second apparatus receives the first indication information from the first apparatus based on a third periodicity.

Further, the method provided in the second aspect may further include: The second apparatus receives third indication information from the first apparatus based on a fourth periodicity. The third indication information indicates a second feedback coefficient, and the fourth periodicity is shorter than the third periodicity.

For example, the second feedback coefficient is determined based on a second decomposition result of the first space-domain covariance matrix, a third decomposition result of the first frequency-domain covariance matrix, and the channel matrix. The second decomposition result is obtained by decomposing the first space-domain covariance matrix according to a second decomposition rule, and the third decomposition result is obtained by decomposing the first frequency-domain covariance matrix according to a third decomposition rule. For example, the second decomposition rule may include an arrangement sequence of elements in a diagonal matrix of the first space-domain covariance matrix, and a type of elements in a 1st row of an eigen basis of the first space-domain covariance matrix. The third decomposition rule may include an arrangement sequence of elements in a diagonal matrix of the first frequency-domain covariance matrix, and a type of elements in a 1st row of a frequency-domain eigen basis of the first frequency-domain covariance matrix, for example, a positive real number.

Still further, the method provided in the second aspect may further include: The second apparatus determines a valid space-domain eigen basis according to the second decomposition rule. The second apparatus determines a valid frequency-domain eigen basis according to the third decomposition rule. The second apparatus determines the channel state information based on the valid space-domain eigen basis, the valid frequency-domain eigen basis, and the second feedback coefficient.

Still further, the first indication information may further indicate a second quantized vector obtained by quantizing a 1st row of elements of first K columns in the space-domain eigen basis obtained by decomposing the first space-domain covariance matrix.

For example, that the second apparatus determines a valid space-domain eigen basis according to the second decomposition rule includes: The second apparatus determines the valid space-domain eigen basis according to the second decomposition rule and based on the second quantized vector. The valid space-domain eigen basis includes the first $K$ columns of the space-domain eigen basis of the first space-domain covariance matrix. In this way, when the first space-domain covariance matrix has a multiple root, the second apparatus may uniquely determine the second decomposition result, so that a space-domain eigen basis determined by the second apparatus is consistent with the space-domain eigen basis for determining the second feedback coefficient, thereby improving accuracy of the channel state information.

Still further, the first indication information may further indicate a third quantized vector obtained by quantizing a 1st row of elements of first $D$ columns in the frequency-domain eigen basis obtained by decomposing the first frequency-domain covariance matrix.

In this case, the method provided in the second aspect may further include: The second apparatus determines the valid frequency-domain eigen basis according to the third decomposition rule and based on the third quantized vector. The valid frequency-domain eigen basis includes the first $D$ columns of the frequency-domain eigen basis of the first frequency-domain covariance matrix. In this way, when the first frequency-domain covariance matrix has a multiple root, the third decomposition result may be uniquely determined, so that a frequency-domain eigen basis determined by the second apparatus can be consistent with the frequency-domain eigen basis for determining the second feedback coefficient, thereby improving accuracy of the channel state information.

In addition, the second apparatus may combine both the space-domain eigen basis and the frequency-domain eigen basis with the second feedback coefficient, namely, a short periodicity feedback coefficient, to restore the complete channel state information.

According to a third aspect, a communication apparatus is provided. The communication apparatus includes a processing module and a transceiver module. The transceiver module is configured to receive a reference signal from a second apparatus. The processing module is configured to determine first indication information based on the reference signal. The first indication information is for constructing a first covariance matrix corresponding to a channel matrix, and the channel matrix indicates channel state information of a channel between the communication apparatus and the second apparatus. The transceiver module is configured to send the first indication information to the second apparatus.

In a possible design solution, the first indication information may include a superposition coefficient and a codebook vector, and the superposition coefficient and the codebook vector are for determining the first covariance matrix.

In a possible design, the first covariance matrix and an actual covariance matrix corresponding to the channel matrix satisfy a preset optimization model.

Optionally, the preset optimization model may include: $\min_{\alpha_l} \|R - \sum_l \alpha_l \boldsymbol{w}_l \boldsymbol{w}_l^H\|_F$ ; and $s.t. L \le L_{max}$. $min$ represents taking a minimum value, "$\| \|_F$" represents taking an F norm, $\boldsymbol{R}$ is an actual joint space-frequency covariance matrix corresponding to the channel matrix, $\Sigma$ represents a summation operation, $0 \le l < L$, and $l$ is an integer. $\alpha_l$ is an $l$th superposition coefficient, $\boldsymbol{w}_l$ is an $l$th codebook vector, $\boldsymbol{w}_l^H$ is a conjugate transpose of $\boldsymbol{w}_l$, $s.t.$ is a constraint, $L$ is a channel multi-path quantity, $L_{max}$ is a maximum value of $L$, and both $L$ and $L_{max}$ are integers greater than 0.

Optionally, the superposition coefficient may include a first superposition coefficient indicating a feature of an angle-delay power spectrum, the codebook vector may include first information indicating an angle delay, and the first superposition coefficient and the first information are for determining a first joint space-frequency covariance matrix. The preset optimization model includes a first optimization model that the first joint space-frequency covariance matrix and the actual joint space-frequency covariance matrix corresponding to the channel matrix satisfy.

Further, the first optimization model may include: $\min_{\rho_{l_0}} \left\| \overline{\boldsymbol{R}}_h - \Sigma_{l_0} \rho_{l_0} (\boldsymbol{e}(\theta_{l_0}, \phi_{l_0}) \boldsymbol{e}^H(\theta_{l_0}, \phi_{l_0})) \otimes (\boldsymbol{e}^*(\tau_{l_0}) \boldsymbol{e}^T(\tau_{l_0}) \right\|_F$; $s.t. \begin{cases} \rho_{l_0} > 0 \\ L_0 \le L_{max}^{FS} \end{cases}$. $min$ represents taking a minimum value, "$\| \|_F$" represents taking an F norm, $\overline{\boldsymbol{R}}_h$ is the actual

joint space-frequency covariance matrix corresponding to the channel matrix, $\Sigma$ represents a summation operation, $0 \leq l_0 < L_0$, and $l_0$ is an integer. $\rho_{l_0}$ is an $l_0^{th}$ first superposition coefficient, $e(\theta_{l_0}, \phi_{l_0})$ is a steering vector corresponding to an $l_0^{th}$ multipath angle, $e^H(\theta_{l_0}, \phi_{l_0})$ is a conjugate transpose of $e(\theta_{l_0}, \phi_{l_0})$, $e(\tau_{l_0})$ is an $l_0^{th}$ phase change vector, $e^*(\tau_{l_0})$ is a conjugation of $e(\tau_{l_0})$, $e^T(\tau_{l_0})$ is a transpose of $e(\tau_{l_0})$, $e(\theta_{l_0}, \phi_{l_0})e^*(\tau_{l_0})$ is an $l_0^{th}$ piece of first information, *s.t.* is a constraint, $L_0$ is a channel multi-path quantity, $L_{max}^{FS}$ is a maximum value of $L_0$, and both $L_0$ and $L_{max}^{FS}$ are integers greater than 0.

Optionally, the superposition coefficient may include a second superposition coefficient indicating a feature of an angle power spectrum, and the codebook vector includes second information indicating an angle. The second superposition coefficient and the second information are for determining a first space-domain covariance matrix. The preset optimization model includes a second optimization model that the first space-domain covariance matrix and an actual space-domain covariance matrix corresponding to the channel matrix satisfy.

Further, the second optimization model may include:

$$\min_{\rho_{l_1}^S} \left\| R_h^S - \sum_{l_1} \rho_{l_1}^S \left( e(\theta_{l_1}, \phi_{l_1}) e^H(\theta_{l_1}, \phi_{l_1}) \right) \right\|_F \quad s.t. \begin{cases} \rho_{l_1}^S > 0 \\ L_1 \leq L_{max}^S \end{cases}$$

; and *min* represents taking a minimum value, "$\| \ \|_F$" represents taking an F norm, $R_h^S$ is the actual space-domain covariance matrix corresponding to the channel matrix, and $\Sigma$ represents a summation operation. $\rho_{l_1}^S$ is an $l_1^{th}$ second superposition coefficient, $e(\theta_{l_1}, \phi_{l_1})$ is a steering vector corresponding to an $l_1^{th}$ multi-path angle, $e^H(\theta_{l_1}, \phi_{l_1})$ is a conjugate transpose of $e(\theta_{l_1}, \phi_{l_1})$, *s.t.* is a constraint, $L_1$ is a channel multi-path quantity in space domain, $L_{max}^S$ is a maximum value of $L_1$, both $L_1$ and $L_{max}^S$ are integers greater than 0, $0 \leq l_1 < L_1$, and $l_1$ is an integer.

Optionally, the superposition coefficient may include a third superposition coefficient indicating a feature of a delay power spectrum, the codebook vector may include third information indicating a delay, and the third superposition coefficient and the third information are for determining a first frequency-domain covariance matrix. The preset optimization model includes a third optimization model that the first frequency-domain covariance matrix and an actual frequency-domain covariance matrix corresponding to the channel matrix satisfy.

Further, the third optimization model may include:

$$\min_{\rho_{l_2}^F} \left\| R_h^F - \sum_{l_2} \rho_{l_2}^F \left( e(\tau_{l_2}) e^H(\tau_{l_2}) \right) \right\|_F$$

; and

$$s.t. \begin{cases} \rho_{l_2}^F > 0 \\ L_2 \leq L_{max}^F \end{cases}$$

*min* represents taking a minimum value, "$\| \ \|_F$" represents taking an F norm, $R_h^F$ is the actual frequency-domain covariance matrix corresponding to the channel matrix, and $\Sigma$ represents a summation operation. $\rho_{l_2}^F$ is an $l_2^{th}$ third superposition coefficient, $e(\tau_{l_2})$ is an $l_2^{th}$ phase change vector, $e^H(\tau_{l_2})$ is a conjugate transpose of $e(\tau_{l_2})$, *s.t.* is a constraint, $L_2$ is a channel multi-path quantity in frequency domain, $L_{max}^F$ is a maximum value of $L_2$, both $L_2$ and $L_{max}^F$ are integers greater than 0, $0 \leq l_2 < L_2$, and $l_2$ is an integer.

Optionally, the superposition coefficient may include a second superposition coefficient indicating a feature of an angle power spectrum and a third superposition coefficient indicating a feature of a delay power spectrum, the codebook vector may include second information indicating an angle and third information indicating a delay, the second superposition coefficient and the second information are for determining a first space-domain covariance matrix, and the third superposition coefficient and the third information are for determining a first frequency-domain covariance matrix. The preset optimization model includes a preset second optimization model that the first space-domain covariance matrix and an actual space-domain covariance matrix corresponding to the channel matrix satisfy and a third optimization model that the first frequency-domain covariance matrix and an actual frequency-domain covariance matrix corresponding to the channel matrix satisfy.

Further, the second optimization model may include:

$$\min_{\rho_{l_1}^S} \left\| R_h^S - \right.$$

$$\sum_{l_1} \rho_{l_1}^S \left( e(\theta_{l_1}, \phi_{l_1}) e^H(\theta_{l_1}, \phi_{l_1}) \right) \Big\|_F \text{; and } s.t. \begin{cases} \rho_{l_1}^S > 0 \\ L_1 \leq L_{max}^S \end{cases} \cdot min$$

represents taking a minimum value, "|| ||$_F$" represents taking an F norm, $R_h^S$ is the actual space-domain covariance matrix corresponding to the channel matrix, and $\Sigma$ represents a summation operation. $\rho_{l_1}^S$ is an $l_1$th second superposition coefficient, $e(\theta_{l_1}, \phi_{l_1})$ is a steering vector corresponding to an $l_1$th multi-path angle, $e^H(\theta_{l_1}, \phi_{l_1})$ is a conjugate transpose of $e(\theta_{l_1}, \phi_{l_1})$, s.t. is a constraint, $L_1$ is a channel multi-path quantity in space domain, $L_{max}^S$ is a maximum value of $L_1$, both $L_1$ and $L_{max}^S$ are integers greater than 0, 0 $\leq l_1 < L_1$, and $l_1$ is an integer. The third optimization model may include:

$$\min_{\rho_{l_2}^F} \left\| R_h^F - \sum_{l_2} \rho_{l_2}^F \left( e(\tau_{l_2}) e^H(\tau_{l_2}) \right) \right\|_F ;$$

$$s.t. \begin{cases} \rho_{l_2}^F > 0 \\ L_2 \leq L_{max}^F \end{cases} \cdot min$$

and represents taking a minimum value, "|| ||$_F$" represents taking an F norm, $R_h^F$ is the actual frequency-domain covariance matrix corresponding to the channel matrix, and $\Sigma$ represents a summation operation. $\rho_{l_2}^F$ is an $l_2$th third superposition coefficient, $e(\tau_{l_2})$ is an $l_2$th phase change vector, $e^H(\tau_{l_2})$ is a conjugate transpose of $e(\tau_2)$, s.t. is a constraint, $L_2$ is a channel multi-path quantity in frequency domain, $L_{max}^F$ is a maximum value of $L_2$, both $L_2$ and $L_{max}^F$ are integers greater than 0, $0 \leq l_2 < L_2$, and $l_2$ is an integer.

It is to be noted that the transceiver module is specifically configured to send the first indication information to the second apparatus based on a first periodicity.

Further, the transceiver module may be further configured to send second indication information to the second apparatus based on a second periodicity. The second indication information indicates a first feedback coefficient, and the second periodicity is shorter than the first periodicity.

For example, the first feedback coefficient is determined based on a first decomposition result of the first joint space-frequency covariance matrix and the channel matrix. The first decomposition result is obtained by decomposing the first joint space-frequency covariance matrix according to a first decomposition rule.

For example, the first decomposition rule may include an arrangement sequence of elements in a diagonal matrix obtained by decomposing the first joint space-frequency covariance matrix, and a type of elements in a 1st row of a joint space-frequency eigen basis obtained by decomposing the first joint space-frequency covariance matrix, for example, a positive real number.

Still further, the first indication information may further indicate a first quantized vector obtained by quantizing a 1st row of elements of first P columns in the joint space-frequency eigen basis of the first decomposition result. P is a positive integer.

It is to be noted that the transceiver module is specifically configured to send the first indication information to the second apparatus based on a third periodicity.

Further, the transceiver module may be further configured to send third indication information to the second apparatus based on a fourth periodicity. The third indication information indicates a second feedback coefficient, and the fourth periodicity is shorter than the third periodicity.

For example, the second feedback coefficient is determined based on a second decomposition result of the first space-domain covariance matrix, a third decomposition result of the first frequency-domain covariance matrix, and the channel matrix. The second decomposition result is obtained by decomposing the first space-domain covariance matrix according to a second decomposition rule, and the third decomposition result is obtained by decomposing the first frequency-domain covariance matrix according to a third decomposition rule.

For example, the second decomposition rule may include an arrangement sequence of elements in a diagonal matrix of the first space-domain covariance matrix, and a type of elements in a 1st row of a space-domain eigen basis of the first space-domain covariance matrix, for example, a positive real number.

Still further, the first indication information may further indicate a second quantized vector obtained by quantizing a 1st row of elements of first K columns in the space-domain eigen basis of the second decomposition result. K is a positive integer.

For example, the third decomposition rule may include an arrangement sequence of elements in a diagonal matrix of the first frequency-domain covariance matrix, and a type of elements in a 1st row of a frequency-domain eigen basis of the first frequency-domain covariance matrix.

Still further, the first indication information may further indicate a third quantized vector obtained by quantizing a $1^{st}$ row of elements of first $D$ columns in the frequency-domain eigen basis of the third decomposition result. $D$ is a positive integer.

Optionally, the transceiver module may include a receiving module and a sending module. The transceiver module is configured to implement a sending function and a receiving function of the communication apparatus in the third aspect.

Optionally, the communication apparatus in the third aspect may further include a storage module. The storage module stores a program or instructions. When the processing module executes the program or the instructions, the communication apparatus is enabled to perform the method for reporting channel state information in the first aspect.

It is to be noted that the communication apparatus in the third aspect may be the first apparatus or the second apparatus, or may be a chip (system) or another component or assembly that can be disposed in the first apparatus or the second apparatus, or may be an apparatus including the first apparatus or the second apparatus. This is not limited in this application.

In addition, for a technical effect of the communication apparatus in the third aspect, refer to the technical effect of the method for reporting channel state information in the first aspect. Details are not described herein again.

According to a fourth aspect, a communication apparatus is provided. The communication apparatus includes a processing module and a transceiver module. The transceiver module is configured to receive first indication information from a first apparatus. The first indication information is for constructing a first covariance matrix corresponding to a channel matrix, and the channel matrix indicates channel state information of a channel between the first apparatus and a second apparatus. The processing module is configured to determine, based on the first indication information, a first covariance matrix corresponding to the channel matrix.

In a possible design solution, the first indication information may include a superposition coefficient and a codebook vector. The processing module is specifically configured to determine the first covariance matrix based on the superposition coefficient and the codebook vector.

Optionally, the superposition coefficient includes a first superposition coefficient indicating a feature of an angle-delay power spectrum, and the codebook vector includes first information indicating an angle delay. The processing module is specifically configured to determine a first joint space-frequency covariance matrix based on the first superposition coefficient and the first information.

It is to be noted that the transceiver module is specifically configured to receive the first indication information from the first apparatus based on a first periodicity.

Further, the transceiver module may be further configured to receive second indication information from the first apparatus based on a second periodicity. The second indication information indicates a first feedback coefficient, and the second periodicity is shorter than the first periodicity.

For example, the first feedback coefficient is determined based on a first decomposition result of the first joint space-frequency covariance matrix and the channel matrix. The first decomposition result is obtained by decomposing the first joint space-frequency covariance matrix according to a first decomposition rule.

Further, the processing module may be further configured to determine a valid joint space-frequency eigen basis of the first joint space-frequency covariance matrix according to the first decomposition rule. The valid joint space-frequency eigen basis includes first $P$ columns of a joint space-frequency eigen basis, and $P$ is a positive integer. In addition, the processing module determines the channel matrix based on the valid joint space-frequency eigen basis and the first feedback coefficient.

For example, the first decomposition rule may include an arrangement sequence of elements in a diagonal matrix obtained by decomposing the first joint space-frequency covariance matrix, and a type of elements in a $1^{st}$ row of the joint space-frequency eigen basis obtained by decomposing the first joint space-frequency covariance matrix, for example, a positive real number.

Still further, the first indication information may further indicate a first quantized vector obtained by quantizing a $1^{st}$ row of elements of the first $P$ columns in the joint space-frequency eigen basis obtained by decomposing the first joint space-frequency covariance matrix. $P$ is a positive integer.

In this case, the processing module is specifically configured to determine the valid joint space-frequency eigen basis of the first joint space-frequency covariance matrix according to the first decomposition rule and based on the first quantized vector.

Optionally, the superposition coefficient may include a second superposition coefficient indicating a feature of an angle power spectrum, and the codebook vector includes second information indicating an angle. The processing module is specifically configured to determine a first space-domain covariance matrix based on the second superposition coefficient and the second information.

Optionally, the superposition coefficient may include a third superposition coefficient indicating a feature of a delay power spectrum, and the codebook vector includes third information indicating a delay. The processing module is specifically configured to determine a first frequency-domain covariance matrix based on the third superposition coefficient and the third information.

Optionally, the superposition coefficient may include a second superposition coefficient indicating a feature of an angle power spectrum and a third superposition coefficient indicating a feature of a delay power spectrum, and the codebook vector includes second information indicating an angle and third information indicating a delay. The processing module is specifically configured to determine a first space-domain covariance matrix based on the second superposition coefficient and the second information; and determine a first frequency-domain covariance matrix based on the third superposition coefficient and the third information.

It is to be noted that the transceiver module is specifically configured to receive the first indication information from the first apparatus based on a first periodicity.

Further, the transceiver module may be further configured to receive third indication information from the first apparatus based on a fourth periodicity. The third indication information indicates a second feedback coefficient, and the fourth periodicity is shorter than a third periodicity.

For example, the second feedback coefficient is determined based on a second decomposition result of the first space-domain covariance matrix, a third decomposition result of the first frequency-domain covariance matrix, and the channel matrix. The second decomposition result is obtained by decomposing the first space-domain covariance matrix according to a second decomposition rule, and the third decomposition result is obtained by decomposing the first frequency-domain covariance matrix according to a third decomposition rule. For example, the second decomposition rule may include an arrangement sequence of elements in a diagonal matrix of the first space-domain covariance matrix, and a type of elements in a $1^{st}$ row of a space-domain eigen basis of the first space-domain covariance matrix. The third decomposition rule may include an arrangement sequence of elements in a diagonal matrix of the first frequency-domain covariance matrix, and a type of elements in a $1^{st}$ row of a frequency-domain eigen basis of the first frequency-domain covariance matrix, for example, a positive real number.

Further, the processing module may be further configured to determine a valid space-domain eigen basis according to the second decomposition rule; determine a valid frequency-domain eigen basis according to the third decomposition rule; and determine the channel state information based on the valid space-domain eigen basis, the valid frequency-domain eigen basis, and the second feedback coefficient.

Still further, the first indication information may further indicate a second quantized vector obtained by quantizing a $1^{st}$ row of elements of first $K$ columns in the space-domain eigen basis obtained by decomposing the first space-domain covariance matrix.

For example, the processing module is specifically configured to determine the valid space-domain eigen basis according to the second decomposition rule and based on the second quantized vector. The valid space-domain eigen basis includes the first $K$ columns of the space-domain eigen basis of the first space-domain covariance matrix. Still further, the first indication information may further indicate a third quantized vector obtained by quantizing a $1^{st}$ row of elements of first $D$ columns in the frequency-domain eigen basis obtained by decomposing the first frequency-domain covariance matrix.

In this case, the processing module is specifically configured to determine the valid frequency-domain eigen basis according to the third decomposition rule and based on the third quantized vector. The valid frequency-domain eigen basis includes the first $D$ columns of the frequency-domain eigen basis of the first frequency-domain covariance matrix.

Optionally, the transceiver module may include a receiving module and a sending module. The transceiver module is configured to implement a sending function and a receiving function of the communication apparatus in the fourth aspect.

Optionally, the communication apparatus in the fourth aspect may further include a storage module. The storage module stores a program or instructions. When the processing module executes the program or the instructions, the communication apparatus is enabled to perform the method for reporting channel state information in the first aspect.

It is to be noted that the communication apparatus in the fourth aspect may be the first apparatus or the second apparatus, or may be a chip (system) or another component or assembly that can be disposed in the first apparatus or the second apparatus, or may be an apparatus including the first apparatus or the second apparatus. This is not limited in this application.

In addition, for a technical effect of the communication apparatus in the fourth aspect, refer to the technical effect of the method for reporting channel state information in the first aspect. Details are not described herein again.

According to a fifth aspect, a communication apparatus is provided. The communication apparatus is configured to perform the method for reporting channel state information in any one of the implementations of the first aspect and the second aspect.

In this application, the communication apparatus in the fifth aspect may be the first apparatus or the second apparatus, or may be a chip (system) or another component or assembly that can be disposed in the first apparatus or the second apparatus, or may be an apparatus including the first apparatus or the second apparatus. This is not limited in this application.

It is to be understood that the communication apparatus in the fifth aspect includes a corresponding module, unit, or means (means) for implementing the method for reporting channel state information in either of the first aspect and the second aspect. The module, unit, or means may be implemented by hardware, may be implemented by software, or may be implemented by hardware executing corresponding software. The hardware or the software includes one or more modules or units configured to perform functions related to the method for reporting channel state information.

According to a sixth aspect, a communication apparatus is provided. The communication apparatus includes a processor, and the processor is configured to perform the method for reporting channel state information in any one of the possible implementations of the first aspect and the second aspect.

In a possible design solution, the communication apparatus in the sixth aspect may further include a transceiver. The transceiver may be a transceiver circuit or an interface circuit. The transceiver may be used by the communication apparatus in the sixth aspect to communicate with another communication apparatus.

In a possible design solution, the communication apparatus in the sixth aspect may further include a memory. The memory and the processor may be integrated together, or may be disposed separately. The memory may be configured to store a computer program and/or data related to the method for reporting channel state information in either of the first aspect and the second aspect.

In this application, the communication apparatus in the sixth aspect may be the first apparatus or the second apparatus, or may be a chip (system) or another component or assembly that can be disposed in the first apparatus or the second apparatus, or may be an apparatus including the first apparatus or the second apparatus. This is not limited in this application.

According to a seventh aspect, a communication apparatus is provided. The communication apparatus includes a processor, where the processor is coupled to a memory. The processor is configured to execute a computer program stored in the memory, to enable the communication apparatus to perform the method for reporting channel state information in any one of the possible implementations of the first aspect and the second aspect.

In a possible design solution, the communication apparatus in the seventh aspect may further include a transceiver. The transceiver may be a transceiver circuit or an interface circuit. The transceiver may be used by the communication apparatus in the seventh aspect to communicate with another communication apparatus.

In this application, the communication apparatus in the seventh aspect may be the first apparatus or the second apparatus, or may be a chip (system) or another component or assembly that can be disposed in the first apparatus or the second apparatus, or may be an apparatus including the first apparatus or the second apparatus. This is not limited in this application.

According to an eighth aspect, a communication apparatus is provided, including a processor and a memory. The memory is configured to store a computer program, and when the processor executes the computer program, the communication apparatus is enabled to perform the method for reporting channel state information in any one of the implementations of the first aspect and the second aspect.

In a possible design solution, the communication apparatus in the eighth aspect may further include a transceiver. The transceiver may be a transceiver circuit or an interface circuit. The transceiver may be used by the communication apparatus in the eighth aspect to communicate with another communication apparatus.

In this application, the communication apparatus in the eighth aspect may be the first apparatus in the first aspect or the second apparatus in the second aspect, a chip (system) or another component or assembly that can be disposed in the first apparatus or the second apparatus, or an apparatus including the first apparatus or the second apparatus.

According to a ninth aspect, a communication apparatus is provided, including a processor. The processor is configured to: after being coupled to a memory and reading a computer program in the memory, perform, according to the computer program, the method for reporting channel state information in any one of the implementations of the first aspect and the second aspect.

In a possible design solution, the communication apparatus in the ninth aspect may further include a transceiver. The transceiver may be a transceiver circuit or an interface circuit. The transceiver may be used by the communication apparatus in the ninth aspect to communicate with another communication apparatus.

In this application, the communication apparatus in the ninth aspect may be the first apparatus or the second apparatus, or may be a chip (system) or another component or assembly that can be disposed in the first apparatus or the second apparatus, or may be an apparatus including the first apparatus or the second apparatus. This is not limited in this application.

In addition, for technical effects of the communication apparatuses in the fifth aspect to the ninth aspect, refer to the technical effects of the methods for reporting channel state information in the first aspect and the second aspect. Details are not described herein again.

According to a tenth aspect, a processor is provided. The processor is configured to perform the method for reporting channel state information in any one of the possible implementations of the first aspect and the second aspect.

According to an eleventh aspect, a communication system is provided. The communication system includes one or more first apparatuses and one or more second apparatuses.

According to a twelfth aspect, a computer-readable storage medium is provided, including a computer program or instructions. When the computer program or the instructions are run on a computer, the computer is enabled to perform the method for reporting channel state information in any one of the possible implementations of the first aspect and the second aspect.

According to a thirteenth aspect, a computer program product is provided, including a computer program or instructions. When the computer program or the instructions are run on a computer, the computer is enabled to perform the method for reporting channel state information in any one of the possible implementations of the first aspect and the second aspect.

## BRIEF DESCRIPTION OF DRAWINGS

FIG. 1 is a diagram of an architecture of a communication system according to an embodiment of this application;
FIG. 2 is a schematic flowchart of a method for reporting channel state information according to an embodiment of this application;
FIG. 3 is another schematic flowchart of a method for reporting channel state information according to an embodiment of this application;
FIG. 4 is a diagram of a multi-path angle according to an embodiment of this application;
FIG. 5 is still another schematic flowchart of a method for reporting channel state information according to an embodiment of this application;
FIG. 6 is still another schematic flowchart of a method for reporting channel state information according to an embodiment of this application;
FIG. 7 is still another schematic flowchart of a method for reporting channel state information according to an embodiment of this application;
FIG. 8 is a diagram 1 of a structure of a communication apparatus according to an embodiment of this application; and
FIG. 9 is a diagram 2 of a structure of a communication apparatus according to an embodiment of this application.

## DESCRIPTION OF EMBODIMENTS

For ease of understanding of embodiments of this application, terms in embodiments of this application are briefly described below.

1. Steering vector: The steering vector is a response of all array elements of an array antenna to a narrowband signal source with unit energy.
2. Phase change vector: A vector including a group of coefficients that represent a phase change.
3. Angle-delay power spectrum: A power distribution function of a channel in angle-delay domain.
4. Angle power spectrum: A power distribution function of a channel in angle domain.
5. Delay power spectrum: A power distribution function of a channel in delay domain.
6. Codebook vector: A vector including a column of elements in a codebook.

The following describes technical solutions of this application with reference to the accompanying drawings.

The technical solutions in embodiments of this application are applicable to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It is to be appreciated and understood that each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or descriptions. Any embodiment or design solution described as an "example" in this application should not be explained as being more preferred or having more advantages than another embodiment or design solution. Exactly, the term "example" is used to present a concept in a specific manner.

In embodiments of this application, terms "information (information)", "signal (signal)", "message (message)", "channel (channel)", and "signaling (signaling)" may sometimes be interchangeably used. It is to be noted that meanings expressed by the terms are consistent when differences of the terms are not emphasized. "Of (of)", "corresponding or relevant (corresponding, relevant)", and "corresponding (corresponding)" may sometimes be interchangeably used. It is to be noted that meanings expressed by the terms are consistent when differences of the terms are not emphasized.

In embodiments of this application, a subscript, for example, $W_1$, may sometimes be written in an incorrect form, for example, W1. Meanings expressed are consistent when differences are not emphasized.

A multiple-input and multiple-output (multiple-input and multiple-output, MIMO) technology is a core technology of a long term evolution (long term evolution, LTE) system and 5th generation (5th generation, 5G) new radio (new radio, NR). In a communication system in which the MIMO technology is used, if a sending device (for example, a network device) sends data to a receiving device (for example, a terminal device), signal precoding needs to be performed based on downlink channel state information (channel state information, CSI), so that a precoded signal matches the channel.

In a conventional related technology, a terminal device receives a reference signal from a network device, determines, based on the reference signal, a covariance matrix corresponding to a channel matrix, and further determines, based on the covariance matrix corresponding to the channel matrix, an eigen basis corresponding to the channel matrix and a superposition coefficient corresponding to the eigen basis. The terminal device feeds back, to the network device, the eigen basis corresponding to the channel matrix and the superposition coefficient corresponding to the eigen basis. After receiving the eigen basis and the superposition coefficient corresponding to the eigen basis, the network device may restore channel state information.

In the foregoing solution, a sparse characteristic of a channel in space domain (namely, angle domain) and frequency domain (namely, delay domain) is used, and characteristics related to space-domain information on different subbands (subbands) need to be fed back. As a result, the eigen basis and superposition coefficients of a full bandwidth (full bandwidth) (including all the subbands) need to be reported. The terminal device may report the superposition coefficients in the following manner: The terminal device may divide the superposition coefficients into a plurality of parts. A part of the superposition coefficients are reported to the network device based on a long periodicity, and a part of the superposition coefficients are reported to the network device based on a short periodicity. A quantity of superposition coefficients reported based on the long periodicity is related to a quantity of eigen vectors in the eigen basis and a quantity of superposition coefficients corresponding to each eigen vector in the eigen basis.

For example, the terminal device separately reports superposition coefficients in space domain and frequency domain based on a long periodicity. When a superposition coefficient matrix corresponding to the channel is $C$, and $C = C_1 \cdot C_2 \cdot C_3$, the terminal device may report $C_1$ and $C_3$ to the network device based on the long periodicity, and report $C_2$ to the network device based on a short periodicity, to restore complete channel state information. $C_1$ is a coefficient matrix including superposition coefficients corresponding to all eigen vectors in a space-domain eigen basis, and a quantity of elements in $C_1$ is a product of a quantity of the eigen vectors in the space-domain eigen basis and a quantity of the superposition coefficients corresponding to all the eigen vectors in the space-domain eigen basis. $C_3$ is a coefficient matrix including superposition coefficients corresponding to all eigen vectors in a frequency-domain eigen basis, and a quantity of elements in $C_3$ is a product of a quantity of the eigen vectors in the frequency-domain eigen basis and a quantity of the superposition coefficients corresponding to all the eigen vectors in the frequency-domain eigen basis. $C_2$ is a coefficient matrix including superposition coefficients corresponding to a group of space-frequency vectors including all the eigen vectors in the space-domain eigen basis and all the eigen vectors in the frequency-domain eigen basis, or a coefficient matrix including superposition coefficients corresponding to all the eigen vectors in the space-domain eigen basis and all the eigen vectors in the frequency-domain eigen basis. A total quantity of superposition coefficients reported by the terminal device based on the long periodicity is a total quantity of superposition coefficients in $C_1$ and $C_3$. It can be learned that overheads of the superposition coefficients fed back by the terminal device based on the long periodicity are high, and feedback efficiency is low.

It is to be understood that duration of the long periodicity is greater than duration of the short periodicity. For example, the duration of the long periodicity is a plurality of integral multiples of the duration of the short periodicity. It is to be noted that reporting based on the short periodicity is reporting based on one time of reference signal measurement, and reporting based on the long periodicity is reporting based on a plurality of times of reference signal measurement. A specific quantity of times is not specifically limited in this application. In addition, it is to be further noted that the reference signal may be a channel state information-reference signal (channel state information-reference signal, CSI-RS), a synchronization signal and a physical broadcast channel block (synchronization signal and physical broadcast channel block, SSB for short), a demodulation reference signal (demodulation reference signal, DMRS), or the like that is sent by the network device. This is not specifically limited in this application.

To resolve a problem that air interface overheads of long periodicity feedback by the terminal device are high, an embodiment of this application provides a method for reporting channel state information. In the method for reporting channel state information, a first apparatus may determine first indication information based on a channel matrix, and send the first indication information to a second apparatus. The first indication information is for constructing a first covariance matrix corresponding to the channel matrix. In this way, the first indication information for constructing the covariance matrix corresponding to the channel matrix is reported, so that reporting of a large amount of information directly for restoring the channel state information is avoided, thereby reducing feedback overheads and improving CSI feedback efficiency. In addition, the second apparatus may determine, based on the first indication information, the first covariance matrix corresponding to the channel matrix, and determine, based on the first covariance matrix corresponding to the channel matrix, an eigen basis and a superposition coefficient corresponding to the eigen basis. Further, the eigen basis and the superposition coefficient corresponding to the eigen basis may be combined with a short periodicity coefficient to restore the complete channel state information.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

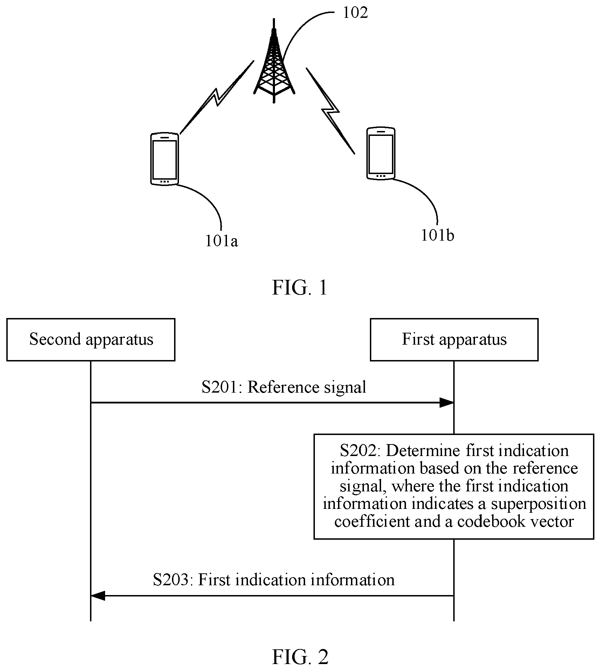

For ease of understanding embodiments of this application, a communication system shown in FIG. 1 is first used as an example to describe in detail a communication system applicable to embodiments of this application. For example, FIG. 1 is a diagram of an architecture of a communication system to which a method for reporting channel state information is applicable according to an embodiment of this application.

As shown in FIG. 1, the communication system includes first apparatuses (101a and 101b) and a second apparatus 102. The second apparatus 102 may communicate with both the first apparatus 101a and the first apparatus 101b.

The second apparatus 102 is a device that sends data, and the first apparatuses (101a and 101b) each is a device that receives data. The second apparatus 102 may be a network device or a terminal device, and the first apparatuses (101a and 101b) each may be a network device or a terminal device.

For example, the first apparatuses (101a and 101b) are network devices, and the second apparatus 102 is a network device. Alternatively, the first apparatuses (101a and 101b) are terminal devices, and the second apparatus 102 is a network device. Alternatively, the first apparatuses (101a and 101b) are terminal devices, and the second apparatus 102 is a terminal device.

It may be understood that, in this application, there may be more first apparatuses.

The network device is a device that is located on a network side of the communication system and that has a wireless transceiver function, or a chip or a chip system that can be disposed in the device. The network device includes but is not limited to: an access point (access point, AP), for example, a home gateway, a router, a server, a switch, or a bridge, in a wireless fidelity (wireless fidelity, Wi-Fi) system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, a home NodeB, HNB), a baseband unit (baseband unit, BBU), a wireless relay node, a wireless backhaul node, a transmission point (transmission and reception point, TRP; or transmission point, TP), or the like. The network device may alternatively be a gNB or a transmission point (TRP or TP) in a 5G, for example, new radio (new radio, NR) system, or one antenna panel or a group of antenna panels (including a plurality of antenna panels) of a base station in a 5G system. The network device may alternatively be a network node, for example, a baseband unit (BBU) or a distributed unit (distributed unit, DU), that constitutes a gNB or a transmission point, a road side unit (road side unit, RSU) having a base station function, or the like.

The terminal device is a terminal that accesses the communication system and that has a wireless transceiver function, or a chip or a chip system that can be disposed in the terminal. The terminal device may also be referred to as an access terminal, a subscriber unit, a subscriber station, a mobile station, a remote station, a remote terminal, a mobile device, a user terminal, a terminal, a wireless communication device, a user agent, or a user apparatus. The first apparatus in embodiments of this application may be a mobile phone (mobile phone), a tablet computer (Pad), a computer having a wireless transceiver function, a virtual reality (virtual reality, VR) first apparatus, an augmented reality (augmented reality, AR) first apparatus, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. The first apparatus in this application may alternatively be a vehicle-mounted module, a vehicle-mounted assembly, a vehicle-mounted component, a vehicle-mounted chip, or a vehicle-mounted unit that is disposed in a vehicle as one or more components or units. The vehicle may implement the method for reporting channel state information in this application by using the vehicle-mounted module, the vehicle-mounted assembly, the vehicle-mounted component, the vehicle-mounted chip, or the vehicle-mounted unit that is disposed in the vehicle.

It is to be noted that the method for reporting channel state information provided in embodiments of this application is applicable to any two nodes shown in FIG. 1, for example, the first apparatus and the second apparatus. For specific implementation, refer to the following method embodiments. Details are not described herein.

It is to be noted that, the solutions in embodiments of this application are alternatively applicable to another communication system, and a corresponding name may alternatively be replaced with a name of a corresponding function in the another communication system.

It is to be understood that FIG. 1 is merely a simplified diagram used as an example for ease of understanding. The communication system may further include other second apparatus and/or other first apparatuses not drawn in FIG. 1.

This specification specifically provides the following several embodiments. The following describes in detail the technical solutions of this application with reference to FIG. 2, FIG. 3, and FIG. 5 to FIG. 7 by using specific method embodiments. The following several specific embodiments may be combined with each other, and a same or similar concept or process may not be described repeatedly in some embodiments. It is to be noted that FIG. 2, FIG. 3, and FIG. 5 to FIG. 7 are schematic flowcharts of method embodiments of this application, and show detailed communication steps or operations of the method. However, these steps or operations are merely examples. In embodiments of this application, other operations or variations of the operations in FIG. 2, FIG. 3, and FIG. 5 to FIG. 7 may be alternatively performed. In addition, the steps in FIG. 2, FIG. 3, and FIG. 5 to FIG. 7 may be performed in a sequence different from that shown in FIG. 2, FIG. 3, and FIG. 5 to FIG. 7, and it is possible that not all the operations in FIG. 2, FIG. 3, and FIG. 5 to FIG. 7 need to be performed.

For example, FIG. 2 is a schematic flowchart of a method for reporting channel state information according to an embodiment of this application. The method for reporting channel state information is applicable to communication between the second apparatus and the first apparatus shown in FIG. 1.

As shown in FIG. 2, the method for reporting channel state information includes the following steps.

S201: A second apparatus sends a reference signal. Correspondingly, a first apparatus receives the reference signal.

For example, the reference signal may be a CSI-RS (where, for example, the second apparatus is a network device, and the first apparatus is a terminal device) or a channel sounding reference signal (sounding reference signal, SRS) (where, for example, the first apparatus is a terminal device, and the second apparatus is a network device). It is to be understood that the reference signal may alternatively be another signal, such as a cell-specific reference signal (cell-specific reference signal, CRS), an SSB, a DMRS, or a tracking reference signal (tracking reference signal, TRS). This is not limited in this application.

S202: The first apparatus determines first indication information based on the reference signal.

The first indication information is for constructing a first covariance matrix corresponding to a channel matrix. The channel matrix indicates CSI of a transmission channel between the first apparatus and the second apparatus. The first covariance matrix corresponding to the channel matrix may include one or more of the following: a first joint space-frequency covariance matrix corresponding to the channel matrix, a first space-domain covariance matrix corresponding to the channel matrix, and a first frequency-domain covariance matrix corresponding to the channel matrix.

For example, the channel matrix may be determined by the first apparatus based on the received reference signal (for example, a CSI-RS). The channel matrix may have $M \times N$ dimensions. $M \geq 1$, $N \geq 1$, and both M and N are integers. M is a quantity of transmit antenna ports of the second apparatus, and N is a quantity of frequency domain units used by the second apparatus to transmit the reference signal. The frequency domain unit may be a subcarrier (subcarrier), a resource block (resource block, RB), or a subband (subband).

It is to be noted that, in this application, "indicate" may include direct indication and indirect indication. When a piece of indication information indicates A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that are pre-agreed on (for example, stipulated in a protocol), to reduce indication overheads to some extent. In addition, a common part of all the pieces of information may be further identified and indicated in a unified manner, to reduce indication overheads caused by separately indicating same information. For example, a person skilled in the art should understand that a precoding matrix includes precoding vectors, and the precoding vectors in the precoding matrix may have a same part in terms of composition or other attributes.

Further, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application is to be understood as covering various methods that can enable a to-be-indicated party to learn of to-be-indicated information.

The to-be-indicated information may be sent as a whole, or may be divided into a plurality of pieces of sub-information for sending separately. In addition, sending periodicities and/or sending occasions of these pieces of sub-information may be the same or different. A specific sending method is not limited in this application. The sending periodicities and/or the sending occasions of these pieces of sub-information may be predefined, for example, predefined according to a protocol, or may be configured by a transmitting end device by sending configuration information to a receiving end device. By way of example but not limitation, the configuration information may include one or a combination of at least two of radio resource control signaling, media access control (media access control, MAC) layer signaling, and physical layer signaling. The radio resource control signaling includes, for example, radio resource control (radio resource control, RRC) signaling. The MAC layer signaling includes, for example, a MAC control element (control element, CE). The physical layer signaling includes, for example, downlink control information (downlink control information, DCI).

That the first apparatus determines first indication information based on the reference signal may include step 2.1 and step 2.2.

Step 2.1: The first apparatus determines the channel matrix based on the reference signal.

Step 2.2: The first apparatus determines the first indication information based on the channel matrix.

The first indication information indicates a superposition coefficient and a codebook vector, and the superposition coefficient and the codebook vector are for determining the first covariance matrix. In other words, the first covariance matrix is a covariance matrix corresponding to the channel matrix constructed based on the first indication information.

The first covariance matrix and an actual covariance matrix corresponding to the channel matrix may satisfy a preset optimization model.

For example, the preset optimization model may include the following formula (1) and formula (2). In other words, the preset optimization model may be determined according to the following formula (1) and formula (2):

$$\min_{\alpha_l} \left\| \boldsymbol{R} - \sum_l \alpha_l \, \boldsymbol{w}_l \boldsymbol{w}_l^H \right\|_F; \qquad (1)$$

$$s.t. L \leq L_{max}; \qquad (2)$$

*min* represents taking a minimum value, "$\| \ \|_F$" represents taking an F norm, $\boldsymbol{R}$ is the actual covariance matrix corresponding to the channel matrix, $\Sigma$ represents a summation operation, $0 \leq l < L$, and $l$ is an integer. $\alpha_l$ is an $l^{th}$ superposition coefficient, $\boldsymbol{w}_l$ is an $l^{th}$ codebook vector, $\boldsymbol{w}_l^H$ is a conjugate transpose of $\boldsymbol{w}_l$, *s. t.* is a constraint, $L$ is a channel multi-path quantity, $L_{max}$ is a maximum value of $L$, and both $L$ and $L_{max}$ are integers greater than 0.

In this way, when the first apparatus determines the channel matrix by measuring the reference signal and obtains $\boldsymbol{R}$, the first apparatus may obtain corresponding $\alpha_l$ and $\boldsymbol{w}_l$ by using the foregoing optimization model, so that an error between the first covariance matrix and the actual covariance matrix corresponding to the channel matrix is minimized. In other words, the first indication information may be determined based on a solution result of the preset optimization model.

It is to be noted that a dimension of $\boldsymbol{R}$ is related to a type of $\boldsymbol{R}$. For example, if $\boldsymbol{R}$ is an actual joint space-frequency covariance matrix corresponding to the channel matrix, $\boldsymbol{R}$ is a matrix of $MN \times MN$. If $\boldsymbol{R}$ is an actual space-domain covariance matrix corresponding to the channel matrix, $\boldsymbol{R}$ is a matrix of $M \times M$. If $\boldsymbol{R}$ is an actual frequency-domain covariance matrix corresponding to the channel matrix, $\boldsymbol{R}$ is a matrix of $N \times N$.

It may be understood that the superposition coefficient may be a complex number, and the codebook vector may be a basis vector. The basis vector may be a vector including a row of elements or a column of elements of a basis. The basis may include one or more of the following: a space-domain basis, a frequency-domain basis, a joint space-frequency basis, a basis including a steering vector, a basis including a phase change vector, or a basis determined based on a steering vector and a phase change vector.

It is assumed that the superposition coefficient in the solution result of the preset optimization model is a superposition coefficient $\tilde{\alpha}_l$, and the codebook vector is $\bar{w}_l$. In this case, the superposition coefficient indicated by the first indication information may be the superposition coefficient $\hat{\alpha}_l$, and the codebook vector indicated by the first indication information is $\bar{w}_l$. The superposition coefficient $\hat{\alpha}_l$ is obtained by quantizing the superposition coefficient $\tilde{\alpha}_l$.

For an implementation principle of step 2.2, refer to step 3.2, step 5.2, step 6.2, or step 7.2 in the following method embodiments. Details are not described herein.

S203: The first apparatus sends the first indication information. Correspondingly, the second apparatus receives the first indication information.

The first indication information may be carried on a physical uplink control channel (physical uplink control channel, PUCCH) or a physical uplink shared channel (physical uplink shared channel, PUSCH). A specific method used by the terminal device to send the first indication information to the network device by using a physical uplink resource may be the same as that in the conventional technology. For brevity, detailed descriptions of a specific process of the specific method are omitted herein.

For a specific implementation principle of S203, refer to S303, S503, S603, or S703 in the following method embodiments. Details are not described herein.

According to the method for reporting channel state information provided in FIG. 2, the first apparatus sends, to the second apparatus, the first indication information for constructing the first covariance matrix corresponding to the channel matrix, so that transmission of a large amount of information directly for restoring the channel state information can be avoided, thereby reducing feedback overheads and improving CSI feedback efficiency. For example, the second apparatus may determine, based on the first indication information, the first covariance matrix corresponding to the channel matrix, and determine, based on the covariance matrix corresponding to the channel matrix, an eigen basis and a long periodicity coefficient corresponding to the eigen basis. Further, the second apparatus may combine the eigen basis and the long periodicity coefficient corresponding to the eigen basis with a short periodicity coefficient, to restore the complete channel state information.

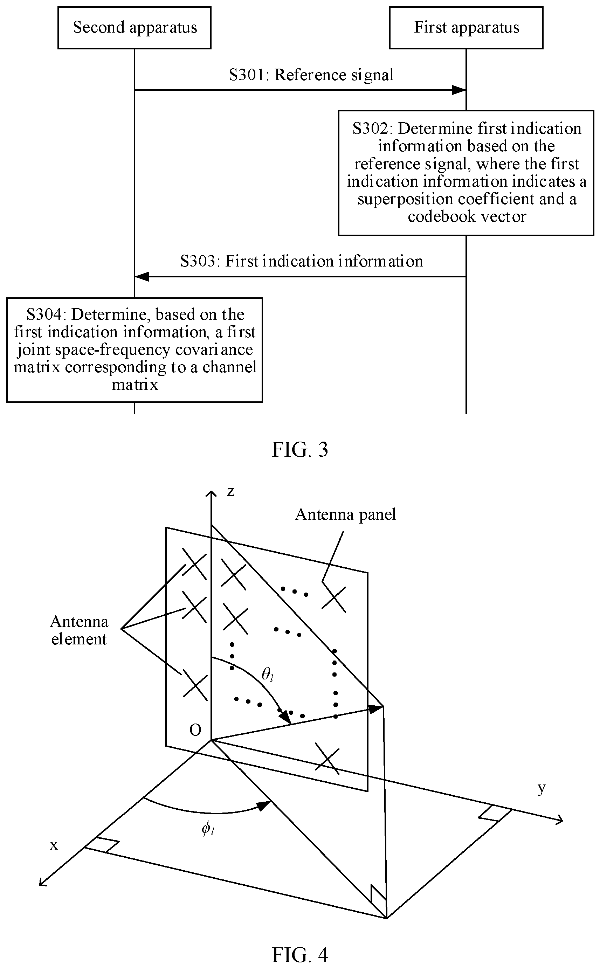

Methods for reporting channel state information provided in embodiments of this application in different cases are described below with reference to specific embodiments. In a possible implementation, the first apparatus may process and report, in a joint space-frequency domain, the first indication information related to restoring the channel state information. In this case, the first apparatus may send, to the second apparatus, the first indication information for determining the first joint space-frequency covariance matrix. As shown in FIG. 3, the method for reporting channel state information includes the following steps.

S301: A second apparatus sends a reference signal. Correspondingly, a first apparatus receives the reference signal.

For an implementation principle of S301, refer to related descriptions of S201. Details are not described herein again.

S302: The first apparatus determines first indication information based on the reference signal.

The first indication information is for constructing a first joint space-frequency covariance matrix corresponding to a channel matrix.

For example, the first indication information indicates a superposition coefficient and a codebook vector, and the superposition coefficient and the codebook vector are for determining the first joint space-frequency covariance matrix. The first joint space-frequency covariance matrix is a matrix approximate to an actual joint space-frequency covariance matrix corresponding to the channel matrix. In this case, the first covariance matrix described in S202 is correspondingly the first joint space-frequency covariance matrix.

That the first apparatus determines first indication information based on the reference signal may include step 3.1 and step 3.2.

Step 3.1: The first apparatus determines the channel matrix based on the reference signal.

For an implementation principle of step 3.1, refer to related descriptions of step 2.1. Details are not described herein again.

Step 3.2: The first apparatus determines the first indication information based on the channel matrix.

Step 3.2 may include step 3.2-1 to step 3.2-3.

Step 3.2-1: The first apparatus determines a channel column vector based on the channel matrix.

In an example, the channel column vector may satisfy a relationship shown in the following formula (3) to formula (5):

$$\boldsymbol{H} = \boldsymbol{SCF}^H; \quad (3)$$

$$\boldsymbol{h} = (\boldsymbol{F}^* \odot \boldsymbol{S})\boldsymbol{c} \in \mathbb{C}^{MN \times 1}, \text{where } \boldsymbol{c} = diag(\boldsymbol{C}); \quad (4)$$

$$(\boldsymbol{F}^* \odot \boldsymbol{S})(:, l_0) = [\boldsymbol{F}(:, l_0)]^* \otimes \boldsymbol{S}(:, l_0) \in \mathbb{C}^{MN \times 1}; \quad (5)$$

$\boldsymbol{H}$ is the channel matrix, where $\boldsymbol{H} \in \mathbb{C}^{M \times N}$. C represents a complex number. $M$ is a quantity of antenna ports of the second apparatus, and $N$ is a quantity of frequency units. $\mathbb{C}^{M \times N}$ represents a matrix with $M \times N$ dimensions. $\boldsymbol{S}$ is a

space-domain basis, where $S \in \mathbb{C}^{M \times L_0}$. $L_0$ is a channel multi-path quantity. $\mathbb{C}^{M \times L_0}$ represents a matrix with M × $L_0$ dimensions. $C$ is a diagonal matrix, where $C \in \mathbb{C}^{L_0 \times L_0}$. $\mathbb{C}^{L_0 \times L_0}$ represents a matrix with $L_0$ × $L_0$ dimensions. $F$ is a frequency-domain basis, where $F \in \mathbb{C}^{N \times L_0}$. $\mathbb{C}^{N \times L_0}$ represents a matrix with N × $L_0$ dimensions. $F^H$ is a conjugate transpose matrix of $F$. $h$ is the channel column vector, and a dimension of $h$ is $MN$ × 1. To be specific, $h$ is a vector in a row $MN$ and a column 1. $F^*$ is a conjugate matrix of $F$. $\odot$ represents a Khatri-Rao product. *diag*( ) represents constructing a diagonal matrix, and c is a vector including a diagonal element of $C$. $\otimes$ represents a Kronecker (Kronecker) product. $\mathbb{C}^{MN \times 1}$ represents a matrix with $MN$ × 1 dimensions. $(F^* \odot S)$ [:,$l_0$] represents a column vector including an $l_0^{th}$ column of $(F^* \odot S)$. $F(:,l_0)$ represents a column vector including an $l_0^{th}$ column of $F$. $[F(:,l_0)]^*$ represents a conjugation of $F(:, l_0)$. $S(:, l_0)$ represents a column vector including an $l_0^{th}$ column of $S$. $0 < l_0 < L_0$. $M$ and $N$ are both positive integers.

In another example, the channel column vector $h$ and the channel matrix may satisfy a relationship shown in the following formula (6):

$$h = \begin{bmatrix} H(:,1) \\ H(:,2) \\ \cdots \\ H(:,n) \\ \cdots \\ H(:,N) \end{bmatrix}; \quad (6)$$

$n$ = 1, 2, ..., or $N$. $H(:,n)$ represents an $n^{th}$ column of the channel matrix.

Step 3.2-2: The first apparatus determines, based on the channel column vector, the actual joint space-frequency covariance matrix corresponding to the channel matrix.

For example, for a dual-polarized antenna array, the actual joint space-frequency covariance matrix corresponding to the channel matrix is an inter-polarization average joint space-frequency covariance matrix $\overline{R}_h$. The channel column vector and the actual joint space-frequency covariance matrix corresponding to the channel matrix satisfy a relationship shown in the following formula (7):

$$R_h = \overline{R}_h = \mathbb{E}\left\{ \frac{h_+ h_+^H + h_- h_-^H}{2} \right\}; \quad (7)$$

$\overline{R}_h$ is the inter-polarization average joint space-frequency covariance matrix corresponding to the channel matrix. $h_+$ is a channel column vector corresponding to a positive polarization direction (which is also referred to as a first polarization direction), and $h_-$ is a channel column vector corresponding to a negative polarization direction (which is also referred to as a second polarization direction). $h_+^H$ is a conjugate transpose of $h_+$, and $h_-^H$ is a conjugate transpose of $h_-$.

Step 3.2-3: The first apparatus determines the first indication information based on the actual joint space-frequency covariance matrix corresponding to the channel matrix.

For example, the first joint space-frequency covariance matrix and the actual joint space-frequency covariance matrix corresponding to the channel matrix satisfy a preset first optimization model. For an implementation principle of the first optimization model, refer to related descriptions of the following formula (13) and formula (14). Details are not described herein.

In this case, the actual covariance matrix $R$ corresponding to the channel matrix in the foregoing formula (1) is correspondingly the actual joint space-frequency covariance matrix $R_h$.

Further, the superposition coefficient may be a first superposition coefficient indicating a feature, for example, an amplitude and/or a phase, of an angle-delay power spectrum. The first superposition coefficient may be obtained by sampling the angle-delay power spectrum, or may be obtained by quantizing a sampling result of the angle-delay power spectrum. The codebook vector may be a vector determined based on a steering vector and a phase change vector that correspond to multiple paths. The following further describes step 3.2-3 by using a dual-polarized antenna array as an example. In a dual-polarized antenna panel, a channel column vector corresponding to an antenna in a positive polarization direction satisfies a relationship shown in the following formula (8):

$$h_+ = \sum_{l_0} c_{l_0}^+ e(\theta_{l_0}, \phi_{l_0}) \otimes e^*(\tau_{l_0}); \quad (8)$$

$c_{l_0}^+$ is a superposition coefficient on an angle-delay path corresponding to a channel in the positive polarization direction. $\theta_{l_0}$ is a pitch angle of an $l_0$th path in multiple paths. $\phi_{l_0}$ is a horizontal angle of the $l_0$th path in the multiple paths. $e(\theta_{l_0}, \phi_{l_0})$ is a steering vector corresponding to a multi-path angle $(\theta_{l_0}, \phi_{l_0})$. $\tau_{l_0}$ is a delay of the $l_0$th path in the multiple paths. $e(\tau_{l_0})$ is a phase change vector corresponding to the delay $\tau_{l_0}$. $e^*(\tau_{l_0})$ is a conjugation of $e(\tau_{l_0})$.

It may be understood that the pitch angle of the path may refer to an angle between the path and a first plane, where the first plane is a plane perpendicular to a plane on which the antenna panel (antenna panel) is located. The horizontal angle of the path may refer to an angle between the path and a second plane, where the second plane is a plane perpendicular to both the plane on which the antenna panel is located and the first plane. The following uses a three-dimensional coordinate axis as an example for description. As shown in FIG. 4, an x-axis, a *y*-axis, and a *z*-axis are perpendicular to each other, and a plane on which an antenna panel is located in a uniform planar array is parallel to a plane formed by the *y*-axis and the z-axis. In this case, a pitch angle of a path is an angle between the path and a plane on which the x-axis and the z-axis are located, and a horizontal angle of the path is an angle between a projection of the path on a plane *xOy* and the x-axis.

A channel column vector corresponding to an antenna in a negative polarization direction satisfies a relationship shown in the following formula (9):

$$h_- = \sum_{l_0} c_{l_0}^- e(\theta_{l_0}, \phi_{l_0}) \otimes e^*(\tau_{l_0}); \quad (9)$$

$c_{l_0}^-$ is a superposition coefficient on an angle-delay path corresponding to a channel in the negative polarization direction.

If random phases of the multiple paths are independent of each other, and the antenna array is a dual-polarized uniform planar array, the actual joint space-frequency covariance matrix corresponding to the channel matrix may further satisfy a relationship shown in the following formula (10) and formula (11):

$$\overline{R}_h = \frac{1}{2} \mathbb{E}\{h_+ h_+^H + h_- h_-^H\}; \quad (10)$$

$$\overline{R}_h = \frac{1}{2} \sum_{l_0} \left( |c_{l_0}^+|^2 + |c_{l_0}^-|^2 \right) \left( e(\theta_{l_0}, \phi_{l_0}) e^H(\theta_{l_0}, \phi_{l_0}) \right) \otimes e^*(\tau_{l_0}) e^T(\tau_{l_0}) =$$

$$\sum_{l_0} \rho_{l_0} e(\theta_{l_0}, \phi_{l_0}) e^H(\theta_{l_0}, \phi_{l_0}) \otimes \left( e^*(\tau_{l_0}) e^T(\tau_{l_0}) \right); \quad (11)$$

$e^H(\theta_{l_0}, \phi_{l_0})$ is a conjugate transpose of $e(\theta_{l_0}, \phi_{l_0})$, and $e^T(\tau_{l_0})$ is a transpose of $e(\tau_{l_0})$.

In this case, the codebook vector may satisfy a relationship shown in the following formula (12):

$$w_{l_0} = e(\theta_{l_0}, \phi_{l_0}) e^*(\tau_{l_0}); \quad (12)$$

In other words, an $l_0$th codebook vector is determined based on the steering vector corresponding to the multi-path angle of the $l_0$th path and the phase change vector corresponding to the delay of the $l_0$th path. In this case, *l* in the formula (1) corresponds to $l_0$.

The first optimization model may include the following formula (13) and formula (14). In other words, the first optimization model may be determined according to the following formula (13) and formula (14):

$$\min_{\rho_{l_0}} \left\| \overline{R}_h - \sum_{l_0} \rho_{l_0} \left( e^H(\theta_{l_0}, \phi_{l_0}) \right) \otimes \left( e^*(\tau_{l_0}) e^T(\tau_{l_0}) \right) \right\|_F; \quad (13)$$

$$s.t. \begin{cases} \rho_{l_0} > 0 \\ L_0 \leq L_{max}^{FS} \end{cases}; \quad (14)$$

$\rho_{l_0}$ is an $l_0$th first superposition coefficient (namely, a first superposition coefficient corresponding to the $l_0$th path). $0 \le l_0 < L_0$, and $l_0$ is an integer. $L_0$ is a channel multi-path quantity. $L_{max}^{FS}$ is a maximum value of $L_0$. Both $L_0$ and $L_{max}^{FS}$ are integers greater than 0.

In this way, when the first apparatus determines the channel matrix by measuring the reference signal and obtains $\overline{R}_h$, the first apparatus may obtain corresponding $\rho_{l_0}$, $e(\theta_{l_0}, \phi_{l_0})$, and $e(\tau_{l_0})$ by using the foregoing first optimization model, so that the error between the first joint space-frequency covariance matrix and the actual joint space-frequency covariance matrix corresponding to the channel matrix is minimized. In other words, the first indication information may be determined based on a solution result of the preset second optimization model.

When the antenna array is a dual-polarized antenna array, it is assumed that, in the solution result of the first optimization model, a multi-path angle is $(\tilde{\theta}_{l_0}, \tilde{\phi}_{l_0})$, a steering vector is a first steering vector $e(\tilde{\theta}_{l_0}, \tilde{\phi}_{l_0})$, a delay is $\tilde{\tau}_{l_0}$, a phase change vector corresponding to the delay $\tilde{\tau}_{l_0}$ is a first phase change vector $e(\tilde{\tau}_{l_0})$, and a first superposition coefficient representing a feature of an angle-delay power spectrum corresponding to $(\tilde{\theta}_{l_0}, \tilde{\phi}_0)$ and $\tilde{\tau}_{l_0}$ is a first joint space-frequency superposition coefficient $\tilde{\rho}_{l_0}$ (namely, the foregoing superposition coefficient $\tilde{\alpha}_l$). In this case, the codebook vector indicated by the first indication information is $\tilde{w}_{l_0}$, where $\tilde{w}_{l_0} = e(\tilde{\theta}_{l_0}, \tilde{\phi}_{l_0})e^*(\tilde{\tau}_{l_0})$. The superposition coefficient $\tilde{\alpha}_l$ indicated by the first indication information is a second joint space-frequency superposition coefficient $\hat{\rho}_{l_0}$. The second joint space-frequency superposition coefficient $\hat{\rho}_{l_0}$ is a coefficient obtained by quantizing the first joint space-frequency superposition coefficient $\tilde{\rho}_{l_0}$, and the second joint space-frequency superposition coefficient $\hat{\rho}_{l_0}$ may also represent the feature of the angle-delay power spectrum corresponding to $(\tilde{\theta}_{l_0}, \tilde{\phi}_{l_0})$ and $\tilde{\tau}_{l_0}$. It is to be noted that $(\tilde{\theta}_{l_0}, \tilde{\phi}_{l_0})$ may be an unquantized or quantized multi-path angle, and $\tilde{\tau}_{l_0}$ may be an unquantized or quantized delay.

For example, the first indication information indicates the first steering vector $e(\tilde{\theta}_{l_0}, \tilde{\phi}_{l_0})$, the first phase change vector $e(\tilde{\tau}_{l_0})$, and the second joint space-frequency superposition coefficient $\hat{\rho}_{l_0}$. In this case, the codebook vector indicated by the first indication information corresponds to the first steering vector $e(\tilde{\theta}_{l_0}, \tilde{\phi}_{l_0})$ and the first phase change vector $e(\tilde{\tau}_{l_0})$, and the superposition coefficient (namely, the superposition coefficient $\hat{\alpha}_l$) corresponds to the second joint space-frequency superposition coefficient $\hat{\rho}_{l_0}$. Alternatively, the first indication information indicates the multi-path angle $(\tilde{\theta}_{l_0}, \tilde{\phi}_{l_0})$, the delay $\tilde{\tau}_{l_0}$, and the second joint space-frequency superposition coefficient $\hat{\rho}_{l_0}$. In this case, the codebook vector indicated by the first indication information corresponds to the multi-path angle $(\tilde{\theta}_{l_0}, \tilde{\phi}_{l_0})$ and the delay $\tilde{\tau}_{l_0}$, and the superposition coefficient (namely, the superposition coefficient $\alpha_l$) corresponds to the second joint space-frequency superposition coefficient $\hat{\rho}_{l_0}$.

It is to be noted that the steering vector $e(\theta_{l_0}, \phi_{l_0})$ and the phase change vector $e(\tau_{l_0})$ are determined based on antenna form information. In this case, the method for reporting channel state information shown in FIG. 3 further includes the following step 3.3 to step 3.5.

Step 3.3: The second apparatus sends information indicating an antenna array form, and the first apparatus receives the information. The information includes: a horizontal element distance, a vertical element distance, a quantity of single-polarized horizontal elements, and a quantity of single-polarized vertical elements.

Step 3.4: The first apparatus determines the steering vector $e(\theta_{l_0}, \phi_{l_0})$ based on the information indicating the antenna array form.

When a dual-polarized antenna array is in the form of the uniform planar array shown in FIG. 4, the steering vector $e(\theta_{l_0}, \phi_{l_0})$ corresponding to the multi-path angle $(\theta_{l_0}, \phi_{l_0})$ satisfies a relationship shown in the following formula (15) to formula (17):

$$e(\theta_{l_0}, \phi_{l_0}) = e_h(\theta_{l_0}, \phi_{l_0}) \otimes e_v(\theta_{l_0}); \quad (15)$$

$$e_h(\theta_{l_0}, \phi_{l_0}) = \left[1, \cdots, e^{j2\pi \frac{(M_h-1)D_h \sin(\theta_{l_0})\sin(\phi_{l_0})}{\lambda_0}}\right]^T \in \mathbb{C}^{M_h \times 1}; \quad (16)$$

$$e_v(\theta_{l_0}) = \left[1, \cdots, e^{j2\pi \frac{(M_v-1)D_v \cos(\theta_{l_0})}{\lambda_0}}\right]^T \in \mathbb{C}^{M_v \times 1}; \quad (17)$$

$e_h(\theta_{l_0}, \phi_{l_0})$ is a horizontal steering vector, and $e_v(\theta_{l_0})$ is a vertical steering vector. $D_h$ is a horizontal element distance, and $D_v$ is a vertical element distance. $M_h$ is a quantity of single-polarized horizontal elements, $M_v$ is a quantity of single-polarized vertical elements, and a total quantity of elements is $M = 2M_h M_v$.

Step 3.5: The first apparatus determines the phase change vector $e(\tau_{l_0})$ based on the information indicating the antenna array form.

For example, the phase change vector $e(\tau_{l_0})$ satisfies a relationship shown in the following formula (18):

$$e\left(\tau_{l_0}\right) = \left[e^{j2\pi f_0 \tau_{l_0}}, \cdots, e^{j2\pi f_{N-1}\tau_{l_0}}\right]^T \in \mathbb{C}^{N\times 1}; \quad (18)$$

$f_0$ is a frequency of a $0^{th}$ frequency unit, $f_{N-1}$ is a frequency of an $(N-1)^{th}$ frequency unit, and $N$ is a quantity of frequency units.

In this embodiment of this application, an occurrence sequence of step 3.1 to step 3.5 is not specifically limited. For example, step 3.5 may be performed before step 3.4; or one or more of step 3.3 to step 3.5 may be performed before step 3.2-3.

S303: The first apparatus sends the first indication information. Correspondingly, the second apparatus receives the first indication information.

The first indication information may be carried on a PUCCH or a PUSCH.

Optionally, the first apparatus sends the first indication information based on a first periodicity, and the second apparatus receives the first indication information based on the first periodicity.

S304: The second apparatus determines, based on the first indication information, the first joint space-frequency covariance matrix corresponding to the channel matrix.

In other words, the first joint space-frequency covariance matrix is a joint space-frequency covariance matrix corresponding to the channel matrix determined and constructed based on the first indication information.

That the first indication information indicates the superposition coefficient $\hat{\alpha}_{l_0}$ and the codebook vector $\tilde{w}_{l_0}$ is used as an example. In this case, the first joint space-frequency covariance matrix may satisfy a relationship shown in the following formula (19):

$$\widetilde{R}_h = \sum_{l_0} \hat{\alpha}_{l_0} \widetilde{w}_{l_0} \widetilde{w}_{l_0}^H; \quad (19)$$

$\tilde{R}_h$ is the first joint space-frequency covariance matrix, $\hat{\alpha}_{l_0}$, is the superposition coefficient, $\tilde{w}_{l_0}$ is the codebook vector, and $\widetilde{w}_{l_0}^H$ is a conjugate transpose of $\tilde{w}_{l_0}$.

For example, when the antenna array is a dual-polarized antenna array, and the first indication information indicates the first steering vector $e(\tilde{\theta}_{l_0}, \tilde{\phi}_0)$, the first phase change vector $e(\tilde{\tau}_{l_0})$, and the second joint space-frequency superposition coefficient $\hat{\rho}_{l_0}$, to be specific, the codebook vector indicated by the first indication information corresponds to the first steering vector $e(\tilde{\theta}_{l_0}, \tilde{\phi}_{l_0})$ and the first phase change vector $e(\tilde{\tau}_{l_0})$, and the superposition coefficient corresponds to the second joint space-frequency superposition coefficient $\hat{\rho}_{l_0}$, the first joint space-frequency covariance matrix may satisfy a relationship shown in the following formula (20):

$$\widetilde{R}_h = \sum_{l_0} \hat{\rho}_{l_0} \left(e\left(\tilde{\theta}_{l_0}, \tilde{\phi}_{l_0}\right)e^H\left(\tilde{\theta}_{l_0}, \tilde{\phi}_{l_0}\right)\right) \otimes \left(e^*\left(\tilde{\tau}_{l_0}\right)e^T\left(\tilde{\tau}_{l_0}\right)\right); \quad (20)$$

$e^H(\tilde{\theta}_{l_0}, \tilde{\phi}_{l_0})$ is a conjugate transpose of $e(\tilde{\theta}_{l_0}, \tilde{\phi}_{l_0})$, $e^*(\tilde{\tau}_{l_0})$ is a conjugation of $e(\tilde{\tau}_{l_0})$, and $e^T(\tilde{\tau}_0)$ is a transpose of $e(\tilde{\tau}_{l_0})$.

Alternatively, when the antenna array is a dual-polarized antenna array, and the first indication information indicates the multi-path angle $(\tilde{\theta}_{l_0}, \tilde{\phi}_{l_0})$, the delay $\tilde{\tau}_{l_0}$, and $\hat{\rho}_0$, to be specific, the codebook vector indicated by the first indication information corresponds to the multi-path angle $(\tilde{\theta}_{l_0}, \tilde{\phi}_{l_0})$ and the delay $\tilde{\tau}_{l_0}$, and the superposition coefficient corresponds to the second joint space-frequency superposition coefficient $\hat{\rho}_{l_0}$, the second apparatus may first determine, according to the formula (15) to the formula (17), the steering vector $e(\theta_{l_0}, \phi_0)$ corresponding to the multi-path angle $(\theta_{l_0}, \phi_{l_0})$, and determine the phase change vector $e(\tau_{l_0})$ according to the formula (18). Then, the second apparatus determines the first joint space-frequency covariance matrix according to the formula (20).

Based on the method shown in FIG. 3, the first apparatus determines the first indication information for constructing the first joint space-frequency covariance matrix, and sends the first indication information to the second apparatus, so that reporting of a large amount of information, for example, a superposition coefficient corresponding to a joint space-frequency eigen basis, directly for restoring the channel state information can be avoided. For example, the second apparatus may determine, based on the first indication information, the first joint space-frequency covariance matrix corresponding to the channel matrix, and determine the eigen basis based on the first joint space-frequency covariance matrix corresponding to the channel matrix, to reduce an amount of data that is fed back, so that the feedback overheads can be reduced, and the CSI feedback efficiency is improved.

It is to be noted that, in this embodiment of this application, the first apparatus may report a part of superposition coefficients, for example, the superposition coefficient indicated by the first indication information, to the second apparatus based on a long periodicity (namely, the first periodicity), and report a part of the superposition coefficients, for example, the following first feedback coefficient, to the second apparatus based on a short periodicity (namely, a second periodicity). The second apparatus may determine the complete channel state information based on the first indication information and the first feedback coefficient.

It is to be understood that duration of the first periodicity is greater than duration of the second periodicity. For example, the duration of the first periodicity is a plurality of integral multiples of the duration of the second periodicity. It is to be noted that reporting based on the short periodicity is reporting based on one time of reference signal measurement, and reporting based on the long periodicity is reporting based on a plurality of times of reference signal measurement. A specific quantity of times is not specifically limited in this application.

Further, to enable the second apparatus to determine the complete channel state information, optionally, the method for reporting channel state information provided in FIG. 3 may further include step 3.6.

Step 3.6: The first apparatus sends second indication information. Correspondingly, the second apparatus receives the second indication information.

The second indication information indicates the first feedback coefficient.

Further, the first feedback coefficient is determined based on a first decomposition result of the first joint space-frequency covariance matrix and the channel matrix. The first decomposition result is obtained by decomposing the first joint space-frequency covariance matrix according to a first decomposition rule.

For example, the first decomposition rule may include an arrangement sequence, for example, descending order or ascending order, of elements in a diagonal matrix obtained by decomposing the first joint space-frequency covariance matrix, and a type of elements in a 1st row of a joint space-frequency eigen basis obtained by decomposing the first joint space-frequency covariance matrix, for example, a positive real number.

The following uses an example to describe a principle of obtaining the first feedback coefficient by the first apparatus.

It is assumed that the first indication information indicates the first steering vector $e(\tilde{\theta}_{l_0}, \tilde{\phi}_{l_0})$, the first phase change vector $e(\tilde{\tau}_{l_0})$, and the second joint space-frequency superposition coefficient $\hat{\rho}_{l_0}$, to be specific, the codebook vector indicated by the first indication information corresponds to the first steering vector $e(\tilde{\theta}_0, \tilde{\phi}_{l_0})$ and the first phase change vector $e(\tilde{\tau}_{l_0})$, and the superposition coefficient corresponds to the second joint space-frequency superposition coefficient $\hat{\rho}_{l_0}$. Alternatively, the first indication information indicates the multi-path angle $(\tilde{\theta}_{l_0}, \tilde{\phi}_{l_0})$, the delay $\tilde{\tau}_{l_0}$, and the second joint space-frequency superposition coefficient $\hat{\rho}_{l_0}$, to be specific, the codebook vector indicated by the first indication information corresponds to the multi-path angle $(\tilde{\theta}_{l_0}, \tilde{\phi}_{l_0})$ and the delay $\tilde{\tau}_0$, the superposition coefficient corresponds to the second joint space-frequency superposition coefficient $\hat{\rho}_{l_0}$, and the channel matrix determined by the first apparatus is $H$. In this case, the method for reporting channel state information provided in FIG. 3 may further include step 3.6-1 to step 3.6-5.

Step 3.6-1: The first apparatus determines the first joint space-frequency covariance matrix based on the first indication information. The first joint space-frequency covariance matrix and the first indication information satisfy the relationship shown in the foregoing formula (19) or formula (20).

Step 3.6-2: The first apparatus decomposes the first joint space-frequency covariance matrix, for example, performs singular value decomposition (singular value decomposition, SVD) or eigen value decomposition (eigen value decomposition, EVD), to obtain the joint space-frequency eigen basis. The first joint space-frequency covariance matrix satisfies a relationship shown in the following formula (21):

$$\widetilde{R}_h = U \Lambda U^H; \quad (21)$$

$U$ is the joint space-frequency eigen basis of the first joint space-frequency covariance matrix, $\Lambda$ is a diagonal matrix obtained by performing SVD decomposition on the first joint space-frequency covariance matrix, and $U^H$ is a conjugate transpose of $U$.

To ensure both reporting overheads and accuracy of restored channel state information, in this embodiment of this application, an eigen vector (column vector) with large energy may be selected from the joint space-frequency eigen basis to form a valid joint space-frequency eigen basis. For example, when eigen vectors in the eigen basis are arranged in descending order of energy, a quantity of selected columns of the eigen vectors may be determined based on the energy of the eigen vectors, and an eigen vector that ranks first in the columns is preferentially selected. For details, refer to the following step 3.6-3.

Step 3.6-3: The first apparatus determines a matrix including first $P$ columns of the joint space-frequency eigen basis $U$ as a valid joint space-frequency eigen basis $\tilde{U}$.

In other words, the valid joint space-frequency eigen basis includes the first $P$ columns of the joint space-frequency eigen basis. $P$ is a positive integer.

Step 3.6-4: The first apparatus determines a joint space-frequency short periodicity feedback coefficient based on the valid joint space-frequency eigen basis $\tilde{U}$, where the joint space-frequency short periodicity feedback coefficient is a projection coefficient of the channel in a joint space-frequency domain. The joint space-frequency short periodicity feedback coefficient satisfies a relationship shown in the following formula (22):

$$C_{21} = \left( I_2 \otimes \widetilde{U} \right)^H h; \quad (22)$$

$C_{21}$ is the joint space-frequency short periodicity feedback coefficient, and $I_2$ is a unit matrix determined based on a quantity of polarized array antennas. In a case that the array antenna is a dual-polarized array antenna, $I_2 = \begin{bmatrix} 1 & 0 \\ 0 & 1 \end{bmatrix}$.

Step 3.6-5: The first apparatus quantizes a part or all of elements of the joint space-frequency short periodicity feedback coefficient, to obtain the first feedback coefficient $\hat{C}_{21}$.

In this way, a data amount of the first feedback coefficient can be reduced, thereby further reducing air interface overheads and improving the feedback efficiency.

Still further, the first indication information may further indicate a first quantized vector obtained by quantizing a 1st row of elements of first $P$ columns in the joint space-frequency eigen basis of the first decomposition result. $P$ is a positive integer.

The first quantized vector $\hat{u}$ is obtained by the first apparatus by quantizing the 1st row of the valid joint space-frequency eigen basis $\widetilde{U}$.

Because the channel state information is related to the joint space-frequency eigen basis, to ensure that a joint space-frequency eigen basis determined by the second apparatus remains consistent with the joint space-frequency eigen basis for determining the first feedback coefficient, thereby improving accuracy of the channel state information, further, the method provided in FIG. 3 may further include:
The second apparatus determines the valid joint space-frequency eigen basis of the first joint space-frequency covariance matrix according to the first decomposition rule.

For a principle of determining the valid joint space-frequency eigen basis by the second apparatus, refer to step 3.6-1 to step 3.6-3. Details are not described herein again.

Because the first joint space-frequency covariance matrix may have a multiple root, in other words, a decomposition result of the first joint space-frequency covariance matrix is not unique, in this case, to further enable the determined joint space-frequency eigen basis to be consistent with the joint space-frequency eigen basis for determining the first feedback coefficient, thereby improving the accuracy of the channel state information, still further, the first indication information further indicates the first quantized vector obtained by quantizing a 1st row of elements of the first $P$ columns in the joint space-frequency eigen basis obtained by decomposing the first joint space-frequency covariance matrix. $P$ is a positive integer.

In this way, the joint space-frequency eigen basis may be combined with the first feedback coefficient, namely, a short periodicity coefficient, so that the second apparatus can restore the complete channel state information.

In this case, that the second apparatus determines a valid joint space-frequency eigen basis of the first joint space-frequency covariance matrix according to the first decomposition rule may include: The second apparatus determines the valid joint space-frequency eigen basis of the first joint space-frequency covariance matrix according to the first decomposition rule and based on the first quantized vector.

The second apparatus determines the channel state information, for example, a channel column vector corresponding to the channel matrix, based on the valid joint space-frequency eigen basis and the first feedback coefficient.

For example, when UE has a single antenna, the channel column vector corresponding to the channel matrix and determined by the second apparatus may satisfy a relationship shown in the following formula (23):

$$h' = \left( I_2 \otimes \widetilde{U} \right) \hat{C}_{21}; \quad (23)$$

$h'$ is the channel column vector determined by the second apparatus, or may be referred to as channel state information determined by the second apparatus.

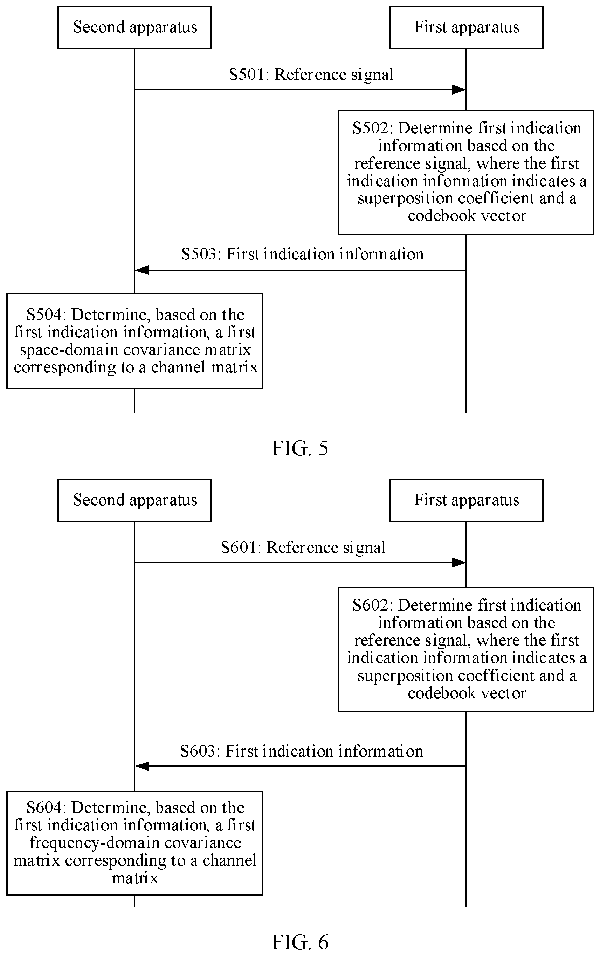

In another possible implementation, the first apparatus may process and report, in space domain, the first indication information related to restoring the channel state information. In this case, the first apparatus may send, to the second apparatus, first indication information for determining a first space-domain covariance matrix. As shown in FIG. 5, the method for reporting channel state information includes the following steps.

S501: A second apparatus sends a reference signal. Correspondingly, a first apparatus receives the reference signal.

For an implementation principle of S501, refer to related descriptions of S201. Details are not described herein again.

S502: The first apparatus determines first indication information based on the reference signal.

The first indication information is for constructing a first space-domain covariance matrix corresponding to a channel matrix.

For example, the first indication information indicates a superposition coefficient and a codebook vector. The superposition coefficient includes a second superposition coefficient indicating a feature, for example, an amplitude and/or a phase, of an angle power spectrum. The second superposition coefficient may be obtained by sampling the angle power spectrum, or may be obtained by quantizing a sampling result of the angle power spectrum. The codebook vector includes second information indicating an angle. The second superposition coefficient and the second information are for determining the first space-domain covariance matrix.

That the first apparatus determines first indication information based on the reference signal may include step 5.1 and step 5.2.

Step 5.1: The first apparatus determines the channel matrix based on the reference signal.

For an implementation principle of step 5.1, refer to related descriptions of step 2.1. Details are not described herein again.

Step 5.2: The first apparatus determines the first indication information based on the channel matrix.

For example, the first space-domain covariance matrix is a matrix approximate to an actual space-domain covariance matrix corresponding to the channel matrix, and the first space-domain covariance matrix and the actual space-domain covariance matrix satisfy a preset second optimization model.

In this case, the actual covariance matrix $R$ corresponding to the channel matrix in the foregoing formula (1) is correspondingly an actual space-domain covariance matrix $R_h^S$.

The second information may be indicated by using a steering vector corresponding to each multi-path angle (an angle of each of multiple paths), or a multi-path angle of each of multiple paths. In other words, the first indication information may indicate the second superposition coefficient and the steering vector corresponding to each multi-path angle. Alternatively, the first indication information may indicate the second superposition coefficient and the multi-path angle of each of the multiple paths.

Optionally, the second optimization model may include a formula (24) and a formula (25). In other words, the second optimization model may be determined according to the formula (24) and the formula (25):

$$\min_{\rho_{l_1}^S} \left\| R_h^S - \sum_{l_1} \rho_{l_1}^S \left( e(\theta_{l_1}, \phi_{l_1}) e^H(\theta_{l_1}, \phi_{l_1}) \right) \right\|_F; \quad (24)$$

$$s.t. \begin{cases} \rho_{l_1}^S > 0 \\ L_1 \leq L_{max}^S \end{cases}; \quad (25)$$

$R_h^S$ is the actual space-domain covariance matrix corresponding to the channel matrix; $\rho_{l_1}^S$ is an $l_1$th second superposition coefficient, $e(\theta_{l_1}, \phi_{l_1})$ is a steering vector corresponding to an $l_1$th multi-path angle, $e^H(\theta_{l_1}, \phi_{l_1})$ is a conjugate transpose of $e(\theta_{l_1}, \phi_{l_1})$, $L_1$ is a channel multi-path quantity in space domain, $L_{max}^S$ is a maximum value of $L_1$, both $L_1$ and $L_{max}^S$ are integers greater than 0, $0 \leq l_1 < L_1$, and $l_1$ is an integer.

In this way, when the first apparatus determines the channel matrix by measuring the reference signal and obtains $R_h^S$, the first apparatus may obtain corresponding $R_h^S$ and $e(\theta_{l_1}, \phi_1)$ by using the foregoing second optimization model, so that an error between the first space-domain covariance matrix and the actual space-domain covariance matrix corresponding to the channel matrix is minimized. In other words, the first indication information may be determined based on a solution result of the preset second optimization model.

For an implementation principle of the steering vector $e(\theta_{l_1}, \phi_{l_1})$ corresponding to the $l_1$th multi-path angle, refer to related descriptions in step 3.3 and step 3.4. Details are not described herein again.

It is to be noted that the actual space-domain covariance matrix corresponding to the channel matrix may be determined based on the channel matrix.

For example, in a dual-polarized antenna, the actual space-domain covariance matrix corresponding to the channel matrix satisfies a relationship shown in the following formula (26):

$$R_h^S = \frac{1}{2}\mathbb{E}\{H^+(H^+)^H + H^-(H^-)^H\}; \quad (26)$$

$R_h^S$ is the actual space-domain covariance matrix corresponding to the channel matrix, $H^+$ is a channel matrix corresponding to a positive-polarized antenna, $(H^+)^H$ is a conjugate transpose of $H^+$, $H^-$ is a channel matrix corresponding to a negative-polarized antenna, and $(H^-)^H$ is a conjugate transpose of $H^-$. In this case, the first indication information may be determined based on a solution result of the preset second optimization model.

It is assumed that, in the solution result of the second optimization model, the multi-path angle is $(\tilde{\theta}_{l_1},\tilde{\phi}_{l_1})$, the steering vector is a second steering vector $e(\tilde{\theta}_{l_1},\tilde{\phi}_{l_1})$, and the second superposition coefficient indicating the feature of the angle power spectrum corresponding to $(\tilde{\theta}_{l_1},\tilde{\phi}_{l_1})$ is a first space-domain superposition coefficient $\tilde{\rho}_{l_1}^S$. In this case, the first indication information indicates the second steering vector $e(\tilde{\theta}_1,\tilde{\phi}_{l_1})$ and a second space-domain superposition coefficient $\hat{\rho}_{l_1}^S$, to be specific, the codebook vector indicated by the first indication information corresponds to the second steering vector $e(\tilde{\theta}_{l_1},\tilde{\phi}_{l_1})$, and the superposition coefficient corresponds to the second space-domain superposition coefficient $\hat{\rho}_{l_1}^S$. Alternatively, the first indication information indicates the multi-path angle $(\tilde{\theta}_{l_1},\tilde{\phi}_{l_1})$ and a second space-domain superposition coefficient $\tilde{\rho}_{l_1}^S$, to be specific, the codebook vector indicated by the first indication information corresponds to the multi-path angle $(\tilde{\theta}_{l_1},\tilde{\phi}_{l_1})$, and the superposition coefficient corresponds to the second space-domain superposition coefficient $\hat{\rho}_{l_1}^S$. The second space-domain superposition coefficient $\hat{\rho}_{l_1}^S$ is a coefficient obtained by decomposing the first space-domain superposition coefficient $\tilde{\rho}_{l_1}^S$. The codebook vector $\bar{w}_l$ corresponds to $e(\tilde{\theta}_{l_1},\tilde{\phi}_{l_1})$, and the superposition coefficient $\hat{\alpha}_l$ corresponds to the second space-domain superposition coefficient $\hat{\rho}_{l_1}^S$. In this case, $l$ in the formula (1) corresponds to $l_1$. It is to be noted that $(\tilde{\theta}_{l_1}, \tilde{\phi}_{l_1})$ is a quantized multi-path angle.

S503: The first apparatus sends the first indication information. Correspondingly, the second apparatus receives the first indication information.

The first indication information may be carried on a PUCCH or a PUSCH.

S504: The second apparatus determines, based on the first indication information, the first space-domain covariance matrix corresponding to the channel matrix.

The first indication information indicates the second steering vector $e(\tilde{\theta}_{l_1}, \tilde{\phi}_{l_1})$ and the second space-domain superposition coefficient $\hat{\rho}_{l_1}^S$, to be specific, the superposition coefficient indicated by the first indication information corresponds to the second space-domain superposition coefficient $\hat{\rho}_{l_1}^S$, and the codebook vector corresponds to the second steering vector $e(\tilde{\theta}_{l_1}, \tilde{\phi}_{l_1})$. Alternatively, the first indication information indicates the multi-path angle $(\tilde{\theta}_{l_1}, \tilde{\phi}_1)$ and the second space-domain superposition coefficient $\tilde{\rho}_{l_1}^S$, to be specific, the superposition coefficient indicated by the first indication information corresponds to $\hat{\rho}_{l_1}^S$, and the codebook vector corresponds to the multi-path angle $(\tilde{\theta}_{l_1}, \tilde{\phi}_{l_1})$. In this case, the first space-domain covariance matrix satisfies a relationship of the following formula (27):

$$\widetilde{R}_h^S = \sum_l \hat{\rho}_{l_1}^S \left( e\big(\tilde{\theta}_{l_1}, \tilde{\phi}_{l_1}\big) e^H\big(\tilde{\theta}_{l_1}, \tilde{\phi}_{l_1}\big) \right); \quad (27)$$

$\widetilde{R}_h^S$ is the first space-domain covariance matrix, and $e^H(\tilde{\theta}_{l_1}, \tilde{\phi}_{l_1})$ is a conjugate transpose of $e(\tilde{\theta}_{l_1}, \tilde{\phi}_{l_1})$.

Based on the method shown in FIG. 5, the first apparatus feeds back the first indication information for constructing the first space-domain covariance matrix, and sends the first indication information to the second apparatus, so that reporting of a large quantity of coefficients, for example, the superposition coefficient corresponding to the space-domain eigen basis, directly for restoring the channel state information can be avoided. For example, the second apparatus may determine, based on the first indication information, the first space-domain covariance matrix corresponding to the channel matrix, and determine the space-domain eigen basis based on the first space-domain covariance matrix corresponding to the channel matrix, to reduce an amount of data that is fed back, so that the feedback overheads can be reduced, and the feedback efficiency is improved.

It is to be noted that the space-domain eigen basis may be combined with a short periodicity feedback coefficient and a frequency-domain eigen basis, so that the second apparatus can restore the complete channel state information.

In still another possible implementation, the first apparatus may process and report, in frequency domain, the first indication information related to restoring the channel state information. In this case, the first apparatus may send, to the second apparatus, first indication information for determining a frequency-domain covariance matrix. As shown in FIG. 6, the method for reporting channel state information includes the following steps.

S601: A second apparatus sends a reference signal to a first apparatus. Correspondingly, the first apparatus receives the reference signal from the second apparatus.

For an implementation principle of S601, refer to related descriptions of S201. Details are not described herein again.

S602: The first apparatus determines first indication information based on the reference signal.

The first indication information is for constructing a first frequency-domain covariance matrix corresponding to a channel matrix.

For example, the first indication information indicates a superposition coefficient and a codebook vector. The superposition coefficient includes a third superposition coefficient indicating a feature, for example, an amplitude and/or a phase, of a delay power spectrum. The third superposition coefficient may be obtained by sampling the delay power spectrum, or may be obtained by quantizing a sampling result of the delay power spectrum. The codebook vector includes third information indicating a delay. The third superposition coefficient and the third information are for determining the first frequency-domain covariance matrix.

That the first apparatus determines first indication information based on the reference signal may include step 6.1 and step 6.2.

Step 6.1: The first apparatus determines the channel matrix based on the reference signal.

For an implementation principle of step 6.1, refer to related descriptions of step 2.1. Details are not described herein again.

Step 6.2: The first apparatus determines the first indication information based on the channel matrix.

For example, the first frequency-domain covariance matrix is a matrix approximate to an actual frequency-domain covariance matrix corresponding to the channel matrix, and the first frequency-domain covariance matrix and the actual frequency-domain covariance matrix satisfy a preset third optimization model.

In this case, the actual covariance matrix $R$ corresponding to the channel matrix in the foregoing formula (1) is correspondingly an actual frequency-domain covariance matrix $R_h^F$.

The third information may be indicated by using a phase change vector corresponding to a delay of each path, or a delay of each path. In other words, the first indication information may indicate the third superposition coefficient and the phase change vector corresponding to each path. Alternatively, the first indication information may indicate the third superposition coefficient and the delay of each path.

Optionally, the third optimization model may include a formula (28) and a formula (29). In other words, the third optimization model may be determined according to the formula (28) and the formula (29):

$$\min_{\rho_{l_2}^F} \left\| R_h^F - \sum_{l_2} \rho_{l_2}^F \left( e(\tau_{l_2}) e^H(\tau_{l_2}) \right) \right\|_F; \quad (28)$$

$$s.t. \begin{cases} \rho_{l_2}^F > 0 \\ L_2 \leq L_{max}^F \end{cases}; \quad (29)$$

$R_h^F$ is the actual frequency-domain covariance matrix corresponding to the channel matrix; $\rho_{l_2}^F$ is an $l_2$th third superposition coefficient, $e(\tau_{l_2})$ is an $l_2$th phase change vector, $e^H(\tau_{l_2})$ is a conjugate transpose of $e(\tau_{l_2})$, $L_2$ is a channel multi-path quantity in frequency domain, $L_{max}^F$ is a maximum value of $L_2$, both $L_2$ and $L_{max}^F$ are integers greater than 0, $0 \leq l_2 < L_2$, and $l_2$ is an integer.

In this way, when the first apparatus determines the channel matrix by measuring the reference signal and obtains $R_h^F$, an error between the first frequency-domain covariance matrix and the actual frequency-domain covariance matrix corresponding to the channel matrix can be minimized by using the second optimization model. In other words, the first indication information may be determined based on a solution result of the preset third optimization model.

It may be understood that, for an implementation principle of the $l_2^{th}$ phase change vector $e(\tau_{l_2})$, refer to related descriptions in step 3.3 and step 3.5 shown in FIG. 3. Details are not described herein again.

In addition, the actual frequency-domain covariance matrix corresponding to the foregoing channel matrix may be determined based on the channel matrix.

For example, in a dual-polarized antenna, the actual frequency-domain covariance matrix corresponding to the channel matrix satisfies a relationship shown in the following formula (30):

$$R_h^F = \mathbb{E}\{H^H H\}; \quad (30)$$

$R_h^F$ is the actual frequency-domain covariance matrix corresponding to the channel matrix, and $H$ is the channel matrix.

It is assumed that, in the solution result of the third optimization model, the delay is $\tilde{\tau}_{l_2}$, a phase change vector corresponding to the delay $\tilde{\tau}_{l_2}$, is a second phase change vector $e(\tilde{\tau}_{l_2})$, and a coefficient representing a feature of a delay power spectrum corresponding to $\tilde{\tau}_{l_2}$, is a first frequency-domain superposition coefficient $\tilde{\rho}_2$ . The first indication information indicates the second phase change vector $e(\tilde{\tau}_{l_2})$ and a second frequency-domain superposition coefficient $\hat{\rho}_{l_2}^F$ , to be specific, the codebook vector indicated by the first indication information corresponds to the second phase change vector $e(\tilde{\tau}_{l_2})$, and the superposition coefficient corresponds to the second frequency-domain superposition coefficient $\hat{\rho}_{l_2}^F$ . Alternatively, the first indication information indicates a delay $\tilde{\tau}_{l_2}$, and a second delay power spectrum $\hat{\rho}_{l_2}^F$ , to be specific, the codebook vector indicated by the first indication information corresponds to the delay $\tilde{\tau}_{l_2}$, and the superposition coefficient corresponds to the second frequency-domain superposition coefficient $\hat{\rho}_{l_2}^F$ . The second frequency-domain superposition coefficient $\hat{\rho}_{l_2}^F$ is a coefficient obtained by decomposing the first frequency-domain superposition coefficient $\tilde{\rho}_{l_2}$. In this case, the codebook vector $\tilde{w}_l$ corresponds to $e(\tilde{\tau}_2)$, the superposition coefficient $\hat{\alpha}_l$ corresponds to the second frequency-domain superposition coefficient $\hat{\rho}_{l_2}^F$ , and $l$ in the formula (1) corresponds to $l_2$. It is to be noted that $\tilde{\tau}_{l_2}$ is a quantized delay.

S603: The first apparatus sends the first indication information. Correspondingly, the second apparatus receives the first indication information.

The first indication information may be carried on a PUCCH or a PUSCH.

S604: The second apparatus determines, based on the first indication information, the first frequency-domain covariance matrix corresponding to the channel matrix.

The first frequency-domain covariance matrix satisfies a relationship shown in the following formula (31):

$$\widetilde{R}_h^F = \sum_{l_2} \hat{\rho}_{l_2}^F \left( e^*(\tilde{\tau}_{l_2}) e^T(\tilde{\tau}_{l_2}) \right); \quad (31)$$

$\widetilde{R}_h^F$ is the first frequency-domain covariance matrix. $e^*(\tilde{\tau}_{l_2})$ is a conjugation of $e(\tilde{\tau}_{l_2})$, and $e^T(\tilde{\tau}_2)$ is a transpose of $e(\tilde{\tau}_{l_2})$.

Based on the method shown in FIG. 6, the first apparatus feeds back the first indication information for constructing the first frequency-domain covariance matrix, and sends the first indication information to the second apparatus, so that reporting of a large amount of information, for example, the superposition coefficient corresponding to the frequency-domain eigen basis, directly for restoring the channel state information can be avoided. For example, the second apparatus may determine the first frequency-domain covariance matrix based on the first indication information, and determine the frequency-domain eigen basis based on the first frequency-domain covariance matrix corresponding to the channel matrix, to reduce an amount of data that is fed back, so that the feedback overheads can be reduced, and the feedback efficiency is improved.

It is to be noted that the frequency-domain eigen basis may be combined with the space-domain eigen basis and a short periodicity feedback coefficient, so that the second apparatus can restore the complete channel state information.

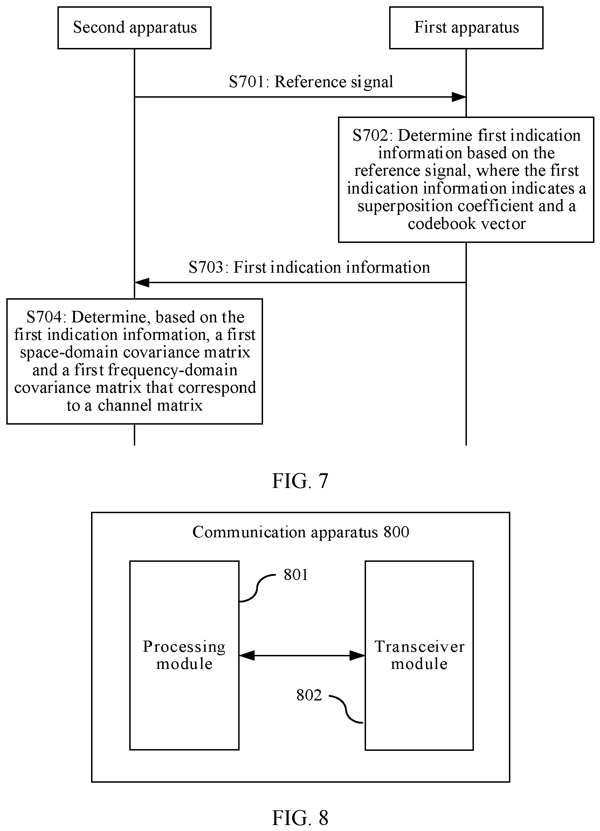

In still another possible implementation, the first apparatus may process and report, in both space domain and frequency domain, the first indication information related to restoring the channel state information. In this case, the first apparatus may send, to the second apparatus, first indication information for determining both a frequency-domain covariance matrix and a space-domain covariance matrix. As shown in FIG. 7, the method for reporting channel state information includes the following steps.

S701: A second apparatus sends a reference signal. Correspondingly, a first apparatus receives the reference signal.

For an implementation principle of S701, refer to related descriptions of S201. Details are not described herein again.

S702: The first apparatus determines first indication information based on the reference signal.

The first indication information is for constructing a first space-domain covariance matrix corresponding to a channel matrix and a first frequency-domain covariance matrix corresponding to the channel matrix.

For example, the first indication information may indicate a superposition coefficient and a codebook vector. The superposition coefficient may include a second superposition coefficient indicating a feature, for example, an amplitude and/or a phase, of an angle power spectrum and a third superposition coefficient indicating a feature, for example, an amplitude and/or a phase, of a delay power spectrum. The second superposition coefficient may be obtained by sampling the angle power spectrum, or may be obtained by quantizing a sampling result of the angle power spectrum. The third superposition coefficient may be obtained by sampling the delay power spectrum, or may be obtained by quantizing a sampling result of the delay power spectrum. The codebook vector may include second information indicating an angle and third information indicating a delay. The second superposition coefficient and the second information are for determining the first space-domain covariance matrix. The third superposition coefficient and the third information are for determining the first frequency-domain covariance matrix. The first space-domain covariance matrix and an actual space-domain covariance matrix corresponding to the channel matrix satisfy a preset second optimization model, and the first frequency-domain covariance matrix and an actual frequency-domain covariance matrix corresponding to the channel matrix satisfy a preset third optimization model.

In this case, the covariance matrix $R$ corresponding to the channel matrix in the foregoing formula (1) includes the actual space-domain covariance matrix $R_h^S$ corresponding to the channel matrix and the actual frequency-domain covariance matrix $R_h^F$ corresponding to the channel matrix.

In this way, the space-domain covariance matrix and the frequency-domain covariance matrix may be fed back.

For the second superposition coefficient, the second information, the first space-domain covariance matrix, and the second optimization model, refer to related descriptions in S502. For a specific implementation of the third superposition coefficient, the third information, the first frequency-domain covariance matrix, and the third optimization model, refer to related descriptions in S602. Details are not described herein again.

That the first apparatus determines first indication information based on the reference signal may include step 7.1 and step 7.2.

Step 7.1: The first apparatus determines the channel matrix based on the reference signal.

For an implementation principle of step 7.1, refer to related descriptions of step 2.1. Details are not described herein again.

Step 7.2: The first apparatus determines the first indication information based on the channel matrix. For an implementation principle of step 7.2, refer to related descriptions of step 5.2 and step 6.2. Details are not described herein again.

S703: The first apparatus sends the first indication information. Correspondingly, the second apparatus receives the first indication information.

The first indication information may be carried on a PUCCH or a PUSCH.

For example, the first apparatus sends the first indication information based on a third periodicity. Correspondingly, the second apparatus receives the first indication information based on the third periodicity.

For an implementation principle of S703, refer to related descriptions of S503 or S603. Details are not described herein again.

S704: The second apparatus determines, based on the first indication information, the first space-domain covariance matrix and the first frequency-domain covariance matrix that correspond to the channel matrix.

S704 may include step 7.3 and step 7.4.

Step 7.3: The second apparatus determines, based on the first indication information, the first space-domain covariance matrix corresponding to the channel matrix.

For an implementation principle of step 7.3, refer to related descriptions of S504. Details are not described herein again.

Step 7.4: The second apparatus determines, based on the first indication information, the first frequency-domain covariance matrix corresponding to the channel matrix.

For an implementation principle of step 7.4, refer to related descriptions of S604. Details are not described herein again.

Based on the method shown in FIG. 7, the first apparatus feeds back the first indication information for constructing the first space-domain covariance matrix and the first frequency-domain covariance matrix, and sends the first indication information to the second apparatus, so that reporting of a large amount of information, for example, the superposition coefficient corresponding to the space-domain eigen basis and the superposition coefficient corresponding to the frequency-domain eigen basis, directly for restoring the channel state information can be avoided. The first space-domain covariance matrix and the first frequency-domain covariance matrix are determined based on the first indication information from the first apparatus. For example, the second apparatus may determine, based on the first indication information, the first space-domain covariance matrix and the first frequency-domain covariance matrix that correspond to the channel matrix, determine the space-domain eigen basis based on the first space-domain covariance matrix corresponding to the channel matrix, and determine the frequency-domain eigen basis based on the first frequency-domain covariance matrix corresponding to the channel matrix, to reduce an amount of data that is fed back, so that the feedback overheads can be reduced, and the feedback efficiency is improved.

It is to be noted that, in this embodiment of this application, the first apparatus may report a part of the superposition coefficients, for example, the superposition coefficient indicated by the first indication information, to the second apparatus based on a long periodicity (namely, the third periodicity), and report a part of the superposition coefficients, for example, the following second feedback coefficient, to the second apparatus based on a short periodicity (namely, a fourth periodicity). The second apparatus may determine the channel state information based on the first indication information and the second feedback coefficient.

For related descriptions of the third periodicity and the fourth periodicity, refer to related descriptions of the first periodicity and the second periodicity in the method embodiment shown in FIG. 3. Details are not described herein again.

Further, to enable the second apparatus to determine the channel state information, optionally, the method for reporting channel state information provided in FIG. 7 may further include: The first apparatus sends third indication information based on the fourth periodicity. Correspondingly, the second apparatus receives the third indication information based on the fourth periodicity.

The third indication information indicates the second feedback coefficient, and the fourth periodicity is shorter than a third periodicity.

Further, the second feedback coefficient is determined based on a second decomposition result of the first space-domain covariance matrix, a third decomposition result of the first frequency-domain covariance matrix, and the channel matrix. The second decomposition result is obtained by decomposing the first space-domain covariance matrix according to a second decomposition rule, and the third decomposition result is obtained by decomposing the first frequency-domain covariance matrix according to a third decomposition rule.

For example, the second decomposition rule may include an arrangement sequence, for example, ascending order or descending order, of elements in a diagonal matrix of the first space-domain covariance matrix, and a type of elements in a 1st row of a space-domain eigen basis of the first space-domain covariance matrix, for example, a positive real number.

For example, the third decomposition rule may include an arrangement sequence, for example, ascending order or descending order, of elements in a diagonal matrix of the first frequency-domain covariance matrix, and a type of elements in a 1st row of a frequency-domain eigen basis of the first frequency-domain covariance matrix, for example, a positive real number.

A process in which the first apparatus determines the second feedback coefficient includes the following step 7.5 to step 7.8.

Step 7.5: The first apparatus determines the first space-domain covariance matrix and the first frequency-domain covariance matrix based on the third indication information.

For an implementation principle of determining the first space-domain covariance matrix by the first apparatus based on the third indication information, refer to S504. For an implementation principle of determining the first frequency-domain covariance matrix based on the third indication information, refer to S604.

Step 7.6: The first apparatus performs SVD decomposition on the first space-domain covariance matrix according to the second decomposition rule, to obtain a space-domain eigen basis. The first apparatus performs SVD decomposition on the first frequency-domain covariance matrix according to the third decomposition rule, to obtain a frequency-domain eigen basis.

The first space-domain covariance matrix satisfies a relationship shown in the following formula (32):

$$\widetilde{\boldsymbol{R}}_h^S = \boldsymbol{U}_S \boldsymbol{\Lambda}_S \boldsymbol{U}_S^H; \quad (32)$$

The first frequency-domain covariance matrix satisfies a relationship shown in the following formula (33):

$$\widetilde{R}_h^F = U_F \Lambda_F U_F^H; \quad (33)$$

$U_S$ is the space-domain eigen basis, $\Lambda_S$ is a diagonal matrix of the first space-domain covariance matrix, $U_S^H$ is a conjugate transpose matrix of $U_S$, $U_F$ is the frequency-domain eigen basis, $\Lambda_F$ is a diagonal matrix of the first frequency-domain covariance matrix, and $U_F^H$ is a conjugate transpose matrix of $U_F$.

To ensure both reporting overheads and accuracy of the restored channel state information, in this embodiment of this application, an eigen vector (column vector) with large energy may be selected from the space-domain eigen basis to form a valid space-domain eigen basis, and an eigen vector (column vector) with large energy may be selected from the frequency-domain eigen basis to form a valid frequency-domain eigen basis. For details, refer to the following step 7.7.

Step 7.7: For the space-domain eigen basis $U_S$, select the first D columns of the space-domain eigen basis $U_S$, to obtain the valid space-domain eigen basis $\tilde{U}_S$, and for the frequency-domain eigen basis $U_F$, select the first $D$ columns of the frequency-domain eigen basis $U_F$, to obtain the valid frequency-domain eigen basis $\tilde{U}_F$.

Step 7.8: Determine, based on the valid space-domain eigen basis $\tilde{U}_S$ and the valid frequency-domain eigen basis $\tilde{U}_F$, a feedback coefficient $C_{22}$ in combination with both space domain and frequency domain, and quantize (for example, representing by using a binary number) the short periodicity feedback coefficient in combination with both space domain and frequency domain, to obtain the second feedback coefficient $\hat{C}_{22}$.

The feedback coefficient $C_{22}$ in combination with both space domain and frequency domain is a coefficient matrix including superposition coefficients corresponding to a group of space-frequency vectors including all the eigen vectors in the space-domain eigen basis and all the eigen vectors in the frequency-domain eigen basis, or a coefficient matrix including superposition coefficients corresponding to all the eigen vectors in the space-domain eigen basis and all the eigen vectors in the frequency-domain eigen basis.

The short periodicity feedback coefficient in combination with both space domain and frequency domain satisfies a relationship shown in the following formula (34):

$$C_{22} = \left(I_2 \otimes \widetilde{U}_S\right)^H H \widetilde{U}_F; \quad (34)$$

Still further, the first indication information may further indicate a second quantized vector obtained by quantizing a 1st row of elements of first K columns in the space-domain eigen basis of the second decomposition result. $K$ is a positive integer.

In this case, the method shown in FIG. 7 may further include: The second apparatus determines, as the second quantized vector $\hat{u}_S$, the vector obtained by quantizing the 1st row of elements of the first K columns in the space-domain eigen basis $U_S$.

Still further, the first indication information may further indicate a third quantized vector obtained by quantizing a 1st row of elements of first $D$ columns in the frequency-domain eigen basis of the third decomposition result. $D$ is a positive integer.

In this case, the method shown in FIG. 7 may further include: The second apparatus determines, as the third quantized vector $\hat{u}_F$, the vector obtained by quantizing the 1st row of elements of the first $D$ columns in the frequency-domain eigen basis $U_F$.

Because the channel state information is related to both the space-domain eigen basis and the frequency-domain eigen basis, to ensure that a space-domain eigen basis determined by the second apparatus remains consistent with the space-domain eigen basis for determining the second feedback coefficient, and improve accuracy of the channel state information, further, the method provided in FIG. 7 may further include step 7.9.

Step 7.9: The second apparatus determines the valid space-domain eigen basis according to the second decomposition rule.

Further, that the second apparatus determines the valid space-domain eigen basis according to the second decomposition rule includes: The second apparatus determines the valid space-domain eigen basis according to the second decomposition rule and based on the second quantized vector. The valid space-domain eigen basis includes the first $K$ columns of the space-domain eigen basis of the first space-domain covariance matrix. In addition, to ensure that a frequency-domain eigen basis determined by the second apparatus remains consistent with the frequency-domain eigen basis for determining the second feedback coefficient, and improve accuracy of the channel state information, further, the method provided in FIG. 7 may further include step 7.10.

Step 7.10: The second apparatus determines the valid frequency-domain eigen basis according to the third decomposition rule. The second apparatus determines the channel state information based on the valid space-domain eigen basis, the valid frequency-domain eigen basis, and the second feedback coefficient.

The channel state information may be represented in a form of a channel matrix estimated by the second apparatus. For example, in a dual-polarized antenna array, the channel matrix estimated by the second apparatus satisfies a relationship shown in the following formula (35):

$$H' = \left(I_2 \otimes \widetilde{U}_S\right)\widehat{C}_{22}\widetilde{U}_F^H; \quad (35)$$

*H'* is the channel matrix determined by the second apparatus, or may be referred to as channel state information determined by the second apparatus.

Further, the method provided in FIG. 7 may further include: The second apparatus determines the valid frequency-domain eigen basis according to the third decomposition rule and based on the third quantized vector. The valid frequency-domain eigen basis includes the first *D* columns of the frequency-domain eigen basis of the first frequency-domain covariance matrix. In this way, the second apparatus may combine both the space-domain eigen basis and the frequency-domain eigen basis with the second feedback coefficient, namely, a short periodicity feedback coefficient, to restore the complete channel state information.

For quantization of a long periodicity feedback coefficient, in one time of long periodicity feedback, in a solution of feeding back the space-domain eigen basis and the frequency-domain eigen basis, both $C_1 \in \mathbb{C}^{B \times K}$ and $C_3 \in \mathbb{C}^{D \times T}$, a total of ($B \times K + D \times T$) complex coefficients, need to be fed back. *B* is a quantity of space-domain bases selected by the second apparatus or the first apparatus, T is a quantity of frequency domain bases selected by the second apparatus or the first apparatus, *K* represents a valid dimension of a downlink space-domain feature space, and *D* represents a valid dimension of a downlink frequency-domain feature space. However, only $(L_{max}^S + K) + (L_{max}^F + D)$ positive real numbers need to be fed back in the improved solution. For example, *B* = 64, *K* = 4, *D* = 8, *T* = 48, $L_{max}^S = 32$, and $L_{max}^F = 20$. In the solution of feeding back the space-domain eigen basis and the frequency-domain eigen basis, a baseline is that 640 complex coefficients need to be quantized and fed back. In this embodiment, 64 pieces of data, such as positive real numbers, need to be quantized and fed back, thereby greatly reducing feedback overheads. In other words, with same overheads, the overheads may be used to increase values of *K* and *D*, to improve CSI quantization accuracy, thereby improving system performance.

It is to be noted that the steering vectors and the phase change vectors in FIG. 3, FIG. 5, or FIG. 6 may all be oversampled discrete Fourier transform (discrete Fourier transform, DFT) codebooks.

"Quantization" in this application may be a process in which consecutive values (or a large quantity of possible discrete values) of a signal are approximated to a finite plurality of (or few) discrete values, for example, uniform quantization, or may be converting data represented by using a complex number into data represented by using a binary number. Details are not described herein.

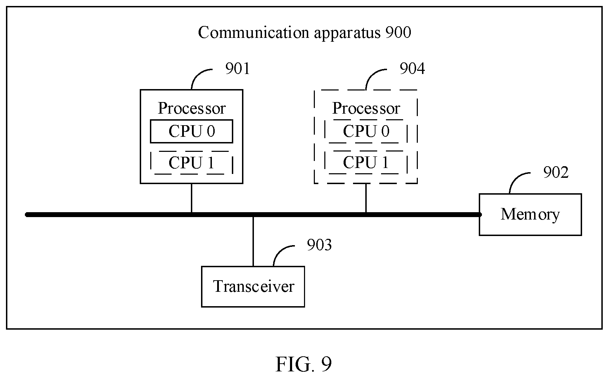

The method for reporting channel state information provided in embodiments of this application is described in detail above with reference to FIG. 3 to FIG. 7. With reference to FIG. 8 and FIG. 9, the following describes in detail a communication apparatus configured to perform the method for reporting channel state information provided in embodiments of this application.

For example, FIG. 8 is a diagram 1 of a structure of a communication apparatus according to an embodiment of this application. As shown in FIG. 8, the communication apparatus 800 includes a processing module 801 and a transceiver module 802. For ease of description, FIG. 8 shows only main components of the communication apparatus.

In some embodiments, the communication apparatus 800 is applicable to the communication system shown in FIG. 1, and performs a function of the first apparatus in the method for reporting channel state information shown in FIG. 2, FIG. 3, FIG. 5, FIG. 6, or FIG. 7.

The transceiver module is configured to receive a reference signal from a second apparatus.

The processing module 801 is configured to determine first indication information based on the reference signal.

The first indication information is for constructing a first covariance matrix corresponding to a channel matrix, and the channel matrix indicates channel state information of a channel between the communication apparatus and the second apparatus.

The transceiver module 802 is configured to send the first indication information.

In a possible design solution, the first indication information may indicate a superposition coefficient and a codebook vector, and the superposition coefficient and the codebook vector are for determining a first joint space-frequency covariance matrix.

In a possible design solution, the first joint space-frequency covariance matrix and an actual joint space-frequency covariance matrix corresponding to the channel matrix satisfy a first optimization model.

Optionally, the first optimization model may include:

$$\min_{\alpha_l} \| R - \sum_l \alpha_l \, \boldsymbol{w}_l \boldsymbol{w}_l^H \|_F;$$

and

$$s.t. L \leq L_{max}.$$

*min* represents taking a minimum value, " $\| \ \|_F$ " represents taking an F norm, $\boldsymbol{R}$ is the actual joint space-frequency covariance matrix corresponding to the channel matrix, $\Sigma$ represents a summation operation, $0 \leq l < L$, and $l$ is an integer; $\alpha_l$ is an $l$th superposition coefficient, $\boldsymbol{w}_l$ is an $l$th codebook vector, $\boldsymbol{w}_l^H$ is a conjugate transpose of $\boldsymbol{w}_l$, *s. t.* is a constraint, $L$ is a channel multi-path quantity, $L_{max}$ is a maximum value of $L$, and both $L$ and $L_{max}$ are integers greater than 0.

Optionally, the superposition coefficient includes a first superposition coefficient indicating a feature of an angle-delay power spectrum, the codebook vector includes first information indicating an angle delay, and the first superposition coefficient and the first information are for determining the first joint space-frequency covariance matrix. The preset optimization model includes the first optimization model that the first joint space-frequency covariance matrix and the actual joint space-frequency covariance matrix corresponding to the channel matrix satisfy.

Further, the first optimization model includes:

$$\min_{\rho_{l_0}} \left\| \overline{\boldsymbol{R}}_h - \sum_{l_0} \rho_{l_0} \left( \boldsymbol{e}(\theta_{l_0}, \phi_{l_0}) \boldsymbol{e}^H(\theta_{l_0}, \phi_{l_0}) \right) \otimes \left( \boldsymbol{e}^*(\tau_{l_0}) \boldsymbol{e}^T(\tau_{l_0}) \right) \right\|_F;$$

and

$$s.t. \begin{cases} \rho_{l_0} > 0 \\ L_0 \leq L^{FS}{}_{max} \end{cases}.$$

*min* represents taking a minimum value, "$\| \ \|_F$" represents taking an F norm, $\overline{\boldsymbol{R}}_h$ is the actual joint space-frequency covariance matrix corresponding to the channel matrix, $\Sigma$ represents a summation operation, $0 \leq l_0 < L_0$, and $l_0$ is an integer; $\rho_{l_0}$ is an $l_0$th first superposition coefficient, $\boldsymbol{e}(\theta_{l_0}, \phi_{l_0})$ is a steering vector corresponding to an $l_0$th multi-path angle, $\boldsymbol{e}^H(\theta_0, \phi_{l_0})$ is a conjugate transpose of $\boldsymbol{e}(\theta_{l_0}, \phi_{l_0})$, $\boldsymbol{e}(\tau_{l_0})$ is an $l_0$th phase change vector, $\boldsymbol{e}^*(\tau_{l_0})$ is a conjugation of $\boldsymbol{e}(\tau_{l_0})$, $\boldsymbol{e}^T(\tau_{l_0})$ is a transpose of $\boldsymbol{e}(\tau_{l_0})$, $\boldsymbol{e}(\theta_{l_0}, \phi_{l_0})\boldsymbol{e}^*(\tau_{l_0})$ is an $l_0$th piece of first information, *s. t.* is a constraint, $L_0$ is a channel multi-path quantity, $L^{FS}{}_{max}$ is a maximum value of $L_0$, and both $L_0$ and $L^{FS}{}_{max}$ are integers greater than 0.

In a possible design solution, the superposition coefficient may include a second superposition coefficient indicating a feature of an angle power spectrum, and the codebook vector may include second information indicating an angle. The second superposition coefficient and the second information are for determining a first space-domain covariance matrix. The preset optimization model includes a second optimization model that the first space-domain covariance matrix and an actual space-domain covariance matrix corresponding to the channel matrix satisfy.

Optionally, the second optimization model may include:

$$\min_{\rho_{l_1}^S} \left\| \boldsymbol{R}_h^S - \sum_{l_1} \rho_{l_1}^S \left( \boldsymbol{e}(\theta_{l_1}, \phi_{l_1}) \boldsymbol{e}^H(\theta_{l_1}, \phi_{l_1}) \right) \right\|_F;$$

and

$$s.t. \begin{cases} \rho_{l_1}^S > 0 \\ L_1 \leq L_{max}^S \end{cases}.$$

*min* represents taking a minimum value, "$\| \ \|_F$" represents taking an F norm, $\boldsymbol{R}_h^S$ is the actual space-domain covariance matrix corresponding to the channel matrix, $\Sigma$ represents a summation operation, $\rho_{l_1}^S$ is an $l_1$th second superposition coefficient, $\boldsymbol{e}(\theta_{l_1}, \phi_{l_1})$ is a steering vector corresponding to an $l_1$th multi-path angle, $\boldsymbol{e}^H(\theta_{l_1}, \phi_{l_1})$ is a conjugate transpose of $\boldsymbol{e}(\theta_{l_1}, \phi_{l_1})$, *s.t.* is a constraint, $L_1$ is a channel multi-path quantity in space domain, $L_{max}^S$ is a maximum value of $L_1$, both $L_1$

and $L^S_{max}$ are integers greater than 0, $0 \leq l_1 < L_1$, and $l_1$ is an integer.

In a possible design solution, the superposition coefficient may include a third superposition coefficient indicating a feature of a delay power spectrum, the codebook vector may include third information indicating a delay, and the third superposition coefficient and the third information are for determining a first frequency-domain covariance matrix. The preset optimization model includes a third optimization model that the first frequency-domain covariance matrix and an actual frequency-domain covariance matrix corresponding to the channel matrix satisfy.

Optionally, the third optimization model may include:

$$\min_{\rho^F_{l_2}} \left\| \mathbf{R}^F_h - \sum_{l_2} \rho^F_{l_2} \left( e(\tau_{l_2}) e^H(\tau_{l_2}) \right) \right\|_F;$$

and

$$s.t. \begin{cases} \rho^F_{l_2} > 0 \\ L_2 \leq L^F_{max} \end{cases}.$$

*min* represents taking a minimum value, "$\| \ \|_F$" represents taking an F norm, $\mathbf{R}^F_h$ is the actual frequency-domain covariance matrix corresponding to the channel matrix, $\Sigma$ represents a summation operation; $\rho^F_{l_2}$ is an $l_2$th third superposition coefficient, $e(\tau_{l_2})$ is an $l_2$th phase change vector, $e^H(\tau_{l_2})$ is a conjugate transpose of $e(\tau_{l_2})$, *s.t.* is a constraint, $L_2$ is a channel multi-path quantity in frequency domain, $L^F_{max}$ is a maximum value of $L_2$, both $L_2$ and $L^F_{max}$ are integers greater than 0, $0 \leq l_2 < L_2$, and $l_2$ is an integer.

In a possible design solution, the superposition coefficient may include a second superposition coefficient indicating a feature of an angle power spectrum and a third superposition coefficient indicating a feature of a delay power spectrum, the codebook vector may include second information indicating an angle and third information indicating a delay, the second superposition coefficient and the second information are for determining a first space-domain covariance matrix, and the third superposition coefficient and the third information are for determining a first frequency-domain covariance matrix. The preset optimization model includes a second optimization model that the first space-domain covariance matrix and an actual space-domain covariance matrix corresponding to the channel matrix satisfy and a third optimization model that the first frequency-domain covariance matrix and an actual frequency-domain covariance matrix corresponding to the channel matrix satisfy.

Optionally, the second optimization model may include:

$$\min_{\rho^S_{l_1}} \left\| \mathbf{R}^S_h - \sum_{l_1} \rho^S_{l_1} \left( e(\theta_{l_1}, \phi_{l_1}) e^H(\theta_{l_1}, \phi_{l_1}) \right) \right\|_F;$$

and

$$s.t. \begin{cases} \rho^S_{l_1} > 0 \\ L_1 \leq L^S_{max} \end{cases}.$$

*min* represents taking a minimum value, "$\| \ \|_F$" represents taking an F norm, $\mathbf{R}^S_h$ is the actual space-domain covariance matrix corresponding to the channel matrix, and $\Sigma$ represents a summation operation. $\rho^S_{l_1}$ is an $l_1$th second superposition coefficient, $e(\theta_{l_1}, \phi_{l_1})$ is a steering vector corresponding to an $l_1$th multi-path angle, $e^H(\theta_{l_1}, \phi_{l_1})$ is a conjugate transpose of $e(\theta_{l_1}, \phi_{l_1})$, *s.t.* is a constraint, $L_1$ is a channel multi-path quantity in space domain, $L^S_{max}$ is a maximum value of $L_1$, both $L_1$ and $L^S_{max}$ are integers greater than 0, $0 \leq l_1 < L_1$, and $l_1$ is an integer. The third optimization model may include:

$$\min_{\rho_{l_2}^F} \left\| \boldsymbol{R}_{\boldsymbol{h}}^F - \sum_{l_2} \rho_{l_2}^F \left( \boldsymbol{e}(\tau_{l_2}) \boldsymbol{e}^H(\tau_{l_2}) \right) \right\|_F ;$$

and

$$s.t. \begin{cases} \rho_{l_2}^F > 0 \\ L_2 \leq L_{max}^F \end{cases} .$$

$min$ represents taking a minimum value, "$\| \ \|_F$" represents taking an F norm, $\boldsymbol{R}_{\boldsymbol{h}}^F$ is the actual frequency-domain covariance matrix corresponding to the channel matrix, and $\Sigma$ represents a summation operation. $\rho_{l_2}^F$ is an $l_2{}^{th}$ third superposition coefficient, $\boldsymbol{e}(\tau_{l_2})$ is an $l_2{}^{th}$ phase change vector, $\boldsymbol{e}^H(\tau_{l_2})$ is a conjugate transpose of $\boldsymbol{e}(\tau_{l2})$, $s.t.$ is a constraint, $L_2$ is a channel multi-path quantity in frequency domain, $L_{max}^F$ is a maximum value of $L_2$, both $L_2$ and $L_{max}^F$ are integers greater than 0, $0 \leq l_2 < L_2$, and $l_2$ is an integer.

It is to be noted that the transceiver module is specifically configured to send the first indication information to the second apparatus based on a first periodicity. Optionally, the transceiver module 802 may be further configured to send second indication information to the second apparatus based on a second periodicity. The second indication information indicates a first feedback coefficient, and the second periodicity is shorter than the first periodicity.

Further, the first feedback coefficient is determined based on a first decomposition result of the first joint space-frequency covariance matrix and the channel matrix. The first decomposition result is obtained by decomposing the first joint space-frequency covariance matrix according to a first decomposition rule.

For example, the first decomposition rule may include an arrangement sequence of elements in a diagonal matrix obtained by decomposing the first joint space-frequency covariance matrix, and a type of elements in a 1st row of a joint space-frequency eigen basis obtained by decomposing the first joint space-frequency covariance matrix, for example, a positive real number.

Still further, the first indication information may further indicate a first quantized vector obtained by quantizing a 1st row of elements of first $P$ columns in the joint space-frequency eigen basis of the first decomposition result. $P$ is a positive integer.

It is to be noted that the transceiver module is specifically configured to send the first indication information to the second apparatus based on a third periodicity.

Optionally, the transceiver module 802 may be further configured to send third indication information to the second apparatus based on a fourth periodicity. The third indication information indicates a second feedback coefficient, and the fourth periodicity is shorter than the third periodicity.

Further, the second feedback coefficient is determined based on a second decomposition result of the first space-domain covariance matrix, a third decomposition result of the first frequency-domain covariance matrix, and the channel matrix. The second decomposition result is obtained by decomposing the first space-domain covariance matrix according to a second decomposition rule, and the third decomposition result is obtained by decomposing the first frequency-domain covariance matrix according to a third decomposition rule.

For example, the second decomposition rule may include an arrangement sequence of elements in a diagonal matrix of the first space-domain covariance matrix, and a type of elements in a 1st row of a space-domain eigen basis of the first space-domain covariance matrix, for example, a positive real number. The third decomposition rule may include an arrangement sequence of elements in a diagonal matrix of the first frequency-domain covariance matrix, and a type of elements in a 1st row of a frequency-domain eigen basis of the first frequency-domain covariance matrix, for example, a positive real number.

Still further, the first indication information may further indicate a second quantized vector obtained by quantizing a 1st row of elements of first $K$ columns in the space-domain eigen basis of the second decomposition result. $K$ is a positive integer. Still further, the first indication information may further indicate a third quantized vector obtained by quantizing a 1st row of elements of first $D$ columns in the frequency-domain eigen basis of the third decomposition result. $D$ is a positive integer.

Optionally, the transceiver module 802 may include a receiving module and a sending module. The transceiver module 802 is configured to implement a sending function and a receiving function of the communication apparatus 800.

Optionally, the communication apparatus 800 may further include a storage module (not shown in FIG. 8). The storage module stores a program or instructions. When the processing module 801 executes the program or the instructions, the communication apparatus 800 is enabled to perform a function of the first apparatus in the method for reporting channel state information shown in FIG. 2, FIG. 3, FIG. 5, FIG. 6, or FIG. 7.

It is to be understood that the processing module 801 in the communication apparatus 800 may be implemented by a processor or a processor-related circuit component, or may be a processor or a processing unit. The transceiver module 802 may be implemented by a transceiver or a transceiver-related circuit component, or may be a transceiver or a transceiver unit.

It is to be noted that the communication apparatus 800 may be the first apparatus or the second apparatus shown in FIG. 1, or may be a chip (system) or another component or assembly disposed in the first apparatus or the second apparatus, or an apparatus including the first apparatus or the second apparatus. This is not limited in this embodiment of this application.

In addition, for a technical effect of the communication apparatus 800, refer to the technical effect of the method for reporting channel state information shown in any one of FIG. 2, FIG. 3, FIG. 5, FIG. 6, or FIG. 7. Details are not described herein again.

In some other embodiments, the communication apparatus 800 is applicable to the communication system shown in FIG. 1, and performs a function of the second apparatus in the method for reporting channel state information shown in FIG. 2, FIG. 3, FIG. 5, FIG. 6, or FIG. 7.

The transceiver module 802 is configured to receive first indication information from a first apparatus.

The first indication information is for constructing a first covariance matrix corresponding to a channel matrix, and the channel matrix indicates channel state information of a channel between the first apparatus and the second apparatus.

The processing module 801 is configured to determine, based on the first indication information, a first covariance matrix corresponding to the channel matrix.

In a possible design solution, the first indication information may include a superposition coefficient and a codebook vector. The processing module is specifically configured to determine the first covariance matrix based on the superposition coefficient and the codebook vector.

Optionally, the superposition coefficient includes a first superposition coefficient indicating a feature of an angle-delay power spectrum, and the codebook vector includes first information indicating an angle delay. The processing module is specifically configured to determine a first joint space-frequency covariance matrix based on the first superposition coefficient and the first information.

It is to be noted that the transceiver module is specifically configured to receive the first indication information from the first apparatus based on a first periodicity.

Optionally, the transceiver module 802 may be further configured to receive second indication information from the first apparatus based on a second periodicity. The second indication information indicates a first feedback coefficient, and the second periodicity is shorter than the first periodicity.

For example, the first feedback coefficient is determined based on a first decomposition result of the first joint space-frequency covariance matrix and the channel matrix. The first decomposition result is obtained by decomposing the first joint space-frequency covariance matrix according to a first decomposition rule.

Further, the processing module 801 may be further configured to determine a valid joint space-frequency eigen basis of the first joint space-frequency covariance matrix according to the first decomposition rule. The valid joint space-frequency eigen basis includes first $P$ columns of a joint space-frequency eigen basis, and $P$ is a positive integer. In addition, the processing module determines the channel matrix based on the valid joint space-frequency eigen basis and the first feedback coefficient.

For example, the first decomposition rule may include an arrangement sequence of elements in a diagonal matrix obtained by decomposing the first joint space-frequency covariance matrix, and a type of elements in a $1^{st}$ row of the joint space-frequency eigen basis obtained by decomposing the first joint space-frequency covariance matrix, for example, a positive real number.

Still further, the first indication information may further indicate a first quantized vector obtained by quantizing a $1^{st}$ row of elements of first $P$ columns in the joint space-frequency eigen basis obtained by decomposing the first joint space-frequency covariance matrix. $P$ is a positive integer.

In this case, the processing module 801 is specifically configured to determine the valid joint space-frequency eigen basis of the first joint space-frequency covariance matrix according to the first decomposition rule and based on the first quantized vector.

In a possible design solution, the superposition coefficient may include a second superposition coefficient indicating a feature of an angle power spectrum, and the codebook vector may include second information indicating an angle. The processing module 801 is specifically configured to determine a first space-domain covariance matrix based on the second superposition coefficient and the second information; and

In a possible design solution, the superposition coefficient may include a third superposition coefficient indicating a feature of a delay power spectrum, and the codebook vector may include third information indicating a delay. The processing module 801 is specifically configured to determine a first frequency-domain covariance matrix based on the third superposition coefficient and the third information.

In a possible design solution, the superposition coefficient may include a second superposition coefficient indicating a feature of an angle power spectrum and a third superposition coefficient indicating a feature of a delay power spectrum, and the codebook vector may include second information indicating an angle and third information indicating a delay. The processing module 801 is specifically configured to determine a first space-domain covariance matrix based on the second superposition coefficient and the second information; and determine a first frequency-domain covariance matrix based on the third superposition coefficient and the third information.

It is to be noted that the transceiver module is specifically configured to receive the first indication information from the first apparatus based on a first periodicity.

Optionally, the transceiver module 802 may be further configured to receive third indication information from the first apparatus based on a fourth periodicity. The third indication information indicates a second feedback coefficient, and the fourth periodicity is shorter than the third periodicity.

For example, the second feedback coefficient is determined based on a second decomposition result of the first space-domain covariance matrix, a third decomposition result of the first frequency-domain covariance matrix, and the channel matrix. The second decomposition result is obtained by decomposing the first space-domain covariance matrix according to a second decomposition rule, and the third decomposition result is obtained by decomposing the first frequency-domain covariance matrix according to a third decomposition rule. For example, the second decomposition rule may include an arrangement sequence of elements in a diagonal matrix of the first space-domain covariance matrix, and a type of elements in a $1^{st}$ row of a space-domain eigen basis of the first space-domain covariance matrix. The third decomposition rule may include an arrangement sequence of elements in a diagonal matrix of the first frequency-domain covariance matrix, and a type of elements in a $1^{st}$ row of a frequency-domain eigen basis of the first frequency-domain covariance matrix, for example, a positive real number.

Further, the processing module 801 may be further configured to determine a valid space-domain eigen basis according to the second decomposition rule; determine a valid frequency-domain eigen basis according to the third decomposition rule; and determine the channel state information based on the valid space-domain eigen basis, the valid frequency-domain eigen basis, and the second feedback coefficient. Further, the first indication information may further indicate a second quantized vector obtained by quantizing a $1^{st}$ row of elements of first $K$ columns in the space-domain eigen basis obtained by decomposing the first space-domain covariance matrix.

Still further, the processing module 801 is specifically configured to determine the valid space-domain eigen basis according to the second decomposition rule and based on the second quantized vector. The valid space-domain eigen basis includes the first $K$ columns of the space-domain eigen basis of the first space-domain covariance matrix.

Further, the first indication information may further indicate a third quantized vector obtained by quantizing a $1^{st}$ row of elements of first $D$ columns in the frequency-domain eigen basis obtained by decomposing the first frequency-domain covariance matrix.

Still further, the processing module 801 is specifically configured to determine the valid frequency-domain eigen basis according to the third decomposition rule and based on the third quantized vector. The valid frequency-domain eigen basis includes the first $D$ columns of the frequency-domain eigen basis of the first frequency-domain covariance matrix.

Optionally, the transceiver module 802 may include a receiving module and a sending module. The transceiver module 802 is configured to implement a sending function and a receiving function of the communication apparatus 800.

It is to be understood that the processing module 801 in the communication apparatus 800 may be implemented by a processor or a processor-related circuit component, or may be a processor or a processing unit. The transceiver module 802 may be implemented by a transceiver or a transceiver-related circuit component, or may be a transceiver or a transceiver unit.

It is to be noted that the communication apparatus 800 may be the first apparatus or the second apparatus, or may be a chip (system) or another component or assembly that can be disposed in the first apparatus or the second apparatus, or may be an apparatus including the first apparatus or the second apparatus. This is not limited in this application.

In addition, for a technical effect of the communication apparatus 800, refer to the technical effect of the method for reporting channel state information shown in any one of FIG. 2, FIG. 3, or FIG. 5 to FIG. 7. Details are not described herein again.

For example, FIG. 9 is a diagram 2 of a structure of a communication apparatus according to an embodiment of this application. The communication apparatus may be a first apparatus or a second apparatus, or may be a chip (system) or another component or assembly that can be disposed in the first apparatus or the second apparatus. As shown in FIG. 9, the communication apparatus 900 may include a processor 901.

Optionally, the communication apparatus 900 may further include a memory 902 and/or a transceiver 903. The processor 901 is coupled to the memory 902 and the transceiver 903, for example, may be connected through a communication bus.

The following specifically describes various components of the communication apparatus 900 with reference to FIG. 9.

The processor 901 is a control center of the communication apparatus 900, and may be a processor, or may be a generic term of a plurality of processing elements. For example, the processor 901 is one or more central processing units (central processing units, CPUs) or an application-specific integrated circuit (application-specific integrated circuit, ASIC), or is configured as one or more integrated circuits for implementing embodiments of this application, for example, one or more digital signal processors (digital signal processors, DSPs) or one or more field programmable gate arrays (field programmable gate arrays, FPGAs).

Optionally, the processor 901 may perform various functions of the communication apparatus 900 by running or executing a software program stored in the memory 902 and invoking data stored in the memory 902.

In a specific implementation, in an embodiment, the processor 901 may include one or more CPUs, for example, a CPU 0 and a CPU 1 that are shown in FIG. 9.

In a specific implementation, in an embodiment, the communication apparatus 900 may alternatively include a plurality of processors, for example, the processor 901 and a processor 904 that are shown in FIG. 9. Each of the processors may be a single-core processor (single-CPU), or may be a multi-core processor (multi-CPU). The processor herein may be one or more devices, circuits, and/or processing cores configured to process data (for example, computer program instructions).

The memory 902 is configured to store a software program for executing the solution of this application, and the processor 901 controls execution of the software program. For a specific implementation, refer to the foregoing method embodiments. Details are not described herein again.

Optionally, the memory 902 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. However, this is not limited herein. The memory 902 may be integrated with the processor 901, or may exist independently, and is coupled to the processor 901 through an interface circuit (not shown in FIG. 9) in the communication apparatus 900. This is not specifically limited in this embodiment of this application.

The transceiver 903 is configured to communicate with another communication apparatus. For example, the communication apparatus 900 is a first apparatus, and the transceiver 903 may be configured to communicate with a second apparatus or communicate with another first apparatus. For another example, the communication apparatus 900 is a second apparatus, and the transceiver 903 may be configured to communicate with a first apparatus, or communicate with another second apparatus.

Optionally, the transceiver 903 may include a receiver and a transmitter (not separately shown in FIG. 9). The receiver is configured to implement a receiving function, and the transmitter is configured to implement a sending function.

Optionally, the transceiver 903 may be integrated with the processor 901, or may exist independently, and is coupled to the processor 901 through an interface circuit (not shown in FIG. 9) in the communication apparatus 900. This is not specifically limited in this embodiment of this application.

It is to be noted that the structure of the communication apparatus 900 shown in FIG. 9 does not constitute a limitation on the communication apparatus. An actual communication apparatus may include more or fewer components than those shown in the figure, or combine some components, or have different component arrangement.

In addition, for a technical effect of the communication apparatus 900, refer to the technical effect of the method for reporting channel state information in the foregoing method embodiments. Details are not described herein again.

It is to be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It is to be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It is to be understood that the term "and/or" in this specification describes only an association between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It is to be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it is to be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a second apparatus, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A method for reporting channel state information, wherein the method comprises:

    receiving, by a first apparatus, a reference signal from a second apparatus;
    determining, by the first apparatus, first indication information based on the reference signal, wherein the first indication information is for constructing a first covariance matrix corresponding to a channel matrix, and the channel matrix indicates channel state information of a channel between the first apparatus and the second apparatus; and
    sending, by the first apparatus, the first indication information to the second apparatus.

2.  The method according to claim 1, wherein the first indication information indicates a superposition coefficient and a codebook vector, and the superposition coefficient and the codebook vector are for determining the first covariance matrix.

3.  The method according to claim 1 or 2, wherein the first covariance matrix and an actual covariance matrix corresponding to the channel matrix satisfy a preset optimization model.

4.  The method according to claim 3, wherein the preset optimization model comprises:

$$\min_{\alpha_l} \|\boldsymbol{R} - \sum_l \alpha_l \, \boldsymbol{w}_l \boldsymbol{w}_l^H\|_F;$$

    and

$$s.t. L \leq L_{max},$$

    wherein
    *min* represents taking a minimum value, "$\| \ \|_F$" represents taking an F norm, $\boldsymbol{R}$ is the actual covariance matrix corresponding to the channel matrix, $\Sigma$ represents a summation operation, $0 \leq l < L$, and $l$ is an integer; $\alpha_l$ is an $l$th superposition coefficient, $\boldsymbol{w}_l$ is an $l$th codebook vector, $\boldsymbol{w}_l^H$ is a conjugate transpose of $\boldsymbol{w}_l$, *s.t.* is a constraint, $L$ is a channel multi-path quantity, $L_{max}$ is a maximum value of $L$, and both $L$ and $L_{max}$ are integers greater than 0.

5.  The method according to claim 3, wherein the superposition coefficient comprises a first superposition coefficient indicating a feature of an angle-delay power spectrum, the codebook vector comprises first information indicating an angle delay, and the first superposition coefficient and the first information are for determining a first joint space-frequency covariance matrix; and
    the preset optimization model comprises a first optimization model that the first joint space-frequency covariance matrix and an actual joint space-frequency covariance matrix corresponding to the channel matrix satisfy.

6.  The method according to claim 5, wherein the first optimization model comprises:

$$\min_{\rho_{l_0}} \left\|\overline{\boldsymbol{R}}_{\boldsymbol{h}} - \sum_{l_0} \rho_{l_0} \left( \boldsymbol{e}(\theta_{l_0}, \phi_{l_0}) \boldsymbol{e}^H(\theta_{l_0}, \phi_{l_0}) \right) \otimes \left( \boldsymbol{e}^*(\tau_{l_0}) \boldsymbol{e}^T(\tau_{l_0}) \right) \right\|_F;$$

    and

$$s.t.\begin{cases} \rho_{l_0} > 0 \\ L_0 \leq L_{max}^{FS} \end{cases},$$

wherein

*min* represents taking a minimum value, "$\| \|_F$" represents taking an F norm, $\overline{R}_h$ is the actual joint space-frequency covariance matrix corresponding to the channel matrix, $\Sigma$ represents a summation operation, $0 \leq l_0 < L_0$, and $l_0$ is an integer; $\rho_{l_0}$ is an $l_0$ th first superposition coefficient, $e(\theta_{l_0}, \phi_{l_0})$ is a steering vector corresponding to an $l_0$ th multi-path angle, $e^H(\theta_{l_0}, \phi_{l_0})$ is a conjugate transpose of $e(\theta_{l_0}, \phi_{l_0})$, $e(\tau_{l_0})$ is an $l_0$ th phase change vector, $e^*(\tau_{l_0})$ is a conjugation of $e(\tau_{l_0})$, $e^T(\tau_{l_0})$ is a transpose of $e(\tau_{l_0})$, $e(\theta_{l_0}, \phi_{l_0})e^*(\tau_{l_0})$ is an $l_0$ th piece of first information, *s. t.* is a constraint, $L_0$ is a channel multi-path quantity, $L_{max}^{FS}$ is a maximum value of $L_0$, and both $L_0$ and $L_{max}^{FS}$ are integers greater than 0.

7. The method according to claim 3, wherein the superposition coefficient comprises a second superposition coefficient indicating a feature of an angle power spectrum, the codebook vector comprises second information indicating an angle, and the second superposition coefficient and the second information are for determining a first space-domain covariance matrix; and

the preset optimization model comprises a second optimization model that the first space-domain covariance matrix and an actual space-domain covariance matrix corresponding to the channel matrix satisfy.

8. The method according to claim 7, wherein the second optimization model comprises:

$$\min_{\rho_{l_1}^S} \left\| R_h^S - \Sigma_{l_1} \rho_{l_1}^S \left( e(\theta_{l_1}, \phi_{l_1}) e^H(\theta_{l_1}, \phi_{l_1}) \right) \right\|_F;$$

and

$$s.t.\begin{cases} \rho_{l_1}^S > 0 \\ L_1 \leq L_{max}^S \end{cases},$$

wherein

*min* represents taking a minimum value, "$\| \|_F$" represents taking an F norm, $R_h^S$ is the actual space-domain covariance matrix corresponding to the channel matrix, $\Sigma$ represents a summation operation, $\rho_{l_1}^S$ is an $l_1$ th second superposition coefficient, $e(\theta_{l1}, \phi_{l1})$ is a steering vector corresponding to an $l_1$ th multi-path angle, $e^H(\theta_{l1}, \phi_{l1})$ is a conjugate transpose of $e(\theta_{l1}, \phi_{l1})$, *s.t.* is a constraint, $L_1$ is a channel multi-path quantity in space domain, $L_{max}^S$ is a maximum value of $L_1$, both $L_1$ and $L_{max}^S$ are integers greater than 0, $0 \leq l_1 < L_1$, and $l_1$ is an integer.

9. The method according to claim 3, wherein the superposition coefficient comprises a third superposition coefficient indicating a feature of a delay power spectrum, the codebook vector comprises third information indicating a delay, and the third superposition coefficient and the third information are for determining a first frequency-domain covariance matrix; and

the preset optimization model comprises a third optimization model that the first frequency-domain covariance matrix and an actual frequency-domain covariance matrix corresponding to the channel matrix satisfy.

10. The method according to claim 9, wherein the third optimization model comprises:

$$\min_{\rho_{l_2}^F} \left\| R_h^F - \Sigma_{l_2} \rho_{l_2}^F \left( e(\tau_{l_2}) e^H(\tau_{l_2}) \right) \right\|_F;$$

and

$$s.t.\begin{cases} \rho_{l_2}^F > 0 \\ L_2 \leq L_{max}^F \end{cases},$$

wherein

*min* represents taking a minimum value, "$\| \|_F$" represents taking an F norm, $R_h^F$ is the actual frequency-domain covariance matrix corresponding to the channel matrix, $\Sigma$ represents a summation operation; $\rho_{l_2}^F$ is an $l_2$th third superposition coefficient, $e(\tau_{l_2})$ is an $l_2$th phase change vector, $e^H(\tau_{l_2})$ is a conjugate transpose of $e(\tau_{l_2})$, *s.t.* is a constraint, $L_2$ is a channel multi-path quantity in frequency domain, $L_{max}^F$ is a maximum value of $L_2$, both $L_2$ and $L_{max}^F$ are integers greater than 0, $0 \leq l_2 < L_2$, and $l_2$ is an integer.

11. The method according to claim 3, wherein the superposition coefficient comprises a second superposition coefficient indicating a feature of an angle power spectrum and a third superposition coefficient indicating a feature of a delay power spectrum, the codebook vector comprises second information indicating an angle and third information indicating a delay, the second superposition coefficient and the second information are for determining a first space-domain covariance matrix, the third superposition coefficient and the third information are for determining a first frequency-domain covariance matrix, and the preset optimization model comprises a second optimization model that the first space-domain covariance matrix and an actual space-domain covariance matrix corresponding to the channel matrix satisfy and a third optimization model that the first frequency-domain covariance matrix and an actual frequency-domain covariance matrix corresponding to the channel matrix satisfy.

12. The method according to claim 11, wherein the second optimization model comprises:

$$\min_{\rho_{l_1}^S} \left\| R_h^S - \Sigma_{l_1} \rho_{l_1}^S \left( e(\theta_{l_1}, \phi_{l_1}) e^H(\theta_{l_1}, \phi_{l_1}) \right) \right\|_F;$$

and

$$s.t.\begin{cases} \rho_{l_1}^S > 0 \\ L_1 \leq L_{max}^S \end{cases},$$

wherein

*min* represents taking a minimum value, "$\| \|_F$" represents taking an F norm, $R_h^S$ is the actual space-domain covariance matrix corresponding to the channel matrix, $\Sigma$ represents a summation operation, $\rho_{l_1}^S$ is an $l_1$th second superposition coefficient, $e(\theta_{l_1}, \phi_{l_1})$ is a steering vector corresponding to an $l_1$th multi-path angle, $e^H(\theta_{l_1}, \phi_{l_1})$ is a conjugate transpose of $e(\theta_{l_1}, \phi_{l_1})$, *s.t.* is a constraint, $L_1$ is a channel multi-path quantity in space domain, $L_{max}^S$ is a maximum value of $L_1$, both $L_1$ and $L_{max}^S$ are integers greater than 0, $0 \leq l_1 < L_1$, and $l_1$ is an integer; and

the third optimization model comprises:

$$\min_{\rho_{l_2}^F} \left\| R_h^F - \Sigma_{l_2} \rho_{l_2}^F \left( e(\tau_{l_2}) e^H(\tau_{l_2}) \right) \right\|_F;$$

and

$$s.t.\begin{cases} \rho_{l_2}^F > 0 \\ L_2 \leq L_{max}^F \end{cases},$$

wherein

*min* represents taking a minimum value, "$\| \|_F$" represents taking an F norm, $\boldsymbol{R}_h^F$ is the actual frequency-domain covariance matrix corresponding to the channel matrix, $\Sigma$ represents a summation operation; $\rho_{l_2}^F$ is an $l_2$th third superposition coefficient, $\boldsymbol{e}(\tau_{l_2})$ is an $l_2$th phase change vector, $\boldsymbol{e}^H(\tau_{l2})$ is a conjugate transpose of $\boldsymbol{e}(\tau_{l2})$, *s.t.* is a constraint, $L_2$ is a channel multi-path quantity in frequency domain, $L_{max}^F$ is a maximum value of $L_2$, both $L_2$ and $L_{max}^F$ are integers greater than 0, $0 \le l_2 < L_2$, and $l_2$ is an integer.

13. The method according to claim 5 or 6, wherein the sending, by the first apparatus, the first indication information to the second apparatus comprises:
sending, by the first apparatus, the first indication information to the second apparatus based on a first periodicity.

14. The method according to claim 13, wherein the method further comprises:
sending, by the first apparatus, second indication information to the second apparatus based on a second periodicity, wherein the second indication information indicates a first feedback coefficient, and the second periodicity is shorter than the first periodicity.

15. The method according to claim 14, wherein the first feedback coefficient is determined based on a first decomposition result of the first joint space-frequency covariance matrix and the channel matrix, and the first decomposition result is obtained by decomposing the first joint space-frequency covariance matrix according to a first decomposition rule.

16. The method according to claim 15, wherein the first decomposition rule comprises an arrangement sequence of elements in a diagonal matrix obtained by decomposing the first joint space-frequency covariance matrix, and a type of elements in a 1st row of a joint space-frequency eigen basis obtained by decomposing the first joint space-frequency covariance matrix.

17. The method according to claim 15 or 16, wherein the first indication information further indicates a first quantized vector obtained by quantizing a 1st row of elements of first P columns in the joint space-frequency eigen basis of the first decomposition result, wherein P is a positive integer.

18. The method according to claim 11 or 12, wherein the sending, by the first apparatus, the first indication information to the second apparatus comprises:
sending, by the first apparatus, the first indication information to the second apparatus based on a third periodicity.

19. The method according to claim 18, wherein the method further comprises:
sending, by the first apparatus, third indication information to the second apparatus based on a fourth periodicity, wherein the third indication information indicates a second feedback coefficient, and the fourth periodicity is shorter than the third periodicity.

20. The method according to claim 19, wherein the second feedback coefficient is determined based on a second decomposition result of the first space-domain covariance matrix, a third decomposition result of the first frequency-domain covariance matrix, and the channel matrix, the second decomposition result is obtained by decomposing the first space-domain covariance matrix according to a second decomposition rule, and the third decomposition result is obtained by decomposing the first frequency-domain covariance matrix according to a third decomposition rule.

21. The method according to claim 20, wherein the second decomposition rule comprises an arrangement sequence of elements in a diagonal matrix of the first space-domain covariance matrix, and a type of elements in a 1st row of a space-domain eigen basis of the first space-domain covariance matrix.

22. The method according to claim 20 or 21, wherein the first indication information further indicates a second quantized vector obtained by quantizing a 1st row of elements of first K columns in the space-domain eigen basis of the second decomposition result, wherein K is a positive integer.

23. The method according to any one of claims 20 to 22, wherein the third decomposition rule comprises an arrangement sequence of elements in a diagonal matrix of the first frequency-domain covariance matrix, and a type of elements in a 1st row of a frequency-domain eigen basis of the first frequency-domain covariance matrix.

**24.** The method according to claim 23, wherein the first indication information further indicates a third quantized vector obtained by quantizing a $1^{st}$ row of elements of first D columns in the frequency-domain eigen basis of the third decomposition result, wherein D is a positive integer.

**25.** A method for reporting channel state information, wherein the method comprises:

receiving, by a second apparatus, first indication information from a first apparatus, wherein the first indication information is for constructing a first covariance matrix corresponding to a channel matrix, and the channel matrix indicates channel state information of a channel between the first apparatus and the second apparatus; and determining, by the second apparatus based on the first indication information, the first covariance matrix corresponding to the channel matrix.

**26.** The method according to claim 25, wherein the first indication information indicates a superposition coefficient and a codebook vector; and the determining, by the second apparatus based on the first indication information, the first covariance matrix corresponding to the channel matrix comprises:
determining, by the second apparatus, the first covariance matrix based on the superposition coefficient and the codebook vector.

**27.** The method according to claim 26, wherein the superposition coefficient comprises a first superposition coefficient indicating a feature of an angle-delay power spectrum, and the codebook vector comprises first information indicating an angle delay; and the determining, by the second apparatus, the first covariance matrix vector based on the superposition coefficient and the codebook comprises:
determining, by the second apparatus, a first joint space-frequency covariance matrix based on the first superposition coefficient and the first information.

**28.** The method according to claim 27, wherein the receiving, by a second apparatus, first indication information from a first apparatus comprises:
receiving, by the second apparatus, the first indication information from the first apparatus based on a first periodicity.

**29.** The method according to claim 28, wherein the method further comprises:
receiving, by the second apparatus, second indication information from the first apparatus based on a second periodicity, wherein the second indication information indicates a first feedback coefficient, and the second periodicity is shorter than the first periodicity.

**30.** The method according to claim 29, wherein the first feedback coefficient is determined based on a first decomposition result of the first joint space-frequency covariance matrix and the channel matrix, and the first decomposition result is obtained by decomposing the first joint space-frequency covariance matrix according to a first decomposition rule.

**31.** The method according to claim 30, wherein the method further comprises:

determining, by the second apparatus, a valid joint space-frequency eigen basis of the first joint space-frequency covariance matrix according to the first decomposition rule, wherein the valid joint space-frequency eigen basis comprises first P columns of a joint space-frequency eigen basis, and P is a positive integer; and determining, by the second apparatus, the channel matrix based on the valid joint space-frequency eigen basis and the first feedback coefficient.

**32.** The method according to claim 31, wherein the first decomposition rule comprises an arrangement sequence of elements in a diagonal matrix obtained by decomposing the first joint space-frequency covariance matrix, and a type of elements in a $1^{st}$ row of the joint space-frequency eigen basis obtained by decomposing the first joint space-frequency covariance matrix.

**33.** The method according to claim 32, wherein the first indication information further indicates a first quantized vector obtained by quantizing a $1^{st}$ row of elements of the first P columns in the joint space-frequency eigen basis obtained by decomposing the first joint space-frequency covariance matrix, wherein P is a positive integer.

**34.** The method according to claim 33, wherein the determining, by the second apparatus, a valid joint space-frequency eigen basis of the first joint space-frequency covariance matrix according to the first decomposition rule comprises:
determining, by the second apparatus, the valid joint space-frequency eigen basis of the first joint space-frequency covariance matrix according to the first decomposition rule and based on the first quantized vector.

35. The method according to claim 26, wherein the superposition coefficient comprises a second superposition coefficient indicating a feature of an angle power spectrum, and the codebook vector comprises second information indicating an angle; and the determining, by the second apparatus, the first covariance matrix based on the superposition coefficient and the codebook vector comprises:
determining, by the second apparatus, a first space-domain covariance matrix based on the second superposition coefficient and the second information.

36. The method according to claim 26, wherein the superposition coefficient comprises a third superposition coefficient indicating a feature of a delay power spectrum, and the codebook vector comprises third information indicating a delay; and the determining, by the second apparatus, the first covariance matrix based on the superposition coefficient and the codebook vector comprises:
determining, by the second apparatus, a first frequency-domain covariance matrix based on the third superposition coefficient and the third information.

37. The method according to claim 26, wherein the superposition coefficient comprises a second superposition coefficient indicating a feature of an angle power spectrum and a third superposition coefficient indicating a feature of a delay power spectrum, and the codebook vector comprises second information indicating an angle and third information indicating a delay; and the determining, by the second apparatus, the first covariance matrix based on the superposition coefficient and the codebook vector comprises:

determining, by the second apparatus, a first space-domain covariance matrix based on the second superposition coefficient and the second information; and
determining, by the second apparatus, a first frequency-domain covariance matrix based on the third superposition coefficient and the third information.

38. The method according to claim 37, wherein the receiving, by a second apparatus, first indication information from a first apparatus comprises:
receiving, by the second apparatus, the first indication information from the first apparatus based on a third periodicity.

39. The method according to claim 38, wherein the method further comprises:
receiving, by the second apparatus, third indication information from the first apparatus based on a fourth periodicity, wherein the third indication information indicates a second feedback coefficient, and the fourth periodicity is shorter than the third periodicity.

40. The method according to claim 39, wherein the second feedback coefficient is determined based on a second decomposition result of the first space-domain covariance matrix, a third decomposition result of the first frequency-domain covariance matrix, and the channel matrix, the second decomposition result is obtained by decomposing the first space-domain covariance matrix according to a second decomposition rule, and the third decomposition result is obtained by decomposing the first frequency-domain covariance matrix according to a third decomposition rule.

41. The method according to claim 40, wherein the method further comprises:

determining, by the second apparatus, a valid space-domain eigen basis according to the second decomposition rule;
determining, by the second apparatus, a valid frequency-domain eigen basis according to the third decomposition rule; and
determining, by the second apparatus, the channel state information based on the valid space-domain eigen basis, the valid frequency-domain eigen basis, and the second feedback coefficient.

42. The method according to claim 41, wherein the second decomposition rule comprises an arrangement sequence of elements in a diagonal matrix of the first space-domain covariance matrix, and a type of elements in a $1^{st}$ row of a space-domain eigen basis of the first space-domain covariance matrix.

43. The method according to claim 42, wherein the first indication information further indicates a second quantized vector obtained by quantizing a $1^{st}$ row of elements of first K columns in the space-domain eigen basis obtained by decomposing the first space-domain covariance matrix.

**44.** The method according to claim 43, wherein the determining, by the second apparatus, a valid space-domain eigen basis according to the second decomposition rule comprises:
determining, by the second apparatus, the valid space-domain eigen basis according to the second decomposition rule and based on the second quantized vector, wherein the valid space-domain eigen basis comprises the first K columns of the space-domain eigen basis of the first space-domain covariance matrix.

**45.** The method according to claim 41, wherein the third decomposition rule comprises an arrangement sequence of elements in a diagonal matrix of the first frequency-domain covariance matrix, and a type of elements in a 1st row of a frequency-domain eigen basis of the first frequency-domain covariance matrix.

**46.** The method according to claim 45, wherein the first indication information further indicates a third quantized vector obtained by quantizing a 1st row of elements of first D columns in the frequency-domain eigen basis obtained by decomposing the first frequency-domain covariance matrix.

**47.** The method according to claim 46, wherein the method further comprises:
determining, by the second apparatus, the valid frequency-domain eigen basis according to the third decomposition rule and based on the third quantized vector, wherein the valid frequency-domain eigen basis comprises the first D columns of the frequency-domain eigen basis of the first frequency-domain covariance matrix.

**48.** A communication apparatus, comprising a processing module and a transceiver module, wherein

the transceiver module is configured to receive a reference signal from a second apparatus;
the processing module is configured to determine first indication information based on the reference signal, wherein the first indication information is for constructing a first covariance matrix corresponding to a channel matrix, and the channel matrix indicates channel state information of a channel between a first apparatus and the second apparatus; and
the transceiver module is configured to send the first indication information to the second apparatus.

**49.** The apparatus according to claim 48, wherein the first indication information indicates a superposition coefficient and a codebook vector, and the superposition coefficient and the codebook vector are for determining the first covariance matrix.

**50.** The apparatus according to claim 48 or 49, wherein the first covariance matrix and an actual covariance matrix corresponding to the channel matrix satisfy a preset optimization model.

**51.** The apparatus according to claim 50, wherein the preset optimization model comprises:

$$\min_{\alpha_l} \|\boldsymbol{R} - \sum_l \alpha_l \, \boldsymbol{w}_l \boldsymbol{w}_l^H \|_F;$$

and

$$s.t. L \leq L_{max},$$

wherein
$min$ represents taking a minimum value, "$\| \ \|_F$" represents taking an F norm, $\boldsymbol{R}$ is the actual covariance matrix corresponding to the channel matrix, $\Sigma$ represents a summation operation, $0 \leq l < L$, and $l$ is an integer; $\alpha_l$ is an $l$th superposition coefficient, $\boldsymbol{w}_l$ is an $l$th codebook vector, $\boldsymbol{w}_l^H$ is a conjugate transpose of $\boldsymbol{w}_l$, $s. t.$ is a constraint, $L$ is a channel multi-path quantity, $L_{max}$ is a maximum value of $L$, and both $L$ and $L_{max}$ are integers greater than 0.

**52.** The apparatus according to claim 50, wherein the superposition coefficient comprises a first superposition coefficient indicating a feature of an angle-delay power spectrum, the codebook vector comprises first information indicating an angle delay, and the first superposition coefficient and the first information are for determining a first joint space-frequency covariance matrix; and
the preset optimization model comprises a first optimization model that the first joint space-frequency covariance matrix and an actual joint space-frequency covariance matrix corresponding to the channel matrix satisfy.

**53.** The apparatus according to claim 52, wherein the first optimization model comprises:

$$\min_{\rho_{l_0}} \left\| \overline{\boldsymbol{R}}_h - \sum_{l_0} \rho_{l_0} \left( \boldsymbol{e}(\theta_{l_0}, \phi_{l_0}) \boldsymbol{e}^H(\theta_{l_0}, \phi_{l_0}) \right) \otimes \left( \boldsymbol{e}^*(\tau_{l_0}) \boldsymbol{e}^T(\tau_{l_0}) \right) \right\|_F ;$$

and

$$s.t. \begin{cases} \rho_{l_0} > 0 \\ L_0 \leq L_{max}^{FS} \end{cases},$$

wherein

*min* represents taking a minimum value, "$\| \ \|_F$" represents taking an F norm, $\overline{\boldsymbol{R}}_h$ is the actual joint space-frequency covariance matrix corresponding to the channel matrix, $\Sigma$ represents a summation operation, $0 \leq l_0 < L_0$, and $l_0$ is an integer; $\rho_{l_0}$ is an $l_0$th first superposition coefficient, $\boldsymbol{e}(\theta_{l_0}, \phi_{l_0})$ is a steering vector corresponding to an $l_0$th multi-path angle, $\boldsymbol{e}^H(\theta_{l_0}, \phi_{l_0})$ is a conjugate transpose of $\boldsymbol{e}(\theta_{l_0}, \phi_{l_0})$, $\boldsymbol{e}(\tau_{l_0})$ is an $l_0$th phase change vector, $\boldsymbol{e}^*(\tau_0)$ is a conjugation of $\boldsymbol{e}(\tau_{l_0})$, $\boldsymbol{e}^T(\tau_{l_0})$ is a transpose of $\boldsymbol{e}(\tau_{l_0})$, $\boldsymbol{e}(\theta_0, \phi_{l_0})\boldsymbol{e}^*(\tau_{l_0})$ is an $l_0$th piece of first information, *s.t.* is a constraint, $L_0$ is a channel multi-path quantity, $L_{max}^{FS}$ is a maximum value of $L_0$, and both $L_0$ and $L_{max}^{FS}$ are integers greater than 0.

**54.** The apparatus according to claim 50, wherein the superposition coefficient comprises a second superposition coefficient indicating a feature of an angle power spectrum, the codebook vector comprises second information indicating an angle, and the second superposition coefficient and the second information are for determining a first space-domain covariance matrix; and
the preset optimization model comprises a second optimization model that the first space-domain covariance matrix and an actual space-domain covariance matrix corresponding to the channel matrix satisfy.

**55.** The apparatus according to claim 54, wherein the second optimization model comprises:

$$\min_{\rho_{l_1}^S} \left\| \boldsymbol{R}_h^S - \sum_{l_1} \rho_{l_1}^S \left( \boldsymbol{e}(\theta_{l_1}, \phi_{l_1}) \boldsymbol{e}^H(\theta_{l_1}, \phi_{l_1}) \right) \right\|_F ;$$

and

$$s.t. \begin{cases} \rho_{l_1}^S > 0 \\ L_1 \leq L_{max}^S \end{cases},$$

wherein

*min* represents taking a minimum value, "$\| \ \|_F$" represents taking an F norm, $\boldsymbol{R}_h^S$ is the actual space-domain covariance matrix corresponding to the channel matrix, $\Sigma$ represents a summation operation, $\rho_{l_1}^S$ is an $l_1$th second superposition coefficient, $\boldsymbol{e}(\theta_{l_1}, \phi_{l_1})$ is a steering vector corresponding to an $l_1$th multi-path angle, $\boldsymbol{e}^H(\theta_{l_1}, \phi_1)$ is a conjugate transpose of $\boldsymbol{e}(\theta_{l_1}, \phi_{l_1})$, *s.t.* is a constraint, $L_1$ is a channel multi-path quantity in space domain, $L_{max}^S$ is a maximum value of $L_1$, both $L_1$ and $L_{max}^S$ are integers greater than 0, $0 \leq l_1 < L_1$, and $l_1$ is an integer.

**56.** The apparatus according to claim 50, wherein the superposition coefficient comprises a third superposition coefficient indicating a feature of a delay power spectrum, the codebook vector comprises third information indicating a delay, and the third superposition coefficient and the third information are for determining a first frequency-domain covariance matrix; and
the preset optimization model comprises a third optimization model that the first frequency-domain covariance matrix and an actual frequency-domain covariance matrix corresponding to the channel matrix satisfy.

**57.** The apparatus according to claim 56, wherein the third optimization model comprises:

$$\min_{\rho_{l_2}^F} \left\| \boldsymbol{R}_{\boldsymbol{h}}^F - \Sigma_{l_2}\, \rho_{l_2}^F \left( \boldsymbol{e}(\tau_{l_2})\boldsymbol{e}^H(\tau_{l_2}) \right) \right\|_F ;$$

and

$$s.t. \begin{cases} \rho_{l_2}^F > 0 \\ L_2 \leq L_{max}^F \end{cases},$$

wherein

*min* represents taking a minimum value, "$\| \ \|_F$" represents taking an F norm, $\boldsymbol{R}_{\boldsymbol{h}}^F$ is the actual frequency-domain covariance matrix corresponding to the channel matrix, $\Sigma$ represents a summation operation; $\rho_{l_2}^F$ is an $l_2^{th}$ third superposition coefficient, $\boldsymbol{e}(\tau_{l_2})$ is an $l_2^{th}$ phase change vector, $\boldsymbol{e}^H(\tau_{l2})$ is a conjugate transpose of $\boldsymbol{e}(\tau_{l2})$, *s.t.* is a constraint, $L_2$ is a channel multi-path quantity in frequency domain, $L_{max}^F$ is a maximum value of $L_2$, both $L_2$ and $L_{max}^F$ are integers greater than 0, $0 \leq l_2 < L_2$, and $l_2$ is an integer.

58. The apparatus according to claim 50, wherein the superposition coefficient comprises a second superposition coefficient indicating a feature of an angle power spectrum and a third superposition coefficient indicating a feature of a delay power spectrum, the codebook vector comprises second information indicating an angle and third information indicating a delay, the second superposition coefficient and the second information are for determining a first space-domain covariance matrix, the third superposition coefficient and the third information are for determining a first frequency-domain covariance matrix, and the preset optimization model comprises a second optimization model that the first space-domain covariance matrix and an actual space-domain covariance matrix corresponding to the channel matrix satisfy and a third optimization model that the first frequency-domain covariance matrix and an actual frequency-domain covariance matrix corresponding to the channel matrix satisfy.

59. The apparatus according to claim 58, wherein the second optimization model comprises:

$$\min_{\rho_{l_1}^S} \left\| \boldsymbol{R}_{\boldsymbol{h}}^S - \Sigma_{l_1}\, \rho_{l_1}^S \left( \boldsymbol{e}(\theta_{l_1}, \phi_{l_1})\boldsymbol{e}^H(\theta_{l_1}, \phi_{l_1}) \right) \right\|_F ;$$

and

$$s.t. \begin{cases} \rho_{l_1}^S > 0 \\ L_1 \leq L_{max}^S \end{cases},$$

wherein

*min* represents taking a minimum value, "$\| \ \|_F$" represents taking an F norm, $\boldsymbol{R}_{\boldsymbol{h}}^S$ is the actual space-domain covariance matrix corresponding to the channel matrix, $\Sigma$ represents a summation operation, $\rho_{l_1}^S$ is an $l_1^{th}$ second superposition coefficient, $\boldsymbol{e}(\theta_{l1},\phi_{l1})$ is a steering vector corresponding to an $l_1^{th}$ multi-path angle, $\boldsymbol{e}^H(\theta_{l1},\phi_{l1})$ is a conjugate transpose of $\boldsymbol{e}(\theta_{l1},\phi_{l1})$, *s. t.* is a constraint, $L_1$ is a channel multi-path quantity in space domain, $L_{max}^S$ is a maximum value of $L_1$, both $L_1$ and $L_{max}^S$ are integers greater than 0, $0 \leq l_1 < L_1$, and $l_1$ is an integer; and
the third optimization model comprises:

$$\min_{\rho_{l_2}^F} \left\| \boldsymbol{R}_{\boldsymbol{h}}^F - \Sigma_{l_2}\, \rho_{l_2}^F \left( \boldsymbol{e}(\tau_{l_2})\boldsymbol{e}^H(\tau_{l_2}) \right) \right\|_F ;$$

and

$$s.t.\begin{cases} \rho_{l_2}^F > 0 \\ L_2 \leq L_{max}^F \end{cases},$$

wherein

$min$ represents taking a minimum value, "$\|\ \|_F$" represents taking an F norm, $\boldsymbol{R}_h^F$ is the actual frequency-domain covariance matrix corresponding to the channel matrix, $\Sigma$ represents a summation operation; $\rho_{l_2}^F$ is an $l_2$th third superposition coefficient, $\boldsymbol{e}(\tau_{l_2})$ is an $l_2$th phase change vector, $\boldsymbol{e}^H(\tau_{l_2})$ is a conjugate transpose of $\boldsymbol{e}(\tau_{l_2})$, $s.t.$ is a constraint, $L_2$ is a channel multi-path quantity in frequency domain, $L_{max}^F$ is a maximum value of $L_2$, both $L_2$ and $L_{max}^F$ are integers greater than 0, $0 \leq l_2 < L_2$, and $l_2$ is an integer.

60. The apparatus according to claim 52 or 53, wherein
the transceiver module is further configured to send the first indication information to the second apparatus based on a first periodicity.

61. The apparatus according to claim 60, wherein
the transceiver module is further configured to send second indication information to the second apparatus based on a second periodicity, wherein the second indication information indicates a first feedback coefficient, and the second periodicity is shorter than the first periodicity.

62. The apparatus according to claim 61, wherein the first feedback coefficient is determined based on a first decomposition result of the first joint space-frequency covariance matrix and the channel matrix, and the first decomposition result is obtained by decomposing the first joint space-frequency covariance matrix according to a first decomposition rule.

63. The apparatus according to claim 62, wherein the first decomposition rule comprises an arrangement sequence of elements in a diagonal matrix obtained by decomposing the first joint space-frequency covariance matrix, and a type of elements in a 1st row of a joint space-frequency eigen basis obtained by decomposing the first joint space-frequency covariance matrix.

64. The apparatus according to claim 62 or 63, wherein the first indication information further indicates a first quantized vector obtained by quantizing a 1st row of elements of first P columns in the joint space-frequency eigen basis of the first decomposition result, wherein P is a positive integer.

65. The apparatus according to claim 58 or 59, wherein
the transceiver module is further configured to send the first indication information to the second apparatus based on a third periodicity.

66. The apparatus according to claim 65, wherein
the transceiver module is further configured to send third indication information to the second apparatus based on a fourth periodicity, wherein the third indication information indicates a second feedback coefficient, and the fourth periodicity is shorter than the third periodicity.

67. The apparatus according to claim 66, wherein the second feedback coefficient is determined based on a second decomposition result of the first space-domain covariance matrix, a third decomposition result of the first frequency-domain covariance matrix, and the channel matrix, the second decomposition result is obtained by decomposing the first space-domain covariance matrix according to a second decomposition rule, and the third decomposition result is obtained by decomposing the first frequency-domain covariance matrix according to a third decomposition rule.

68. The apparatus according to claim 67, wherein the second decomposition rule comprises an arrangement sequence of elements in a diagonal matrix of the first space-domain covariance matrix, and a type of elements in a 1st row of a space-domain eigen basis of the first space-domain covariance matrix.

69. The apparatus according to claim 67 or 68, wherein the first indication information further indicates a second quantized vector obtained by quantizing a $1^{st}$ row of elements of first K columns in the space-domain eigen basis of the second decomposition result, wherein K is a positive integer.

70. The apparatus according to any one of claims 67 to 69, wherein the third decomposition rule comprises an arrangement sequence of elements in a diagonal matrix of the first frequency-domain covariance matrix, and a type of elements in a $1^{st}$ row of a frequency-domain eigen basis of the first frequency-domain covariance matrix.

71. The apparatus according to claim 70, wherein the first indication information further indicates a third quantized vector obtained by quantizing a $1^{st}$ row of elements of first D columns in the frequency-domain eigen basis of the third decomposition result, wherein D is a positive integer.

72. A communication apparatus, comprising a processing module and a transceiver module, wherein

the transceiver module is configured to receive first indication information from a first apparatus, wherein the first indication information is for constructing a first covariance matrix corresponding to a channel matrix, and the channel matrix indicates channel state information of a channel between the first apparatus and a second apparatus; and
the processing module is configured to determine, based on the first indication information, the first covariance matrix corresponding to the channel matrix.

73. The apparatus according to claim 72, wherein the first indication information indicates a superposition coefficient and a codebook vector; and
the processing module is specifically configured to determine the first covariance matrix based on the superposition coefficient and the codebook vector.

74. The apparatus according to claim 73, wherein the superposition coefficient comprises a first superposition coefficient indicating a feature of an angle-delay power spectrum, and the codebook vector comprises first information indicating an angle delay; and
the processing module is specifically configured to determine a first joint space-frequency covariance matrix based on the first superposition coefficient and the first information.

75. The apparatus according to claim 74, wherein
the transceiver module is further configured to receive the first indication information from the first apparatus based on a first periodicity.

76. The apparatus according to claim 75, wherein
the transceiver module is further configured to receive second indication information from the first apparatus based on a second periodicity, wherein the second indication information indicates a first feedback coefficient, and the second periodicity is shorter than the first periodicity.

77. The apparatus according to claim 76, wherein the first feedback coefficient is determined based on a first decomposition result of the first joint space-frequency covariance matrix and the channel matrix, and the first decomposition result is obtained by decomposing the first joint space-frequency covariance matrix according to a first decomposition rule.

78. The apparatus according to claim 77, wherein

the processing module is further configured to determine a valid joint space-frequency eigen basis of the first joint space-frequency covariance matrix according to the first decomposition rule, wherein the valid joint space-frequency eigen basis comprises first P columns of a joint space-frequency eigen basis, and P is a positive integer; and
the processing module is further configured to determine the channel matrix based on the valid joint space-frequency eigen basis and the first feedback coefficient.

79. The apparatus according to claim 78, wherein the first decomposition rule comprises an arrangement sequence of elements in a diagonal matrix obtained by decomposing the first joint space-frequency covariance matrix, and a type of elements in a $1^{st}$ row of the joint space-frequency eigen basis obtained by decomposing the first joint space-frequency covariance matrix.

80. The apparatus according to claim 79, wherein the first indication information further indicates a first quantized vector obtained by quantizing a $1^{st}$ row of elements of the first P columns in the joint space-frequency eigen basis obtained by decomposing the first joint space-frequency covariance matrix, wherein P is a positive integer.

81. The apparatus according to claim 80, wherein
the processing module is further configured to determine the valid joint space-frequency eigen basis of the first joint space-frequency covariance matrix according to the first decomposition rule and based on the first quantized vector.

82. The apparatus according to claim 73, wherein the superposition coefficient comprises a second superposition coefficient indicating a feature of an angle power spectrum, and the codebook vector comprises second information indicating an angle; and
the processing module is specifically configured to determine a first space-domain covariance matrix based on the second superposition coefficient and the second information.

83. The apparatus according to claim 73, wherein the superposition coefficient comprises a third superposition coefficient indicating a feature of a delay power spectrum, and the codebook vector comprises third information indicating a delay; and
the processing module is specifically configured to determine a first frequency-domain covariance matrix based on the third superposition coefficient and the third information.

84. The apparatus according to claim 73, wherein the superposition coefficient comprises a second superposition coefficient indicating a feature of an angle power spectrum and a third superposition coefficient indicating a feature of a delay power spectrum, and the codebook vector comprises second information indicating an angle and third information indicating a delay; and

the processing module is specifically configured to determine a first space-domain covariance matrix based on the second superposition coefficient and the second information; and
determine a first frequency-domain covariance matrix based on the third superposition coefficient and the third information.

85. The apparatus according to claim 84, wherein
the transceiver module is further configured to receive the first indication information from the first apparatus based on a third periodicity.

86. The apparatus according to claim 85, wherein
the transceiver module is further configured to receive third indication information from the first apparatus based on a fourth periodicity, wherein the third indication information indicates a second feedback coefficient, and the fourth periodicity is shorter than the third periodicity.

87. The apparatus according to claim 85, wherein the second feedback coefficient is determined based on a second decomposition result of the first space-domain covariance matrix, a third decomposition result of the first frequency-domain covariance matrix, and the channel matrix, the second decomposition result is obtained by decomposing the first space-domain covariance matrix according to a second decomposition rule, and the third decomposition result is obtained by decomposing the first frequency-domain covariance matrix according to a third decomposition rule.

88. The apparatus according to claim 87, wherein

the processing module is further configured to determine a valid space-domain eigen basis according to the second decomposition rule;
the processing module is further configured to determine a valid frequency-domain eigen basis according to the third decomposition rule; and
the processing module is further configured to determine the channel state information based on the valid space-domain eigen basis, the valid frequency-domain eigen basis, and the second feedback coefficient.

89. The apparatus according to claim 88, wherein the second decomposition rule comprises an arrangement sequence of elements in a diagonal matrix of the first space-domain covariance matrix, and a type of elements in a $1^{st}$ row of a space-domain eigen basis of the first space-domain covariance matrix.

90. The apparatus according to claim 89, wherein the first indication information further indicates a second quantized vector obtained by quantizing a $1^{st}$ row of elements of first K columns in the space-domain eigen basis obtained by decomposing the first space-domain covariance matrix.

91. The apparatus according to claim 90, wherein
the processing module is further configured to determine the valid space-domain eigen basis according to the second decomposition rule and based on the second quantized vector, wherein the valid space-domain eigen basis comprises the first K columns of the space-domain eigen basis of the first space-domain covariance matrix.

92. The apparatus according to claim 88, wherein the third decomposition rule comprises an arrangement sequence of elements in a diagonal matrix of the first frequency-domain covariance matrix, and a type of elements in a $1^{st}$ row of a frequency-domain eigen basis of the first frequency-domain covariance matrix.

93. The apparatus according to claim 92, wherein the first indication information further indicates a third quantized vector obtained by quantizing a $1^{st}$ row of elements of first D columns in the frequency-domain eigen basis obtained by decomposing the first frequency-domain covariance matrix.

94. The apparatus according to claim 93, wherein
the processing module is further configured to determine the valid frequency-domain eigen basis according to the third decomposition rule and based on the third quantized vector, wherein the valid frequency-domain eigen basis comprises the first D columns of the frequency-domain eigen basis of the first frequency-domain covariance matrix.

95. A communication apparatus, comprising a processor, wherein the processor is coupled to a memory; and
the processor is configured to execute a computer program stored in the memory, to enable the communication apparatus to perform the method for reporting channel state information according to any one of claims 1 to 24, or the method for reporting channel state information according to any one of claims 25 to 47.

96. A communication apparatus, comprising a processor and an interface circuit, wherein

the interface circuit is configured to receive code instructions and transmit the code instructions to the processor; and
the processor is configured to run the code instructions to perform the method according to any one of claims 1 to 24, or perform the method according to any one of claims 25 to 47.

97. A communication apparatus, wherein the communication apparatus comprises a processor and a transceiver, the transceiver is configured to exchange information between the communication apparatus and another communication apparatus, and the processor executes program instructions to perform the method for reporting channel state information according to any one of claims 1 to 24, or the method for reporting channel state information according to any one of claims 25 to 47.

98. A computer-readable storage medium, wherein the computer-readable storage medium comprises a computer program or instructions, and when the computer program or the instructions are run on a computer, the computer is enabled to perform the method for reporting channel state information according to any one of claims 1 to 24, or the method for reporting channel state information according to any one of claims 25 to 47.

99. A computer program product, wherein the computer program product comprises a computer program or instructions, and when the computer program or the instructions are run on a computer, the computer is enabled to perform the method for reporting channel state information according to any one of claims 1 to 24, or the method for reporting channel state information according to any one of claims 25 to 47.

FIG. 1

| Second apparatus | | First apparatus |
|---|---|---|

S201: Reference signal

S202: Determine first indication information based on the reference signal, where the first indication information indicates a superposition coefficient and a codebook vector

S203: First indication information

FIG. 2

```
┌─────────────────────┐                    ┌─────────────────────┐
│  Second apparatus   │                    │   First apparatus   │
└─────────────────────┘                    └─────────────────────┘
          │                                           │
          │        S301: Reference signal             │
          │──────────────────────────────────────────▶│
          │                                           │
          │                          ┌────────────────────────────────┐
          │                          │ S302: Determine first indication│
          │                          │   information based on the      │
          │                          │ reference signal, where the first│
          │                          │ indication information indicates a│
          │                          │  superposition coefficient and a │
          │                          │       codebook vector           │
          │                          └────────────────────────────────┘
          │                                           │
          │      S303: First indication information    │
          │◀──────────────────────────────────────────│
          │                                           │
┌─────────────────────────────────┐                   │
│ S304: Determine, based on the   │                   │
│ first indication information, a first│                │
│ joint space-frequency covariance │                   │
│ matrix corresponding to a channel │                  │
│             matrix               │                   │
└─────────────────────────────────┘                   │
          │                                           │
```

FIG. 3

FIG. 4

```
┌─────────────────┐                        ┌─────────────────┐
│ Second apparatus│                        │  First apparatus│
└────────┬────────┘                        └────────┬────────┘
         │                                          │
         │        S501: Reference signal            │
         │─────────────────────────────────────────▶│
         │                                 ┌─────────┴──────────────┐
         │                                 │ S502: Determine first  │
         │                                 │ indication information │
         │                                 │ based on the reference │
         │                                 │ signal, where the first│
         │                                 │ indication information │
         │                                 │ indicates a super-     │
         │                                 │ position coefficient   │
         │                                 │ and a codebook vector  │
         │                                 └─────────┬──────────────┘
         │      S503: First indication information   │
         │◀─────────────────────────────────────────│
┌────────┴─────────────────────┐                     │
│ S504: Determine, based on the│                     │
│ first indication information,│                     │
│ a first space-domain         │                     │
│ covariance matrix            │                     │
│ corresponding to a channel   │                     │
│ matrix                       │                     │
└────────┬─────────────────────┘                     │
         │                                            │
```

FIG. 5

```
┌─────────────────┐                        ┌─────────────────┐
│ Second apparatus│                        │  First apparatus│
└────────┬────────┘                        └────────┬────────┘
         │                                          │
         │        S601: Reference signal            │
         │─────────────────────────────────────────▶│
         │                                 ┌─────────┴──────────────┐
         │                                 │ S602: Determine first  │
         │                                 │ indication information │
         │                                 │ based on the reference │
         │                                 │ signal, where the first│
         │                                 │ indication information │
         │                                 │ indicates a super-     │
         │                                 │ position coefficient   │
         │                                 │ and a codebook vector  │
         │                                 └─────────┬──────────────┘
         │      S603: First indication information   │
         │◀─────────────────────────────────────────│
┌────────┴─────────────────────┐                     │
│ S604: Determine, based on the│                     │
│ first indication information,│                     │
│ a first frequency-domain     │                     │
│ covariance matrix            │                     │
│ corresponding to a channel   │                     │
│ matrix                       │                     │
└────────┬─────────────────────┘                     │
         │                                            │
```

FIG. 6

```
┌─────────────────────┐                              ┌─────────────────────┐
│  Second apparatus   │                              │   First apparatus   │
└─────────────────────┘                              └─────────────────────┘
           │                                                     │
           │          S701: Reference signal                     │
           │────────────────────────────────────────────────────▶│
           │                                                     │
           │                              ┌──────────────────────────────┐
           │                              │ S702: Determine first indication│
           │                              │  information based on the     │
           │                              │  reference signal, where the first│
           │                              │  indication information indicates a│
           │                              │  superposition coefficient and a│
           │                              │       codebook vector         │
           │                              └──────────────────────────────┘
           │                                                     │
           │        S703: First indication information           │
           │◀────────────────────────────────────────────────────│
           │                                                     │
┌──────────────────────────────┐                                 │
│ S704: Determine, based on the │                                 │
│ first indication information, a first│                          │
│ space-domain covariance matrix│                                 │
│  and a first frequency-domain │                                 │
│ covariance matrix that correspond│                              │
│      to a channel matrix      │                                 │
└──────────────────────────────┘                                 │
           │                                                     │
```

FIG. 7

```
┌───────────────────────────────────────────────────────────┐
│              Communication apparatus 800                   │
│                                                            │
│   ┌──────────────┐   ⌒ 801        ┌──────────────┐          │
│   │              │                │              │          │
│   │              │                │              │          │
│   │  Processing  │◀──────────────▶│  Transceiver │          │
│   │   module     │                │    module    │          │
│   │              │   802 ⌒        │              │          │
│   │              │                │              │          │
│   └──────────────┘                └──────────────┘          │
│                                                            │
└───────────────────────────────────────────────────────────┘
```

FIG. 8

Communication apparatus 900

901

Processor

| CPU 0 |

| CPU 1 |

904

Processor

| CPU 0 |

| CPU 1 |

902

Memory

903

Transceiver

FIG. 9

## INTERNATIONAL SEARCH REPORT

| International application No. |
| --- |
| **PCT/CN2023/103330** |

### A. CLASSIFICATION OF SUBJECT MATTER

H04B 7/06(2006.01)i

According to International Patent Classification (IPC) or to both national classification and IPC

### B. FIELDS SEARCHED

Minimum documentation searched (classification system followed by classification symbols)

IPC: H04B H04W

Documentation searched other than minimum documentation to the extent that such documents are included in the fields searched

Electronic data base consulted during the international search (name of data base and, where practicable, search terms used)

CNTXT; CNKI; WPABSC; ENTXTC; ENTXT; 3GPP: 参考信号, 协方差, 矩阵, 信道状态信息, 指示, 叠加, 系数, 码本, 向量, 优化, 模型, reference signal, covariance, matrix, channel state information, CSI, indicate, overlap, coefficient, codebook, vector, optimize, model

### C. DOCUMENTS CONSIDERED TO BE RELEVANT

| Category* | Citation of document, with indication, where appropriate, of the relevant passages | Relevant to claim No. |
| --- | --- | --- |
| X | WO 2021012159 A1 (GUANGDONG OPPO MOBILE TELECOMMUNICATIONS CORP. LTD.) 28 January 2021 (2021-01-28) description, page 5, paragraph 5 to page 9, paragraph 2, and page 15, paragraph 2 to page 16, paragraph 2 | 1, 2, 25, 26, 48, 49, 72, 73, 95-99 |
| X | CN 109314559 A (QUALCOMM INC.) 05 February 2019 (2019-02-05) description, paragraph 11 | 1, 25, 48, 72, 95-99 |
| A | CN 110383710 A (SAMSUNG ELECTRONICS CO., LTD.) 25 October 2019 (2019-10-25) entire document | 1-99 |
| A | CN 112217550 A (HUAWEI TECHNOLOGIES CO., LTD.) 12 January 2021 (2021-01-12) entire document | 1-99 |
| A | US 2021234585 A1 (SAMSUNG ELECTRONICS CO., LTD.) 29 July 2021 (2021-07-29) entire document | 1-99 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 September 2023** | **20 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/103330**

| Patent document cited in search report | | | Publication date (day/month/year) | Patent family member(s) | | | Publication date (day/month/year) |
|---|---|---|---|---|---|---|---|
| WO | 2021012159 | A1 | 28 January 2021 | CN | 112673664 | A | 16 April 2021 |
| | | | | CN | 112673664 | B | 18 February 2022 |
| CN | 109314559 | A | 05 February 2019 | US | 2019058560 | A1 | 21 February 2019 |
| | | | | US | 11632208 | B2 | 18 April 2023 |
| | | | | WO | 2017166940 | A1 | 05 October 2017 |
| | | | | WO | 2017166219 | A1 | 05 October 2017 |
| | | | | CA | 3016260 | A1 | 05 October 2017 |
| | | | | JP | 2019518348 | A | 27 June 2019 |
| | | | | JP | 7062597 | B2 | 06 May 2022 |
| | | | | AU | 2017240856 | A1 | 06 September 2018 |
| | | | | AU | 2017240856 | B2 | 16 September 2021 |
| | | | | EP | 3437208 | A1 | 06 February 2019 |
| | | | | EP | 3437208 | A4 | 23 October 2019 |
| | | | | BR | 112018069917 | A2 | 05 February 2019 |
| | | | | IN | 201847031583 | A | 31 August 2018 |
| | | | | ID | 201901366 | A | 22 February 2019 |
| | | | | CN | 109314559 | B | 26 November 2021 |
| CN | 110383710 | A | 25 October 2019 | EP | 3526909 | A1 | 21 August 2019 |
| | | | | EP | 3526909 | A4 | 23 October 2019 |
| | | | | WO | 2018164537 | A1 | 13 September 2018 |
| | | | | KR | 20190118567 | A | 18 October 2019 |
| | | | | KR | 102476580 | B1 | 12 December 2022 |
| | | | | US | 2018262253 | A1 | 13 September 2018 |
| | | | | US | 10250313 | B2 | 02 April 2019 |
| | | | | IN | 201937025537 | A | 13 September 2019 |
| CN | 112217550 | A | 12 January 2021 | WO | 2021008477 | A1 | 21 January 2021 |
| | | | | WO | 2021008477 | A9 | 04 March 2021 |
| | | | | CN | 112217550 | B | 29 March 2022 |
| | | | | US | 2022131579 | A1 | 28 April 2022 |
| | | | | EP | 3993281 | A1 | 04 May 2022 |
| | | | | EP | 3993281 | A4 | 16 November 2022 |
| | | | | IN | 202227001878 | A | 20 May 2022 |
| US | 2021234585 | A1 | 29 July 2021 | EP | 3427405 | A2 | 16 January 2019 |
| | | | | EP | 3427405 | A4 | 10 April 2019 |
| | | | | EP | 3427405 | B1 | 29 July 2020 |
| | | | | EP | 3748866 | A1 | 09 December 2020 |
| | | | | EP | 3748866 | B1 | 21 December 2022 |
| | | | | US | 2020083937 | A1 | 12 March 2020 |
| | | | | US | 10972161 | B2 | 06 April 2021 |
| | | | | ES | 2936650 | T3 | 21 March 2023 |
| | | | | US | 2023118549 | A1 | 20 April 2023 |
| | | | | WO | 2017183905 | A2 | 26 October 2017 |
| | | | | WO | 2017183905 | A3 | 19 July 2018 |
| | | | | US | 2017302353 | A1 | 19 October 2017 |
| | | | | US | 10659118 | B2 | 19 May 2020 |
| | | | | US | 11483040 | B2 | 25 October 2022 |
| | | | | KR | 20180127447 | A | 28 November 2018 |
| | | | | KR | 102310164 | B1 | 08 October 2021 |
| | | | | KR | 20210122912 | A | 12 October 2021 |
| | | | | KR | 102442249 | B1 | 13 September 2022 |

Form PCT/ISA/210 (patent family annex) (July 2022)

INTERNATIONAL SEARCH REPORT
Information on patent family members

International application No.

**PCT/CN2023/103330**

| Patent document cited in search report | Publication date (day/month/year) | Patent family member(s) | Publication date (day/month/year) |
|---|---|---|---|
| | | | |

Form PCT/ISA/210 (patent family annex) (July 2022)

**EP 4 564 697 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210912627